# FASCICULE DE BREVET EUROPEEN

(11) **EP 1 807 916 B1**
(45) Date de publication et mention de la délivrance du brevet: **10.05.2017**
(21) Numéro de dépôt: 05814966.7
(22) Date de dépôt: 02.11.2005
(51) Int. Cl.: H02G 1/10, H02G 11/00, H01R 13/523, H01R 13/631, B63J 3/04, B63J 99/00

(54) **SYSTEME INTERFACE DE TRANSFERT D'ENERGIE ELECTRIQUE ENTRE UN NAVIRE ET UNE INSTALLATION PORTUAIRE**
INTERFACE-SYSTEM ZUM TRANSPORT ELEKTRISCHER ENERGIE ZWISCHEN EINEM SCHIFF UND EINER HAFENINSTALLATION
INTERFACE SYSTEM FOR TRANSFERRING ELECTRIC POWER BETWEEN A SHIP AND PORT FACILITY

(30) Priorité: 03.11.2004 FR 0411724
(43) Date de publication de la demande: 18.07.2007
(73) Titulaire: GE Energy Power Conversion France SAS, 91300 Massy (FR)
(72) Inventeur: JULLIAND, Lionel, F-90000 Beaucourt (FR); MASSE, Etienne, F-78140 Vélizy (FR)
(74) Mandataire: Serjeants LLP
(86) Numéro de dépôt international: PCT/FR2005/002727
(87) Numéro de publication internationale: WO 2006/048549

(56) Documents cités:
- EP-A- 0 947 464
- EP-A- 1 460 331
- FR-A- 2 436 517
- FR-A- 2 647 604
- US-A- 3 665 509
- US-A- 4 274 757
- PATENT ABSTRACTS OF JAPAN vol. 2003, no. 09, 3 septembre 2003 (2003-09-03) & JP 2003 146400 A (MITSUBISHI HEAVY IND LTD), 21 mai 2003 (2003-05-21)
- PATENT ABSTRACTS OF JAPAN vol. 2003, no. 12, 5 décembre 2003 (2003-12-05) & JP 2004 104848 A (OCC CORP), 2 avril 2004 (2004-04-02) cité dans la demande

## Description

La présente invention concerne le domaine général du transfert d'énergie entre un navire et une installation portuaire, notamment dans le contexte du transfert d'un combustible liquéfié entre un navire et un terminal gazier ou pétrolier. L'invention concerne principalement un système interface de transfert d'énergie électrique entre un navire et un terminal gazier ou pétrolier, comme mentionné dans la demande de brevet EP 1 460 331 A1 évoquée plus loin. Pour des raisons évidentes de sécurité, l'ambiance autour d'un navire de transport de gaz naturel liquéfié est considérée comme explosive lorsque le navire est à quai dans un terminal gazier. Du fait des risques de présence locale de combustible en phase vapeur dans l'atmosphère, des fuites de combustible sont en effet possibles dans la zone où s'effectue le chargement et le déchargement du gaz. Plus particulièrement, l'invention se rapporte à un système interface de transfert pour l'alimentation électrique d'un poste de distribution d'un terminal gazier ou pétrolier à partir de l'énergie électrique produite par un navire à propulsion électrique transportant du combustible liquéfié.

Le navire concerné par l'invention n'est cependant pas nécessairement à propulsion électrique; par ailleurs l'atmosphère dans la zone portuaire n'est pas nécessairement potentiellement explosive puisque l'installation portuaire peut être celle par exemple d'un port marchand. En effet, de façon annexe, et dans un contexte selon une problématique inverse, l'invention se rapporte aussi à un système d'alimentation d'un navire à partir d'un poste électrique d'une installation portuaire.

Par exemple, les équipements de production d'électricité sur un navire utilisent généralement au moins un alternateur couplé à un moteur diesel. Lorsqu'il est interdit d'utiliser les moteurs diesel d'un navire à quai, généralement pour des raisons de limitation de la pollution dans la zone portuaire, il est relativement classique d'alimenter les équipements consommateurs d'électricité sur le navire grâce à un système d'alimentation par des câbles gainés qui cheminent sur le quai et sont amenés jusqu'au navire par l'intermédiaire d'une grue ou d'une potence. Un tel agencement est décrit dans le document FR-A-2647604. La flexibilité des câbles permet de compenser les effets de la marée, du roulis, et/ou d'un petit décalage de position du navire par rapport au quai. Les terminaisons de tels câbles sont typiquement munies de connecteurs prévus pour être raccordés à des connecteurs complémentaires sur le navire. Bien entendu, avec des câbles cheminant sur le quai, l'atmosphère ambiante ne doit pas être potentiellement explosive car un éventuel défaut d'isolation de la gaine d'un câble ou encore un dommage causé à un câble par un engin pourrait alors entraîner une explosion dès l'apparition d'un arc électrique.

L'alimentation d'un navire à partir d'un poste électrique à terre n'est toutefois pas l'application industrielle principale de l'invention, qui concerne en premier lieu l'exploitation d'un terminal gazier dans lequel des navires de transport de gaz naturel liquéfié et à propulsion électrique viennent charger et décharger. La propulsion électrique sur un navire utilise généralement un moteur principal qui entraîne un ou plusieurs alternateurs qui produisent l'énergie électrique destinée en particulier à alimenter des moteurs électriques entraînant des hélices. Typiquement, dans un navire de type méthanier à propulsion électrique, le système propulsif du navire comprend un moteur principal de type diesel ou turbine à gaz qui peut être alimenté par les vapeurs de gaz prélevées dans les ciels gazeux des cuves du navire qui contiennent le gaz liquéfié. Par exemple, les documents de brevets US 4 417 878 et FR 2 722 760 décrivent des systèmes propulsifs de ce type.

Classiquement, pour décharger le gaz liquéfié depuis une cuve d'un navire jusqu'à un réservoir d'un terminal gazier, une pompe est immergée dans la cuve du navire et un système de déchargement à bras articulés assure l'écoulement du gaz liquéfié qui est pompé. Ce système assure un certain degré de liberté entre le navire et le quai du terminal gazier. Un tel système à bras articulés est connu par exemple du document de brevet EP0947464. Une opération analogue est effectuée pour le remplissage des cuves du navire à partir de réservoirs du terminal gazier.

Généralement, le gaz liquéfié déchargé dans les réservoirs du terminal gazier est ensuite transféré vers une pompe haute pression qui le débite dans un échangeur thermique afin qu'il soit re-gazéifié avant d'être transféré vers un gazoduc, à une température sensiblement ambiante.

Ces opérations, connues en soi, sont coûteuses en énergie pour le terminal gazier. Ce dernier peut en outre comporter d'autres installations classiques, telles qu'un circuit de vapeur des gaz comprenant des compresseurs et des condenseurs et un circuit de prélèvement et de réchauffement d'eau de mer comprenant des pompes et des brûleurs, Les besoins énergétiques du terminal gazier sont donc importants, et les coûts induits pour l'exploitation du terminal sont d'autant plus importants que les terminaux sont le plus souvent situés dans des lieux éloignés des réseaux principaux de transport d'électricité. Il est donc généralement nécessaire de construire un réseau annexe spécifique pour l'alimentation du terminal, ce qui renchérit encore pour l'exploitant du terminal le coût de l'électricité fournie par ce réseau spécifique.

Par ailleurs, lorsque le navire est à quai, la centrale de production d'énergie du bord est loin d'être utilisée à pleine capacité, et en particulier le système propulsif électrique du navire qui est alimenté par cette centrale n'est pas sollicité. Or, lors des opérations de transfert de gaz liquéfié entre le navire et le terminal gazier, des excès de vapeurs de gaz sont produits dans les ciels gazeux de la cuve du navire et du réservoir du terminal. Ces vapeurs au dessus de la phase liquide, dites « boil off» en anglais, sont généralement gérées par un circuit de vapeur de gaz comprenant un compresseur basse pression et un condenseur pour évacuer les excès de vapeurs. Ces derniers peuvent être prélevés du circuit de vapeur pour alimenter la centrale de bord du navire à quai afin de produire de l'énergie électrique à fournir au terminal gazier. L'électricité ainsi produite par les alternateurs du navire à quai, typiquement de 20 à 36 MW, peut être utilisée pour les besoins propres du terminal gazier et/ou revendue sur un réseau électrique.

Le principe du transfert vers un terminal gazier de l'énergie produite par la centrale de bord du navire est enseigné dans la demande de brevet EP 1 460 331 A1. Toutefois, la seule solution technique évoquée dans ce document de brevet consiste à réaliser une connexion flexible entre une interface de fourniture de puissance électrique au niveau du navire et une interface de réception de puissance électrique au niveau du terminal gazier. Comme expliqué précédemment, une connexion entièrement par câbles flexibles dans une ambiance potentiellement explosive ne serait cependant pas acceptable en terme de sécurité à cause des éventuels défauts d'isolation de la gaine d'un câble.

La présente invention propose des solutions pour assurer de façon fiable et sécurisée ce transfert d'énergie électrique, et aussi pour résoudre le cas échéant la problématique inverse du transfert vers le navire d'une énergie acheminée par le réseau électrique à terre qui alimente l'installation portuaire afin par exemple d'éviter au navire à quai de consommer du fuel lourd pour actionner les pompes de déchargement de ses cuves. Il existe un besoin réel pour des moyens de liaison électrique de puissance qui soient adaptés aux contraintes opérationnelles du navire et de l'installation portuaire, et en particulier aux contraintes de sécurité dans le cas d'un terminal gazier ou pétrolier.

Pour réaliser de tels moyens de liaison électrique de puissance entre le navire et le terminal, et plus généralement entre un navire et une installation portuaire, une première solution qui apparaît naturellement à un homme du métier consiste à adopter un système à bras électriques articulés monté sur le quai, de façon analogue au système de conduite cryogénique à bras articulés utilisé pour le déchargement et le chargement du gaz liquéfié. De même, on peut utiliser plusieurs articulations sous la forme de connexions électriques pivotantes chacune dans un plan de l'espace de façon à autoriser un certain degré de liberté entre le navire et le quai du terminal.

L'ambiance autour d'un navire de transport de gaz à quai étant considérée comme explosive, il est donc nécessaire de contrôler cette ambiance autour de chaque connexion du système à bras électriques articulés, et en particulier autour d'au moins une connexion de type rapidement connectable et déconnectable qui équipe le système et assure la liaison avec un connecteur sur le navire. Pour relier électriquement le système à bras articulés jusqu'à un poste de distribution du terminal, en particulier si ce système doit être déplacé le long du quai pour pouvoir s'adapter à des navires de différentes longueurs, une solution qui vient rapidement à l'esprit d'un électricien du domaine des courants de puissance consisterait à relier les bras articulés à des câbles de puissance flexibles cheminant le long du quai. La flexibilité des câbles permettrait de déplacer le long du quai le système à bras électriques articulés sans avoir à défaire la connexion entre ce système et les câbles à quai, ce déplacement étant accompagné par exemple d'un enroulement ou d'un déroulement correspondant des câbles.

Toutefois, une solution consistant à utiliser des câbles gainés disposés sur le quai n'est pas satisfaisante, en particulier pour des moyennes ou hautes tensions typiquement de 3,3 kV à 11 kV en 60 Hz. En effet, le vieillissement de la gaine peut conduire à des amorçages d'arcs entre l'âme du câble et l'isolant de la gaine, ce qui peut entraîner une explosion si du gaz combustible se trouve avec une certaine concentration dans l'air au voisinage d'un arc. Il n'est pas non plus possible d'utiliser des câbles nus aériens portés par des isolateurs, même sur une partie seulement du cheminement des câbles, car il faut éviter tout risque d'arc électrique dans l'ambiance autour du navire. La présence sur le quai d'engins tels que des grues, ou encore les oiseaux qui risqueraient d'établir un court-circuit entre des câbles, constituent autant de facteurs de risques d'arc électrique qui interdisent une configuration de câbles nus aériens dans un terminal gazier.

Les chemins de câbles sur le quai doivent donc être enterrés sur le quai de façon étanche à l'atmosphère potentiellement explosive du quai, pour que celle-ci ne puisse pas environner une gaine de câble. En outre, si le système à bras électriques doit être déplacé, les zones où les câbles travaillent en flexion doivent être protégées dans une atmosphère contrôlée non explosive. Dans tous les cas, ceci oblige à des travaux importants de génie civil au niveau du terminal. La demanderesse a envisagé dans un premier temps d'utiliser des câbles de puissance gainés qui seraient entourés d'une enveloppe flexible par exemple de type chambre à air maintenue à faible distance de la surface des gaines, et de faire circuler en permanence dans cette enveloppe un gaz non explosif en maintenant une pression légèrement supérieure à la pression atmosphérique pour ne pas avoir d'entrée de gaz combustible en cas de perforation accidentelle de l'enveloppe. Ainsi, un éventuel amorçage d'arc dans un câble se produirait dans une ambiance inerte.

Toutefois, la quantité de gaz non explosif nécessaire, par exemple un air contrôlé ou encore de l'azote, serait particulièrement importante et nécessiterait des moyens coûteux de recyclage de gaz étant donné le débit de gaz nécessaire à la circulation. De plus, en terme de sécurité, on ne peut exclure une perforation ou une déchirure importante de l'enveloppe qui aurait pour conséquence une perte au moins locale de l'ambiance inerte autour des câbles.

Par ailleurs, même dans le cas d'une installation portuaire sans ambiance potentiellement explosive, il est généralement problématique en terme de sécurité de faire passer des câbles d'alimentation non enterrés sur un quai dès lors que ce quai est utilisé par des engins tels que des grues ou des véhicules. Les problèmes sont encore accrus s'il y a en plus la contrainte de devoir utiliser des câbles flexibles pour pouvoir déplacer un connecteur de puissance le long du quai et le connecter avec des navires de différentes longueurs.

Afin de réaliser des moyens de liaison électrique de puissance entre un navire et une installation portuaire tout en limitant les investissements et l'encombrement à quai de ces moyens, et tout en permettant de satisfaire aux conditions de sécurité en atmosphère explosive si l'installation portuaire consiste en un terminal gazier ou pétrolier, l'invention propose un système de transfert d'énergie électrique entre le navire et l'installation portuaire conforme à la revendication 1.

Dans un mode de réalisation avantageux du système de transfert d'énergie selon l'invention le dispositif de câble sous-marin de puissance comprend au moins une partie qui présente la forme d'une nappe constituée d'un groupement de câbles électriques dont au moins deux sont électriquement isolés entre eux, ladite nappe étant adaptée à subir une certaine courbure.

Avantageusement, le dispositif de câble sous-marin comprend une partie sensiblement fixe et au moins une partie mobile par rapport à un quai de l'installation portuaire.

Préférablement, au moins une partie mobile du dispositif de câble sous-marin présente la forme d'une nappe flexible agencée pour que sa courbure s'inscrive dans un plan sensiblement vertical.

D'autres caractéristiques et avantages de l'invention apparaîtront à la lecture de la description détaillée qui suit des modes de réalisation de l'invention, donnés à titre d'exemple uniquement et en références aux dessins.

On limitera la description qui suit à un terminal gazier et à un navire de type méthanier, mais il est entendu que l'invention s'applique de manière analogue à un terminal pétrolier et à un navire pétrolier.

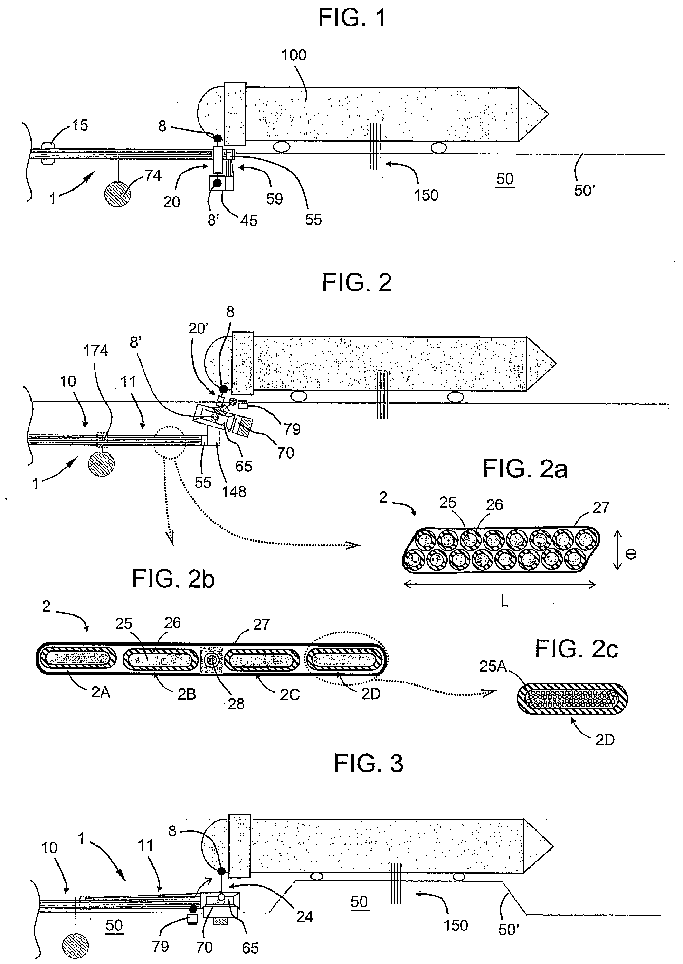

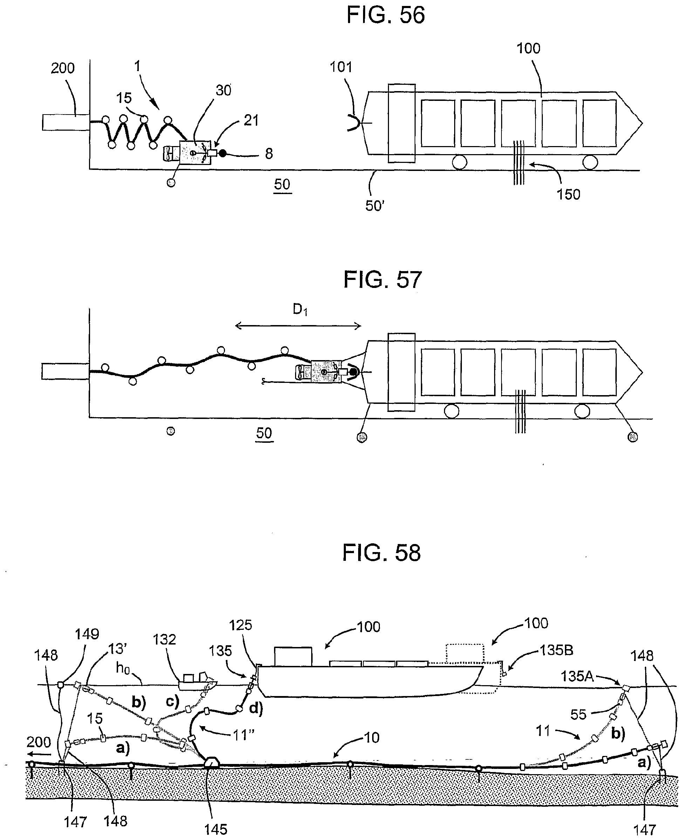

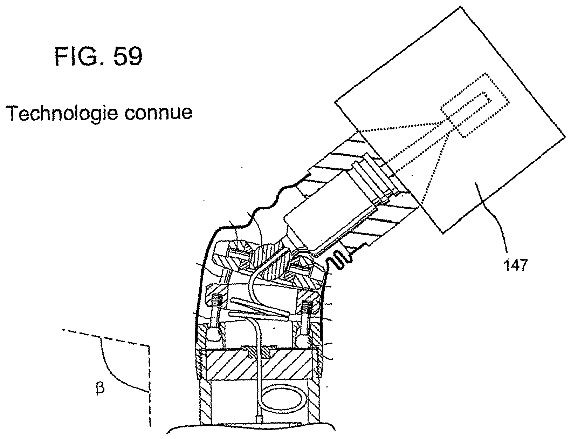

Un premier exemple de réalisation d'un système de transfert d'énergie électrique selon l'invention est illustré très schématiquement sur les figures 56 et 57. Le système comprend une barge marine 30 électriquement reliée par l'intermédiaire d'un dispositif 1 de câble sous-marin de puissance à une sortie sous marine 200 de câbles haute tension, laquelle sortie correspond aussi à une entrée souterraine des câbles haute tension vers un poste de distribution d'un terminal gazier. Cette interface entre câbles sous-marins et câbles souterrains constitue soit une interface de réception de puissance électrique au niveau d'un quai 50 du terminal, soit une interface d'émission de puissance électrique depuis le quai vers le navire. Avantageusement, le dispositif 1 de câble sous-marin peut être constitué d'une nappe flexible formée par des câbles haute tension isolés, comme expliqué plus loin et
illustré sur les figures 2a, 2b et 2c. Cette nappe est maintenue entre deux eaux par des flotteurs 15, ce qui permet que les gaines de câbles restent en permanence immergées et ainsi que l'atmosphère potentiellement explosive du terminal ne vienne pas en contact avec ces gaines. Il existe de nombreuses techniques de maintien entre deux eaux de câbles haute tension sous-marins, et on peut citer par exemple les enseignements du brevet US4274757 en matière de flotteurs de sustentation de câbles. Pour permettre un déploiement et un reploiement du dispositif 1 de câble tout en restant sensiblement à une même hauteur entre deux eaux, il est évident que le plan de la nappe doit ici être sensiblement vertical.

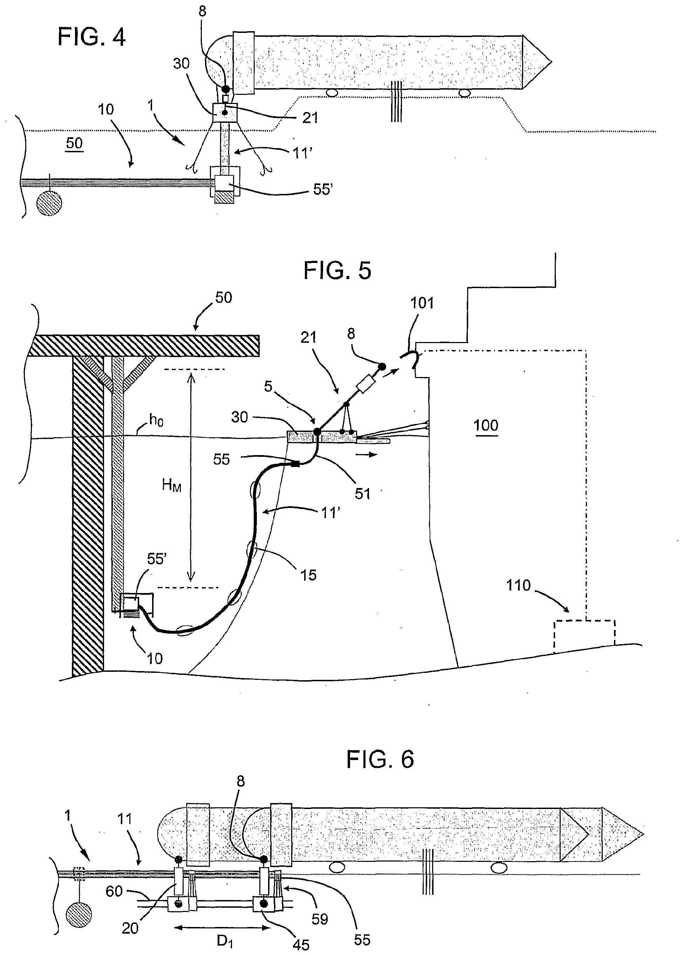

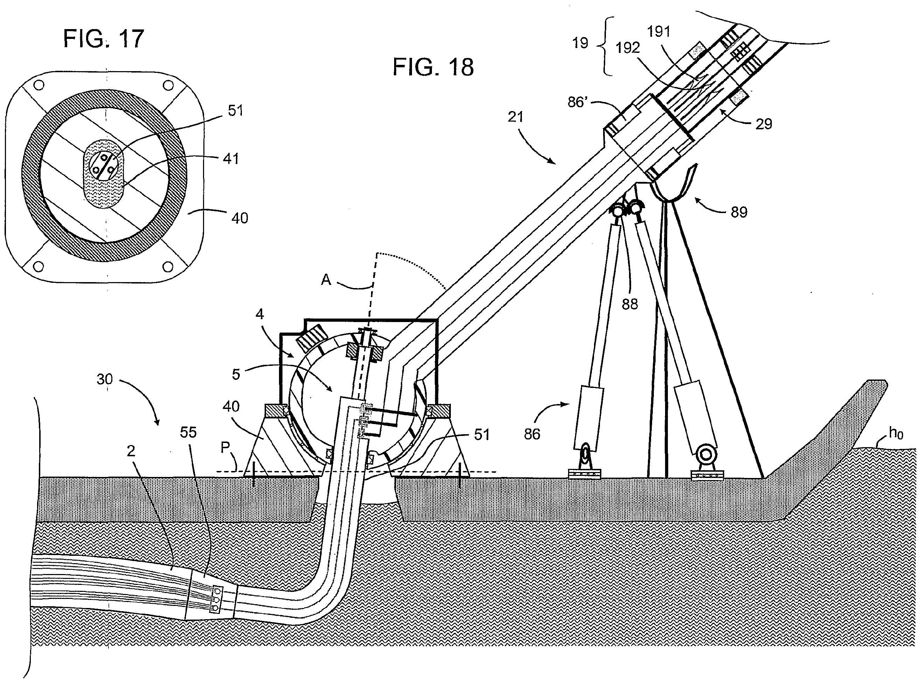

La barge marine 30 peut être motorisée avec un petit système propulsif alimenté par un réservoir de combustible liquéfié sous haute pression. Une telle embarcation est bien connue en soi et utilisée pour diverses applications dans les ports. Une telle barge marine est représentée vue de profil sur la figure 5 dans un autre mode de réalisation où un tronçon du dispositif de câble sous-marin s'étend en profondeur. Par ailleurs, une vue détaillée d'un exemple de connexion entre le dispositif 1 de câble et un bras de transfert télescopique 21 porté par la barge est visible sur la figure 18. Figure 56, la barge 30 est amarrée au quai 50 et la nappe formant le dispositif 1 de câble est reployée en accordéon dans les limites de sa résilience. Un navire par exemple méthanier est accosté au quai 50, parallèlement à la bordure 50' du quai, pour le déchargement du gaz liquéfié par l'intermédiaire de conduites cryogéniques à bras articulés 150.

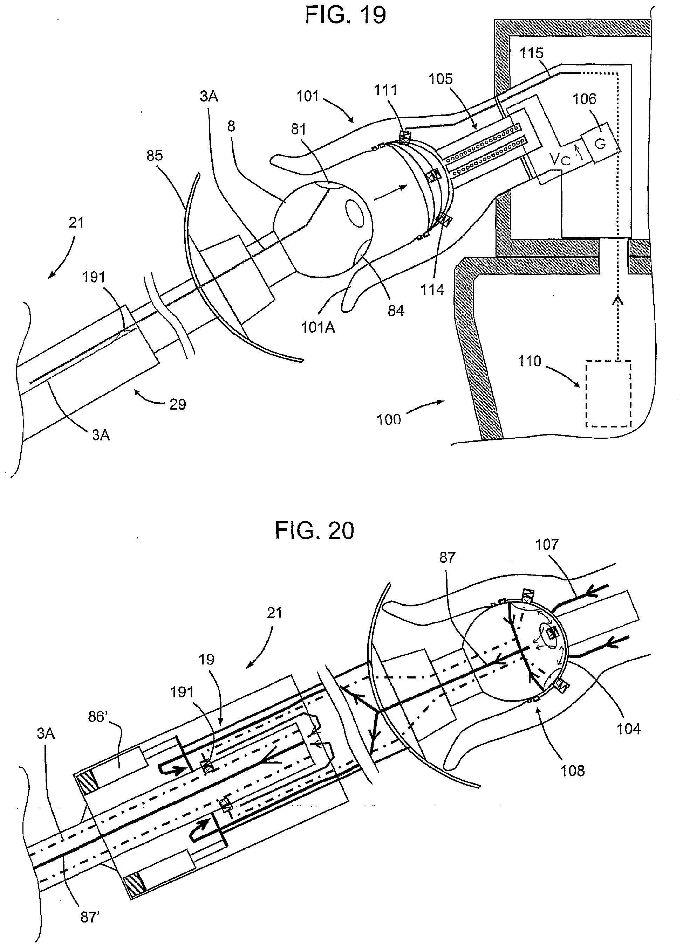

Une interface de fourniture de puissance électrique au niveau du navire comprend un connecteur de puissance 101 complémentaire d'un connecteur de puissance 8 disposé à l'extrémité supérieure du bras de transfert télescopique 21. Ainsi, l'état de connexion représenté sur la figure 57 permet d'établir une liaison électrique de puissance entre le dispositif 1 de câble sous-marin et des équipements électriques à bord du navire tels que référencés 110 sur la figure 19 qui montre en détail un exemple de connecteurs de puissance 8 et 101 complémentaires entre eux. Comme expliqué plus en détail ci-après sur la figure 19, le connecteur de puissance 8 peut être formé par une tête sensiblement sphérique qui comporte des surfaces électriquement conductrices telles que référencées 81 et 84 et raccordées à des conducteurs électriques de puissance électriquement isolés entre eux dans le bras de transfert 21. Le connecteur complémentaire de puissance 101 comporte alors une portion de sphère creuse à la surface de laquelle sont disposés des éléments de contacts, par exemple des contacts à lamelles tels que référencés 111 et 114, raccordés à des conducteurs électriques de puissance 115 électriquement isolés entre eux dans le navire 100. Ces connecteurs 8 et 101 sont adaptés à être réunis et maintenus en pression de contact l'un contre l'autre par exemple grâce à un électroaimant 105 visible sur la figure 19. Cet électroaimant 105 est préférablement alimenté par un générateur 106 de courant continu.

L'ouverture du connecteur 101 est évasée de façon à permettre de constituer avec le connecteur sphérique 8 un ensemble de connexion dit de type rapide. En particulier, la propriété de pouvoir déconnecter rapidement est bien adaptée à un cas d'urgence consistant en un départ précipité du navire suite à un incendie dans le terminal. La commande de l'arrêt de l'alimentation 106 de l'électroaimant 105 provoque un désaccouplement automatique des connecteurs 8 et 101, et quand bien même cet arrêt n'aurait pas fonctionné, la traction exercée par le navire finira par désaccoupler les deux connecteurs sans risque de blocage mécanique et n'entravera pas le départ du navire.

Le système de transfert d'énergie électrique selon l'invention comprend au moins un conducteur de phase et un conducteur de neutre. Dans son application la plus courante, le système est destiné à des navires produisant un courant électrique triphasé, et le bras de transfert 21 comprend alors préférablement trois conducteurs de phases et un conducteur de neutre.

Dans l'état de connexion qui est réalisé après l'insertion de la tête sphérique 8 dans la portion de sphère creuse du connecteur complémentaire de puissance 101, des moyens détaillés plus loin permettent de maintenir les surfaces électriques de la tête sphérique en appui contre les éléments de contacts de la sphère creuse tout en autorisant un certain degré de pivotement du bras de transfert 21 dans toutes les directions. Il est ainsi réalisé une connexion électrique et mécanique à rotule qui permet de compenser les mouvements de tangage et de roulis de la barge qui sont généralement inévitables même s'ils peuvent être atténués par un relatif amarrage de la barge au navire par des filins et ou des gaffes. Par ailleurs, le bras de transfert 21 peut être télescopique grâce à un ensemble 29 de conducteurs coulissants comprenant un ensemble 19 de contacts glissants, comme détaillé sur la figure 18, afin de faciliter l'insertion de la tête sphérique 8 dans le connecteur complémentaire 101. De plus, la connexion électrique au niveau de la barge entre le dispositif 1 de câble et le bras de transfert 21 est de préférence pivotante autour d'un axe tel que l'axe A représenté sur la figure 18, afin notamment de permettre à la barge de pivoter sur elle même en laissant passer la nappe sous sa carène, par exemple pour revenir s'amarrer au quai lorsque le navire 100 doit quitter le terminal. En l'absence d'une telle connexion pivotante, la courbure de la nappe serait sensiblement modifiée, et la longueur totale de nappe du dispositif 1 de câble devrait être substantiellement augmentée afin de respecter des rayons de courbure dans les limites de résilience de la nappe, ce qui augmenterait encore l'encombrement du dispositif 1.

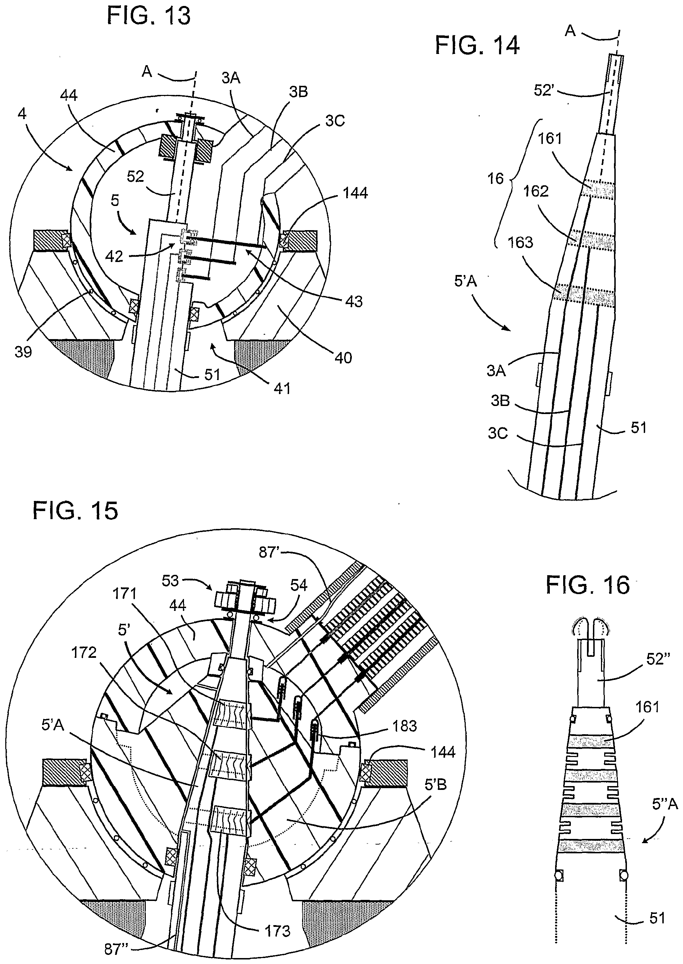

Enfin, le bras de transfert 21 est préférablement orientable avec une certaine amplitude de débattement angulaire afin tout d'abord de pouvoir être positionné au moins approximativement dans l'axe de révolution du connecteur 101 du navire pour déployer la partie télescopique du bras 21 et parvenir à l'insertion rapide de la tête sphérique 8 dans le connecteur 101. La liberté d'orientation du bras peut être obtenue grâce à une rotule mécanique 4 formant l'extrémité inférieure du bras, comme détaillé sur les figures 13 et 18. Le bras de transfert 21 est alors porté et guidé en orientation par exemple par un système à deux vérins télescopiques 86. Ensuite, une fois les connecteurs 8 et 101 réunis et maintenus en pression de contact l'un contre l'autre par exemple grâce à l'électroaimant 105 visible sur la figure 19, le système d'allongement télescopique du bras de transfert 21 et le système à vérins porteurs du bras sont désactivés. Les tiges de vérins peuvent alors suivre librement le mouvement du bras de transfert causé par les mouvements de tangage et de roulis de la barge, et le système télescopique du bras peut s'allonger ou se raccourcir librement pour compenser une variation de la ligne de flottaison du navire due au remplissage ou au vidage de ses cuves de gaz liquéfié. En effet, même si ces variations de flottaison sont le plus souvent compensées dans une certaine mesure par un remplissage ou un délestage de ballasts du navire, la ligne de flottaison d'un tel navire dans ces conditions varie généralement de l'ordre de un à quelques mètres.

En l'absence d'une certaine amplitude de débattement angulaire autorisée pour le bras de transfert 21, il serait tout d'abord particulièrement difficile de parvenir à l'insertion de la tête sphérique 8 sans cogner violemment les parois de l'ouverture évasée du connecteur 101 du navire. Ensuite, et même si le bras est télescopique, les contraintes mécaniques imposées sur le bras par le mouvement relatif de la barge par rapport au navire conduiraient probablement à une rupture du bras, ou encore à l'abrasion de butées ménagées dans la portion de sphère creuse du connecteur 101 pour limiter le jeu de la tête sphérique 8 dans ce connecteur et empêcher l'écrasement des contacts à lamelles tels que 111 et 114.

Dans le cadre de l'application du système selon l'invention à un terminal gazier ou pétrolier, il est nécessaire de protéger par une ambiance non explosive, appelée ambiance inerte dans ce qui suit, toutes les connexions électriques qui seraient susceptibles d'être en contact avec l'atmosphère du quai en l'absence d'une telle protection par inertage. Des exemples de réalisations d'ambiances inertes sont détaillés plus loin, et en particulier la figure 20 représente schématiquement des canaux d'inertage de connexions par un gaz inerte tel que de l'azote provenant de réservoirs cryogéniques d'azote liquide sur le navire.

Le mode de réalisation représenté sur les figures 56 et 57 est bien adapté au transfert d'énergie électrique depuis ou vers des navires 100 de différentes longueurs. En effet, les conduites cryogéniques à bras articulés 150 restent à un même emplacement sur le quai 50, ce qui implique que la position le long du quai de la proue et/ou de la poupe d'un navire 100 varie en fonction de la longueur du navire. De préférence, le connecteur 101 du navire se situe à la poupe du navire, c'est à dire relativement éloigné des bras articulés 150 de déchargement du gaz, pour des raisons de sécurité. De plus, le système propulsif à bord d'un navire avec les équipements électriques et notamment l'alternateur sont généralement situés à l'arrière du navire. La disposition de l'interface de fourniture de puissance électrique, et donc du connecteur 101, à la poupe du navire permet ainsi de limiter les cheminements de câbles à l'intérieur du navire. La position le long du quai du connecteur 101 varie donc en fonction de la longueur du navire, et la barge motorisée 30 reliée au terminal par un dispositif 1 de câble sous-marin dont la distance entre les extrémités est ajustable avec une grande amplitude D1 permet avantageusement de réaliser un système interface de transfert d'énergie électrique qui s'adapte à différentes tailles de navires. D'autre part, un bras de transfert 21 télescopique permet aussi d'adapter le système de transfert à différentes hauteurs de coques mesurées à la poupe des navires. En effet, le connecteur 101 d'un navire sera à priori disposé au dessus du bord supérieur de la coque afin d'éviter une disposition pour laquelle il faudrait percer cette coque et prévoir des renforts pour altérer le moins possible sa structure mécanique en cas de traversée par le connecteur.

Ce mode de réalisation d'un système de transfert d'énergie selon l'invention présente toutefois certains inconvénients. En particulier, la place occupée par le dispositif 1 de câble sous-marin de puissance est relativement importante même lorsque la nappe de câbles formant le dispositif est reployée dans une position de parcage comme sur la figure 56. Il faut d'ailleurs prévoir un système qui permette de replier cette nappe en restant dans les limites de sa résilience, tout en ayant une géométrie la moins encombrante possible et qui ne soit pas perturbée par les vagues et le courant pouvant affecter le terminal. Pour les mers ayant des marées, il faut aussi prévoir une nappe qui tolère une certaine torsion dans son plan vertical pour permettre une certaine différence de hauteur entre ses deux extrémités, cette torsion étant fonction des coefficients de marée puisque la hauteur de la barge 30 par rapport à la sortie sous marine 200 peut varier de plusieurs mètres. Même en optimisant l'espace nécessaire au parcage du dispositif 1 de câble avec la barge 30 lorsqu'il n'y a pas de méthanier 100 à quai, cet espace reste relativement important et peut éventuellement gêner la circulation d'autres barges.

Il faut savoir à ce propos que dans un terminal gazier, le support de la plate-forme d'un quai pour l'accostage d'un méthanier ne forme généralement pas un espace plein, afin d'éviter des phénomènes de résonance d'onde de pression entre deux quais parallèles au cas où du gaz liquéfié tomberait à la surface de la mer. La chute d'une goutte de gaz liquéfié qui se vaporise brutalement au contact de l'eau provoque en effet une sorte d'explosion. La plate-forme d'un quai est donc généralement supportée par des piliers espacés en béton ou encore par une charpente métallique.

Dans ce qui suit, d'autres solutions sont proposées pour un système de transfert d'énergie selon l'invention qui ne présente pas les inconvénients du mode de réalisation précédent en rapport avec les figures 56 et 57.

Tout d'abord, il est possible qu'un quai d'un terminal ou d'une installation portuaire soit spécifiquement dédié à des mêmes navires ou en tout cas à des navires qu'il est prévu d'amarrer de façon à ce que la poupe soit toujours placée au niveau d'un même repère du quai. S'il est décidé d'installer un système de transfert d'énergie selon l'invention, il n'est alors pas nécessaire que le dispositif 1 de câble sous-marin soit déplaçable dans la direction parallèle à la bordure 50' du quai puisque la distance entre la poupe du navire et l'interface 200 entre câbles sous-marins et câbles souterrains est toujours la même. De plus, il existe des solutions alternatives à l'utilisation d'une barge pour porter le bras de transfert.

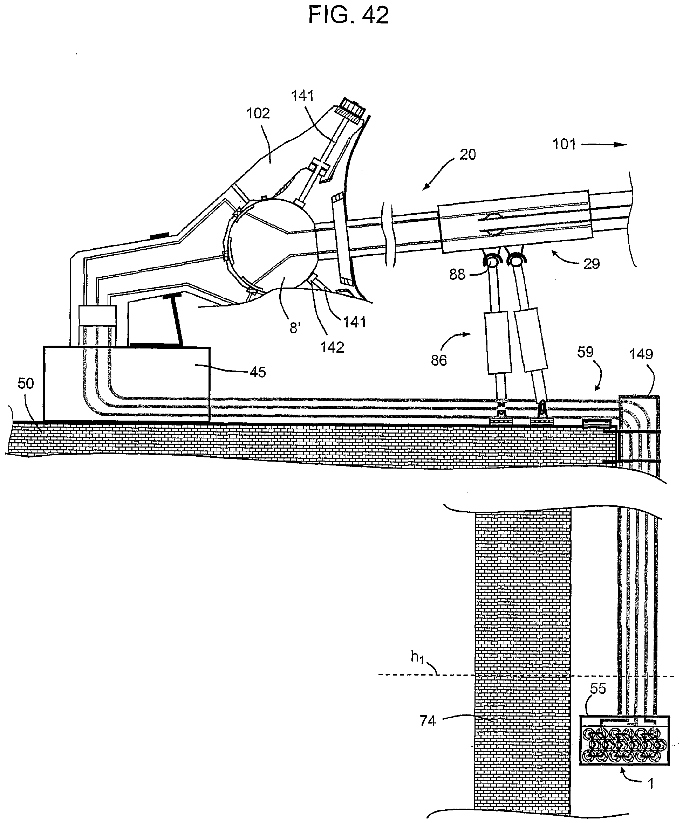

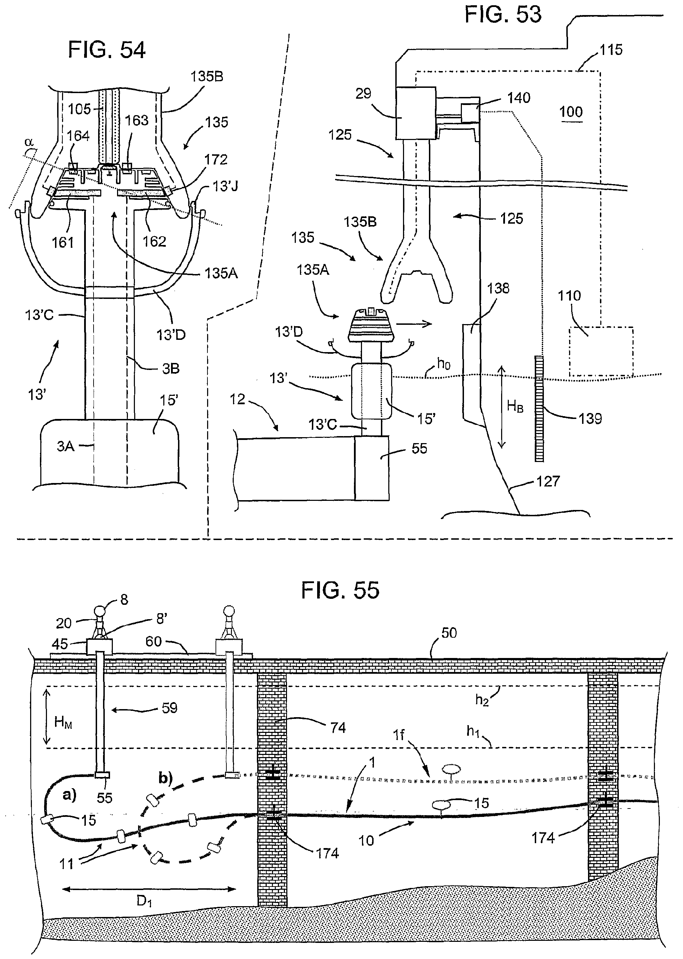

La figure 1 représente schématiquement une telle solution alternative. Le dispositif 1 de câble sous-marin est fixe sous le niveau h1 de la marée la plus basse, comme visible sur la figure 42 qui représente schématiquement une vue partielle du système de transfert selon une direction parallèle à la bordure du quai. Le dispositif 1 de câble est formé par un faisceau de câbles individuels maintenus entre deux eaux en étant fixé à des éléments de support de la plate-forme du quai tels que des piliers 74. Une telle réalisation correspond au dispositif de câble 1f dessiné en pointillés sur la figure 55. Pour faciliter le transport et l'installation du dispositif 1, ce faisceau de câbles peut être formé par une nappe constituée d'un groupement de câbles dont au moins deux sont électriquement isolés entre eux, cette nappe étant apte à subir une certaine courbure afin de pouvoir être transportée enroulée jusqu'au quai.

Des flotteurs 15 attachés au faisceau de câbles peuvent être prévus pour augmenter la flottabilité du dispositif et diminuer les contraintes dues au poids des câbles, tout en ayant une flottabilité légèrement négative de façon à ce que pour des raisons de sécurité les câbles ne remontent pas à la surface de l'eau en cas de rupture d'un élément de fixation du faisceau à un pilier 74. Ce faisceau de câbles s'étend entre une sortie sous marine de câbles haute tension, telle que la sortie 200 mentionnée à la description de la figure 56, et un connecteur immergé 55 porté par une conduite verticale rigide 149 fixée à la bordure du quai et contenant un ensemble 59 de barres haute tension prises dans un matériau isolant moulé de façon à isoler électriquement les conducteurs de barres entre eux et à établir une protection étanche vis à vis de l'atmosphère.

Le connecteur immergé 55 permet de relier électriquement le dispositif 1 de câble à l'ensemble 59 de barres isolées qui plongent depuis le quai jusqu'au connecteur 55. Ces barres sont coudées au niveau de la bordure du quai pour repartir à l'horizontale jusqu'à un ensemble de connexion pivotant auquel elles se raccordent électriquement. Cet ensemble de connexion électrique pivotant est monté sur un ensemble support 45, et consiste en une connexion à rotule qui comprend d'une part un connecteur femelle 102 comportant une portion de sphère creuse à la surface de laquelle sont disposés des éléments de contacts et d'autre part un connecteur mâle 8' analogue au connecteur 8 mentionné précédemment, c'est à dire formé par une tête sensiblement sphérique qui comporte des surfaces électriquement conductrices et raccordées à des conducteurs électriques de puissance électriquement isolés entre eux dans le bras de transfert ici référencé 20. L'ensemble de connexion n'est pas de type rapide, en ce sens que la pression de contact entre les deux connecteurs 8' et 102 est assurée par un couple de serrage appliqué à des tiges filetées 141 vissées dans le connecteur femelle 102 et munies de patins glissants 142 adaptés à appuyer sur la partie arrière de la tête sphérique du connecteur mâle 8'. Il n'est donc pas possible de désaccoupler automatiquement ces deux connecteurs, puisqu'il faut un opérateur muni d'un outillage pour dévisser manuellement les tiges filetées.

Sur la figure 42, le bras de transfert 20 est muni d'un tronçon télescopique grâce à un ensemble 29, analogue à celui de la figure 18, de conducteurs coulissants à contacts glissants, et est porté et guidé en orientation par un système à deux vérins télescopiques 86 dont les tiges sont munies de rotules 88 fixées sur le bras 20. L'extrémité non visible du bras 20, vers la droite de la figure, est munie d'un connecteur sphérique 8 comme représenté sur la figure 19.

Du fait que le bras de transfert 20 est supporté par un ensemble fixe sur le quai 50, il est nécessaire que l'ensemble 29 de conducteurs coulissants permette un débattement télescopique suffisant pour compenser le mouvement relatif du navire par rapport au quai pendant que le système de transfert d'énergie est opérationnel. Si l'amplitude des marées est importante, ce mouvement relatif est prédominant dans la direction verticale, et il peut être utile de prévoir un bras 20 relativement long pour que le débattement angulaire limité du bras permette toutefois une amplitude de mouvement vertical suffisante pour le connecteur sphérique 8.

Figure 2, un autre système de transfert d'énergie selon l'invention est représenté schématiquement, et permet un encombrement du quai moindre qu'avec le système précédent en rapport avec les figures 1 et 42. Le bras de transfert 20' est analogue au bras de transfert 20 précédent et son extrémité du côté opposé au navire comprend un ensemble de connexion pivotant avec une tête sphérique 8' adaptée à pivoter dans un connecteur femelle monté sur un ensemble support 65. Ce connecteur femelle, non représenté, est analogue au connecteur 102 précédent, et est relié à un ensemble 148 de barres isolées qui aboutissent à un connecteur immergé 55 raccordé au dispositif 1 de câble sous-marin de puissance. L'ensemble 65 qui supporte le connecteur femelle ainsi que l'ensemble 148 de barres est ici mobile verticalement le long de moyens de guidage 70 consistant par exemple en un pilier muni de rails de guidage vertical sous forme d'une crémaillère, ce pilier étant monté sous la plate-forme du quai. Le déplacement vertical de l'ensemble 65 peut être obtenu par un moteur monté sur cet ensemble et qui commande des roues dentées coopérant avec la crémaillère selon un mouvement asservi au déplacement vertical du navire. Ainsi, la fonction télescopique du bras de transfert 20' peut avoir un débattement très limité, puisque la distance entre les deux connecteurs à têtes sphériques 8 et 8' formant les deux extrémités du bras varie peu grâce à l'asservissement du déplacement précité.

Ce qui précède implique que le connecteur immergé 55 doit aussi être mobile verticalement, et que l'extrémité du dispositif 1 de câble sous-marin qui est reliée audit connecteur doit pouvoir entraîner dans son déplacement vertical une partie du dispositif 1. Pour ceci, le dispositif 1 de câble sous-marin comprend au moins une partie 11 dite partie mobile qui présente la forme d'une nappe 2 constituée par un groupement relativement plat de câbles 25 tels que visibles sur la figure 2a ou la figure 2b.

Dans une telle nappe 2, au moins deux câbles 25 sont électriquement isolés entre eux, de façon à disposer d'au moins une phase et d'un neutre. Le plan de la nappe est ici sensiblement horizontal, de sorte que cette nappe 2 est apte à subir une certaine courbure dans un plan vertical afin que la courbure de la partie mobile 11 du dispositif 1 de câble sous-marin puisse s'adapter au déplacement vertical de son extrémité reliée au connecteur immergé 55. La partie fixe 10 du dispositif 1 peut être un faisceau d'une structure différente de celle d'une nappe, et raccordé à la partie mobile 11 par un connecteur sous-marin. Toutefois, pour des raisons d'installation, il est avantageux que ces parties 10 et 11 soient constituées d'une même nappe 2. La zone de frontière virtuelle entre ces parties 10 et 11 respectivement fixe et mobile se situe alors au niveau d'un élément d'attache 174 de la nappe à un élément de structure du quai, comme par exemple au niveau de la zone marquée par un carré en pointillés sur la figure 2.

A marée haute, le connecteur 8 du bras 20' peut se situer quelque peu au dessus du niveau du quai. Une fois le navire parti, le bras 20' peut être pivoté pour que le connecteur 8 vienne face à un poste d'entretien 79 disposé en bordure du quai et duquel il est possible de procéder au nettoyage et/ou à la mise sous bâche du connecteur.

Figure 2a, un exemple de réalisation d'une nappe 2 est représenté très schématiquement en section transversale. La nappe comprend deux rangées de câbles 25 électriquement isolés entre eux par des gaines isolantes 26. Seize câbles 25 sont ainsi contenus dans une gaine périphérique 27, et on peut ainsi avoir trois phases et un neutre utilisant chacun quatre câbles 25. Une description plus fine de telles nappes de câbles haute tension sous-marins est contenue par exemple dans le document de brevet EP 1 124 236. Afin d'augmenter la flexibilité de la nappe, il peut être recherché d'utiliser une seule rangée de câbles. De plus, la section de chaque câble n'est pas nécessairement circulaire, et l'exemple de réalisation de la nappe 2 sur la figure 2b montre qu'une section plus allongée est possible. Ainsi, on peut diminuer le rapport entre l'épaisseur e et la largeur L de la nappe en comparaison avec la réalisation plus classique de la figure 2a. La nappe représenté en section transversale sur la figure 2b comprend quatre câbles conducteurs 2A, 2B, 2C, et 2D sensiblement disposés dans un même plan. Chaque câble est ici identique, et sa partie conductrice comprend une multitude de conducteurs individuels tels que des torons 25A visibles sur la figure 2C.

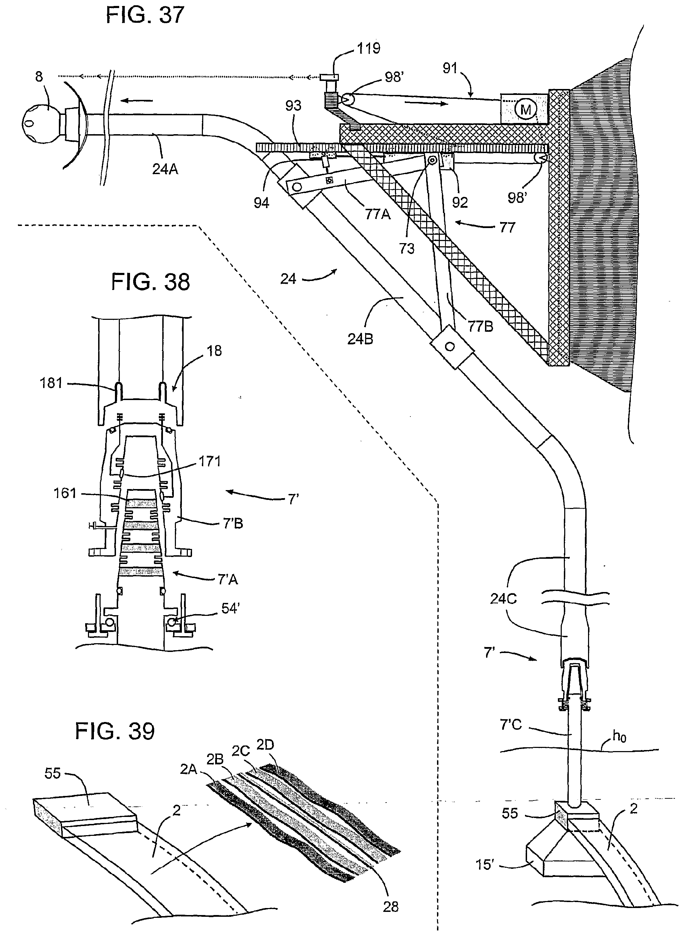

Une telle structure de nappe est visible en trois dimensions sur la figure 39. Cette structure comprend un noyau 28 disposé entre deux paires de câbles conducteurs à la moitié de la largeur de la nappe. Ce noyau 28 peut être par exemple constitué d'un câble en nylon, et doit posséder une bonne résistance à la traction. Avantageusement, la longueur du câble noyau 28 est inférieure de quelques pour cents à celle des deux câbles conducteurs 2B et 2C adjacents qui est elle même inférieure de quelques pour cents à celle des deux câbles conducteurs 2A et 2D d'extrémités latérales de la nappe 2. Ceci implique que les câbles conducteurs présentent une forme légèrement ondulée alors que le câble noyau 28 reste en permanence relativement tendu. L'espace intérieur de la gaine périphérique 27 de la nappe est prévu suffisant pour autoriser les ondulations des câbles conducteurs. D'autre part, cette gaine périphérique 27 présente globalement une certaine élasticité de façon à pouvoir être légèrement fléchie dans son plan. Par exemple, même si le matériau utilisé pour la gaine est relativement rigide, des parties de la gaine sous forme de soufflets en accordéon régulièrement espacés peuvent être prévues pour conférer l'élasticité globale nécessaire à la flexion de la gaine.

Ainsi, un connecteur immergé 55 connecté à une extrémité longitudinale de la nappe 2 peut être pivoté de quelques degrés dans le plan de la nappe jusqu'à ce que deux câbles d'un même côté du câble noyau 28 ne présentent quasiment plus d'ondulations et soient à la limite de relayer en traction le câble noyau 28. La possibilité pour une nappe 2 de pouvoir ainsi être légèrement fléchie dans son plan de nappe peut présenter des avantages dans certains modes de réalisation du système de transfert d'énergie électrique selon l'invention comme expliqué plus loin.

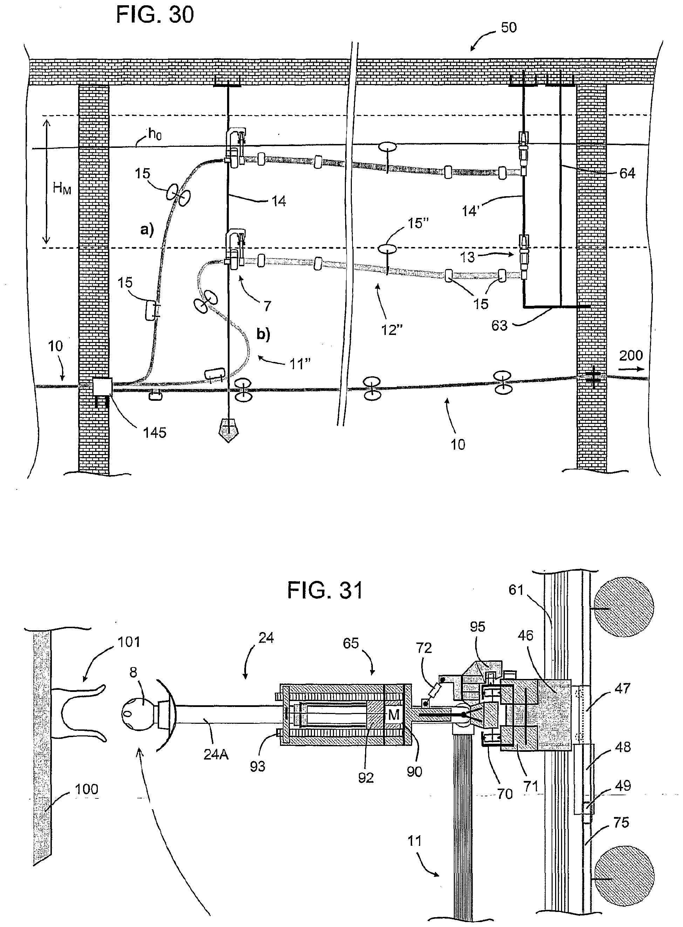

La figure 3 représente schématiquement un autre mode de réalisation du système de transfert d'énergie électrique selon l'invention, proche dans son principe du mode de réalisation précédent en rapport avec la figure 2. La configuration du quai 50 est différente de la précédente en ce sens que le quai présente une avancée de plusieurs mètres dont la bordure reste sensiblement parallèle à la direction du quai. Les conduites cryogéniques à bras articulés 150, ainsi que les points d'amarrage du navire, sont installés sur cette avancée. La longueur de bordure de l'avancée est inférieure à la longueur du navire, de sorte que des espaces importants sont dégagés entre le quai et à la fois la proue et la poupe du navire. Il est ainsi possible de disposer entre la bordure non avancée du quai et la poupe du navire un ensemble 65 qui supporte un bras de transfert 24, cet ensemble étant mobile verticalement le long de moyens de guidage 70 consistant par exemple en des rails de guidage fixés sur une structure métallique verticale immobile portée par le quai. Une telle structure métallique verticale, avec l'ensemble support 65, le bras de transfert 24, et les moyens de levage de l'ensemble ainsi que les moyens de pivotement du bras, sont analogues respectivement à la structure référencée 71 et à l'ensemble support 65 avec le bras de transfert 24 et les moyens de levage et de pivotement 66, 67, 68, 69 dans le mode de réalisation en rapport avec les figures 31, 36, 40 et 41. Le raccordement du bras de transfert 24 à un connecteur immergé 55 par l'intermédiaire d'un ensemble de connexion pivotant 7' est visible sur la figure 37.

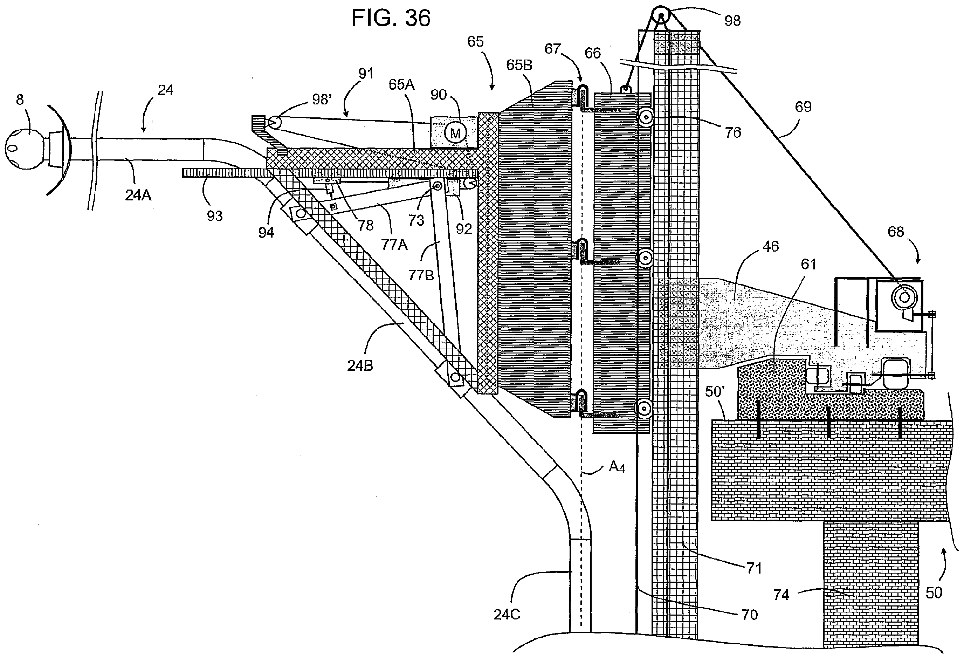

Dans le mode de réalisation correspondant à la figure 3, le bras de transfert 24 n'est pas télescopique à proprement parler, car il ne comprend pas d'ensemble coulissant à contacts glissant tel que l'ensemble 29 mentionné précédemment. Il est toutefois nécessaire ici d'assurer un déplacement en translation du bras 24 dans une direction sensiblement perpendiculaire à la bordure du quai, afin de permettre en particulier l'insertion du connecteur 8 du bras dans le connecteur complémentaire disposé sur le navire pour le passage à un état de connexion du système de transfert d'énergie. Pour ceci, il est avantageux de suspendre le bras 24 à un chariot mobile en translation et porté par l'ensemble support 65, comme réalisé dans le mode de réalisation en rapport avec les figures 36 et 37. Le déplacement en translation du bras 24 et donc aussi du connecteur immergé 55 relié au bras implique que l'extrémité de la partie mobile 11 du dispositif 1 de câble sous-marin qui est raccordée au connecteur 55 doit suivre ce mouvement de translation. Cette partie 11 formée par une nappe 2 de câbles doit donc être mobile non seulement dans un plan vertical pour suivre la marée avec l'ensemble support 65 mais doit aussi pouvoir fléchir globalement dans le plan de la nappe. Une nappe 2 telle que décrite précédemment en rapport avec la figure 2b permet de supporter une telle flexion.

Dans les modes de réalisations précédents en rapport avec les figures 1, 2 et 3, il a été montré que le dispositif 1 de câble sous-marin peut être avantageusement constitué d'une même nappe 2 ininterrompue. Toutefois, dans la configuration du quai de la figure 3, il peut être intéressant que ces parties fixe et mobile soient physiquement séparées.

Les figures 4 et 5 représentent schématiquement un même autre mode de réalisation du système de transfert d'énergie électrique selon l'invention, dans lequel le bras de transfert télescopique 21 est porté par une barge 30 de la même façon que décrit précédemment en rapport avec la description des figures 56 et 57. Le trajet de cette barge 30 est ici globalement perpendiculaire à la bordure du quai, mais le principe de connexion du connecteur de puissance 8 du bras au connecteur complémentaire 101 disposé sur le navire reste identique à ce qui a déjà été expliqué. Le dispositif 1 de câble sous-marin comprend ici une partie mobile 11' qui présente la forme d'une nappe flexible verticalement agencée pour que sa courbure s'inscrive dans un plan sensiblement perpendiculaire à la direction de la partie fixe 10 du dispositif 1. Les parties fixe et mobile respectivement 10 et 11' sont raccordées entre elles par un ensemble de connexion immergé 55' disposé sous le niveau de la plus basse marée, de façon à ce que le dispositif 1 de câble reste intégralement immergé dans toutes les conditions de marées.

Sur la figure 5, il est visible que la flexibilité de la nappe 11' dans le plan vertical correspondant au plan de la figure permet à la barge 30 de suivre toute l'amplitude HM de la marée tout en conservant la liaison électrique établie entre l'ensemble de connexion immergé 55' et un ensemble de connexion 5 disposé sur la barge 30 comme représenté plus en détail sur la figure 18. Pour ceci, la partie mobile 11' du dispositif 1 de câble présente une première extrémité qui est électriquement reliée au bras de transfert 21 par l'intermédiaire de l'ensemble de connexion 5 et une seconde extrémité qui est électriquement reliée à la partie fixe 10 par l'intermédiaire de l'ensemble de connexion immergé 55'. L'ensemble de connexion 5 n'est pas nécessairement pivotant dans cette configuration. En effet, la barge 30 peut être maintenue en permanence perpendiculaire à la direction du quai grâce à des moyens d'ancrage qui l'empêchent de pivoter sur elle même et de vriller la nappe de la partie 11'. La marche arrière de la barge, notamment pour une déconnexion des connecteurs de puissance 8 et 101, peut se faire en inversant la rotation de l'hélice qui propulse la barge ou encore en tirant sur des câbles d'ancrage venant du quai.

Préférablement, pour faciliter l'installation et la maintenance du dispositif 1 de câble sous-marin, sa partie fixe et/ou sa partie mobile sont connectées à l'ensemble de connexion immergé 55' par l'intermédiaire de connecteurs étanches débrochables. L'ensemble immergé 55' peut éventuellement être disposé dans une enceinte sans fond pouvant être remplie d'air puis vidée de cet air afin que des plongeurs puissent venir raccorder ou retirer de cet ensemble 55' une partie 10 ou 11' en maintenant au sec les connecteurs débrochables. En l'absence d'une telle enceinte d'air, une intervention sur les connecteurs débrochables nécessitera à priori de remonter à la surface de la mer l'ensemble de connexion immergé 55', en particulier pour embrocher les connecteurs étanches en évitant une pollution par l'eau de mer à l'intérieur de la connexion.

Les configurations de quais accueillant des navires qu'il est prévu d'amarrer de façon à ce que la poupe soit toujours placée au niveau d'un même repère sont cependant relativement rares, en particulier dans le cas de quais pour des terminaux gaziers. Les trois modes de réalisation qui précèdent en rapport avec les figures 1, 3 et 4 peuvent alors chacun être modifiés pour être adaptés à permettre un position variable du système de transfert d'énergie électrique selon l'invention le long d'un quai.

La figure 6 représente schématiquement une adaptation du mode de réalisation en rapport avec la figure 1. L'ensemble support 45 est mobile le long de moyens de guidage 60 tels que par exemple des rails, et le bras de transfert 20 est relié à un connecteur immergé 55 mobile avec le bras et raccordé à l'extrémité libre de la nappe formant la partie mobile 11 du dispositif 1 de câble sous-marin. Des moyens sont prévus pour que l'ensemble 59 de barres isolées et le connecteur immergé 55 soient solidaires en translation avec l'ensemble support 45 et le bras 20. Le navire le plus long admissible est représenté schématiquement en traits clairs, et celui le plus court admissible est représenté en traits foncés. Chaque navire comporte un connecteur complémentaire 101, non représenté, disposé à la poupe face au quai. La distance D1 entre les deux connecteurs complémentaires 101 correspond donc à l'intervalle de translation que doit pouvoir effectuer l'ensemble support 45 pour permettre de satisfaire à toutes les configurations de longueurs de navires entre les deux tailles extrêmes représentées.

Ce mode de réalisation est aussi représenté schématiquement sur la figure 55, par une vue face au quai montrant l'intégralité du système de transfert d'énergie. La distance D1 correspond sensiblement à la longueur des rails 60 sur lesquels est installé l'ensemble support 45 mobile. La hauteur de l'ensemble 59 de barres isolées est supérieure à l'amplitude maximale HM de la marée. La partie fixe 10 du dispositif 1 de câble sous-marin est constituée par une nappe maintenue immergée par des éléments d'attache 174 fixés aux piliers 74 qui supportent le quai. La partie mobile 11 s'étend entre le connecteur immergé 55 et l'élément d'attache 174 le plus proche. Comme visible en comparant les deux positions a) et b) de la nappe, la flexibilité de la nappe lui permet de modifier sa courbure pour s'adapter au déplacement de son extrémité reliée au connecteur 55. Les flotteurs 15 sont prévus pour que cette partie mobile 11 ait une flottabilité légèrement négative.

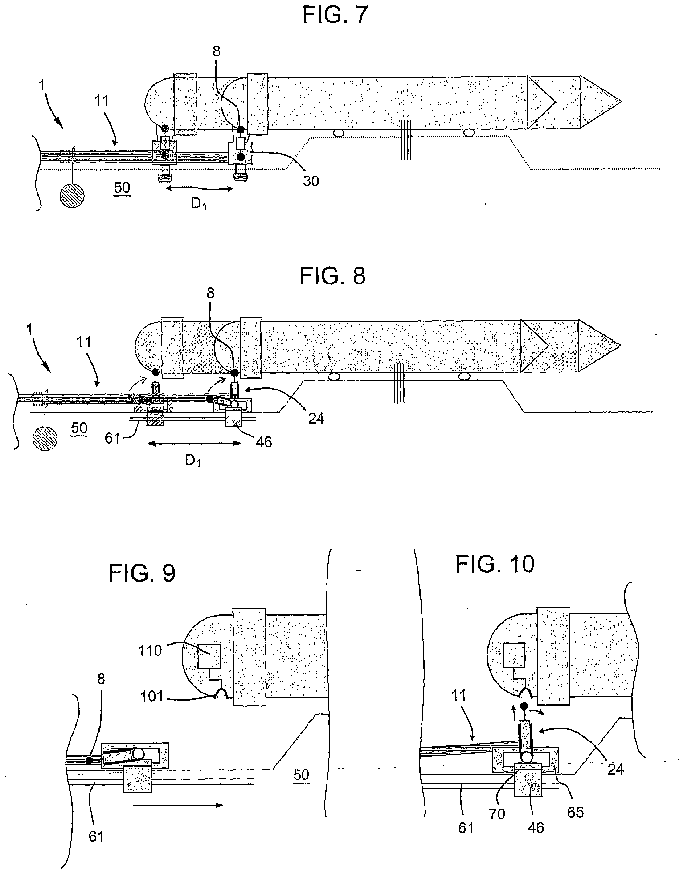

La figure 7 représente schématiquement une adaptation substantielle du mode de réalisation en rapport avec la figure 4. L'ensemble de connexion 5 disposé sur la barge 30 est ici nécessairement pivotant pour permettre à la barge de se positionner parallèle au quai pour aller se placer au niveau du connecteur 101 du navire et ensuite de tourner jusqu'à être perpendiculaire au quai comme sur la figure pour une connexion du connecteur 8 du bras de transfert avec le connecteur 101. Les deux parties fixe et mobile 10 et 11 du dispositif 1 de câble sous-marin sont sensiblement alignées en projection verticale sur le plan horizontal de la figure, mais la nappe de la partie 11 est adaptée à supporter une certaine flexion dans un plan horizontal comme décrit précédemment en rapport avec la figure 2b. Ceci permet de manoeuvrer la barge 30 sur une distance de l'ordre de quelques mètres perpendiculairement au quai afin tout d'abord de ne pas risquer qu'un élément de la barge ou du bras de transfert télescopique soit percuté par l'avant du navire lors de l'approche du navire pour accoster le quai. Ceci permet ensuite de ne pas nécessiter un débattement trop grand du bras de transfert télescopique pour passer d'un état de déconnexion du système de transfert d'énergie électrique selon l'invention à un état de connexion dudit système ou réciproquement.

La figure 8 représente schématiquement une adaptation du mode de réalisation en rapport avec la figure 3. Les figures 9 et 10 représentent schématiquement une opération de déplacement du système de transfert d'énergie de la figure 8 suivie d'un pivotement du bras de transfert pour préparer ledit système à passer dans un état de connexion. Une grande partie de l'installation, en particulier le bras de transfert 24, les moyens de levage de l'ensemble ainsi que les moyens de pivotement du bras, est identique au dispositif représenté sur la figure 3. La différence principale concerne l'ensemble support 65 qui est ici solidaire en translation avec un dispositif transporteur 46 mobile le long de moyens de guidage 61. Le transporteur 46 qui supporte l'ensemble de la structure est visible en détail sur la figure 36 et est muni de roues. Les moyens de guidage 61 sont par exemple constitués d'un rail unique en béton armé fixé au quai et qui présente des surfaces de roulement pour les roues du transporteur 46.

Ce mode de réalisation en rapport avec les figures 8, 9 et 10 n'est pas uniquement applicable à une configuration de quai qui présente une avancée. Il est aussi applicable à une configuration avec une bordure de quai entièrement droite et peut donc constituer une alternative au mode de réalisation en rapport avec la figure 6. Pour ceci, il est préférable de reculer encore la position du connecteur complémentaire 101 vers la poupe du navire, et de prévoir un angle compris typiquement entre 30 et 70 degrés entre l'axe de révolution du connecteur 101 et la direction du navire. Pour établir la connexion, le dispositif transporteur 46 mobile avec l'ensemble support 65 sont amenés à un niveau du quai qui reste derrière la poupe du navire, et le bras 24 est pivoté vers le connecteur 101 avec un angle compris entre 30 et 70 degrés par rapport au quai. La position de pivotement du bras 24 avant l'accostage du navire peut être prévue avec le bras dirigé vers le milieu du quai, c'est à dire symétrique par rapport à la position dite de rangement représentée sur la figure 9.

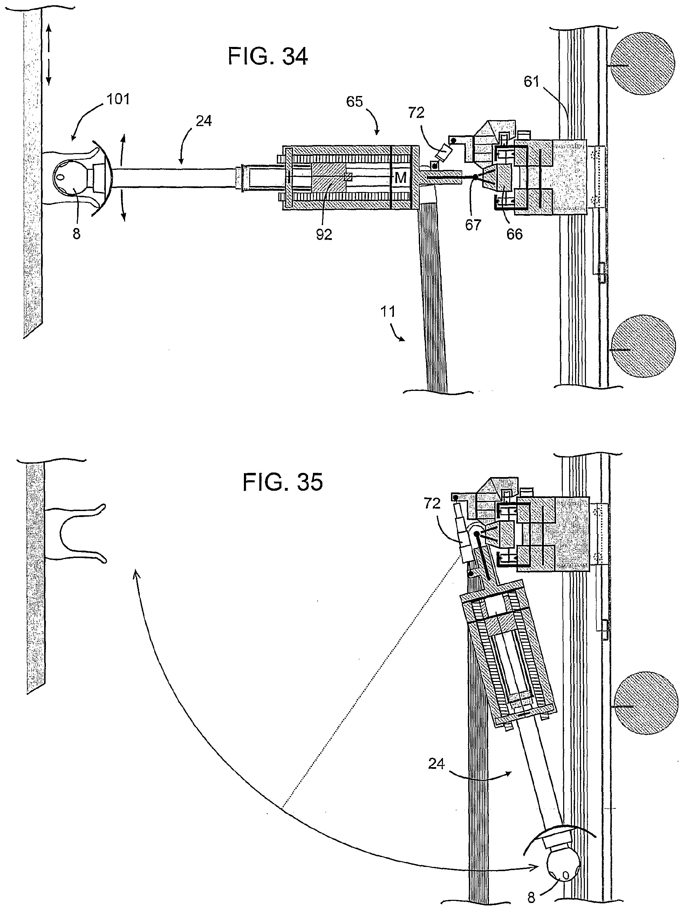

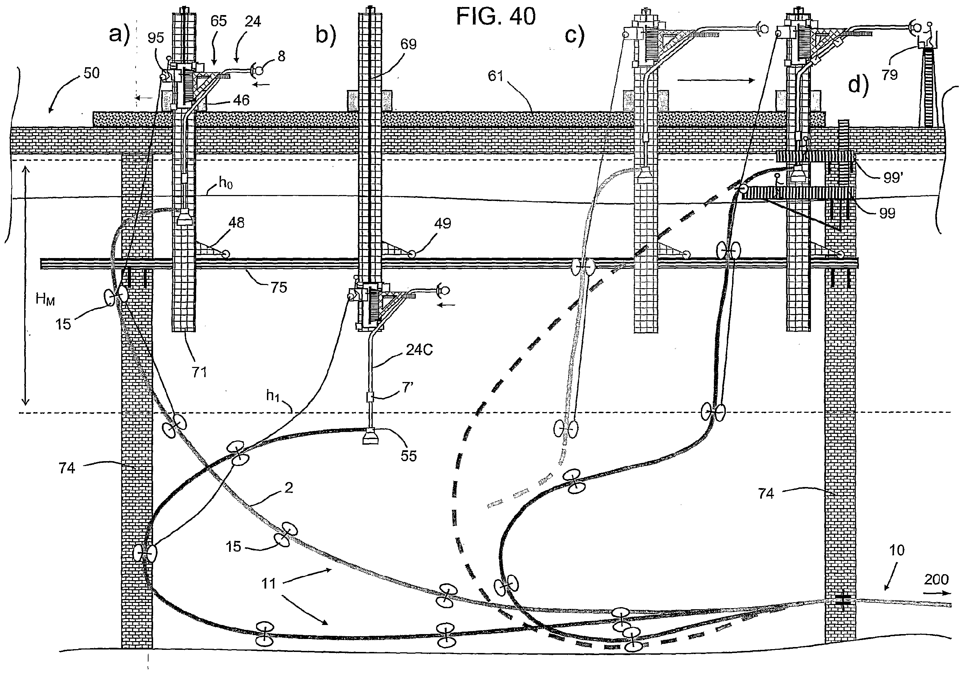

Sur la figure 9, le système de transfert d'énergie selon l'invention est représenté à un instant où le navire termine son accostage du quai 50. Le bras de transfert 24 est pivoté dans une position dite de rangement de façon à ce que le connecteur à tête sphérique 8 soit approximativement au dessus de la bordure du quai. Cette position de rangement du bras 24 est représentée plus en détail sur la figure 35, ainsi que par une vue face au quai sur la figure 40 aux positions c) et d). Lorsque le transporteur 46 est situé à une des deux extrémités du rail en béton 61, comme sur la figure 40 à la position d), il peut être prévu un poste d'entretien 79 surélevé pour accéder au connecteur 8 du bras 24 afin par exemple de procéder au retrait d'une bâche de protection et au nettoyage ainsi qu'éventuellement au séchage des surfaces de contact du connecteur peu avant la translation du transporteur 46. Il est entendu que ce déplacement de toute la structure portée par le transporteur 46, avec le bras de transfert 24 dans sa position de rangement, peut aussi bien être effectué avant l'accostage d'un navire que pendant ou après cet accostage.

Sur la figure 10, le transporteur 46 est positionné au même niveau que le connecteur complémentaire 101 du navire. Les moyens moteurs pour le déplacement de ce transporteur 46 sont alors désactivés, ou restent activés mais sont alors utilisés comme moyens de levage 68 visibles sur la figure 36 pour déplacer verticalement un organe ascenseur 66 le long des moyens de guidage vertical 70. L'ensemble support 65 est monté pivotant sur l'organe ascenseur 66 par l'intermédiaire de moyens de pivotement 67 selon un axe A4 vertical. Ces moyens de pivotement 67 sont adaptés à ce que le pivotement relatif possible entre l'ensemble support 65 et l'organe ascenseur 66 soit supérieur ou égal à 90°, de façon à permettre à une partie sensiblement horizontale 24A du bras de transfert 24 de pivoter au moins entre deux positions respectivement parallèle et perpendiculaire au quai.

Ainsi, les moyens de levage 68 sont actionnés pour déplacer l'organe ascenseur 66 de façon à ce que partie 24A du bras de transfert 24 soit positionnée à la même hauteur que le connecteur 101 du navire. Comme dans le mode de réalisation correspondant à la figure 3, le bras 24 est pivoté dans une position sensiblement perpendiculaire au quai et est ensuite déplacé en translation par rapport à son support 65 pour que son connecteur 8 puisse s'insérer dans le connecteur 101 du navire et établir l'état de connexion du système de transfert d'énergie.

Les systèmes de transfert d'énergie selon l'invention décrits précédemment sont particulièrement adaptés à des configurations de ports ou de terminaux où les navires accostent un quai toujours dans le même sens et présentent donc toujours un même côté bâbord ou tribord face au quai. Il existe cependant de nombreux ports ou terminaux gaziers ou pétroliers dans lesquels les quais sont configurés de façon à ce que les navires puissent accoster dans les deux sens afin de raccourcir la durée moyenne d'accostage d'un navire. Dans le cas de navires méthaniers, un bon nombre d'entre eux présente alors des sorties de cuves des deux côtés bâbord et tribord, afin de pouvoir se raccorder d'un côté ou de l'autre avec les installations à quai par l'intermédiaire des conduites cryogéniques à bras articulés 150.

Si un navire accoste un quai 50 en ayant sa proue dirigée sensiblement vers l'interface 200 qui assure la liaison entre les câbles sous-marins et les câbles souterrains dédiés au transfert d'énergie entre ce quai et le navire, la poupe du navire avec le connecteur complémentaire se trouve éloignée du bras de transfert du système de transfert d'énergie selon l'invention dans les modes de réalisation décrits précédemment. Il est alors nécessaire de prévoir des solutions pour pouvoir assurer dans ce cas une liaison électrique de puissance entre le dispositif 1 de câble sous-marin et les équipements électriques 110 à bord du navire. Une première solution consiste à installer un deuxième connecteur complémentaire, tel qu'un connecteur 101 comprenant une portion de sphère creuse, à la proue du navire. Si le bras de transfert du système selon l'invention est déplaçable le long du quai comme dans les réalisations en rapport avec les figures 6 à 10, il est alors possible de pouvoir utiliser le même système sans autre modification que l'adjonction d'un deuxième connecteur complémentaire sur le navire. Toutefois, cette solution est pénalisante en terme de coût et de place nécessaire pour le cheminement des câbles à l'intérieur du navire. De plus, l'installation d'un deuxième connecteur à la proue du navire pose aussi des problèmes supplémentaires d'encombrement.

Une seconde solution consiste alors, dans son principe, à utiliser un seul connecteur ou ensemble de connexion complémentaire à la proue du navire, et à modifier le dispositif 1 de câble sous-marin ainsi que les moyens qui sont adaptés à relier ce dispositif 1 à au moins un bras de transfert du système de façon à ce qu'il y ait toujours un tel bras de transfert disposé de façon adéquate pour établir un état de connexion avec ledit connecteur complémentaire. Pour ceci, il est généralement préférable de prolonger le dispositif 1 de câble sous-marin vers l'extrémité opposée du quai, c'est à dire vers la droite sur les figures qui représentent le quai vu de dessus. On cherchera généralement à faire passer sous le quai le dispositif 1 de câble en le fixant à la structure qui supporte le quai, mais on peut aussi envisager dans certains cas de maintenir une partie du câble au fond de la mer pour le faire passer sous l'emplacement des navires.

Une première façon de mettre en ouvre cette seconde solution consiste à dupliquer le bras de transfert ainsi que les moyens qui le relient au dispositif 1. Ceci impliquerait néanmoins une augmentation substantielle du coût du système de transfert d'énergie selon l'invention, du fait de la duplication d'une grande partie des éléments du système.

Une seconde façon de mettre en ouvre cette seconde solution consiste à utiliser le même bras de transfert dans les deux configurations qui correspondent aux deux sens possibles d'accostage du navire. Cette façon de procéder est particulièrement adaptée aux modes de réalisations dans lesquels le bras de transfert est porté par une barge, puisque la barge avec éventuellement une partie de câble immergée peuvent se déplacer d'une extrémité à l'autre du quai en contournant le navire. De même, si le bras de transfert est porté par la proue du navire comme montré plus loin, il est relativement simple de dupliquer une partie de câble du dispositif 1 de câble sous-marin pour que le même bras puisse être raccordé au dispositif 1 dans chacune des deux configurations. Si par contre le bras de transfert est porté par un support sur le quai, le transport du bras avec ou sans son support poserait de nombreux problèmes.

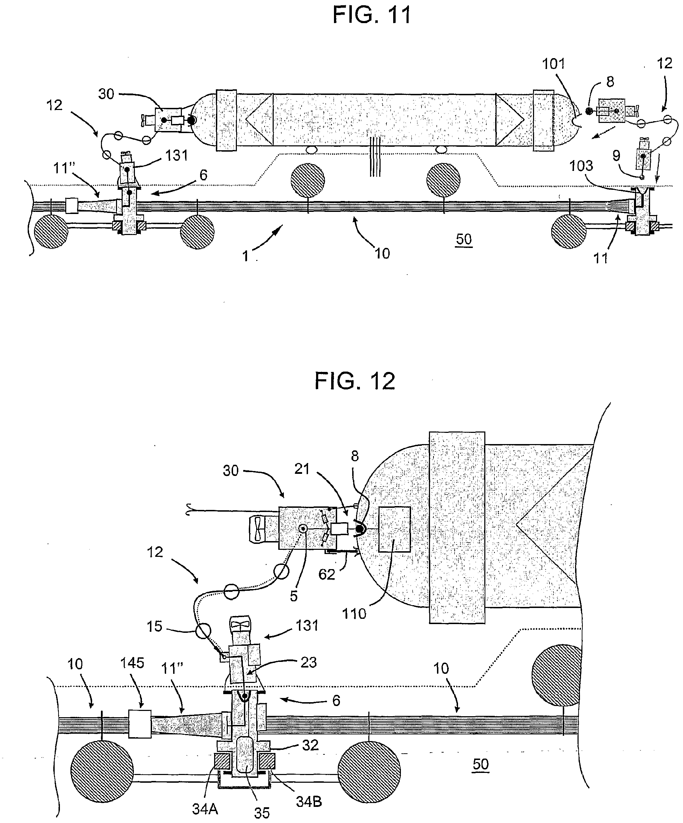

Les figures 11 et 12 représentent schématiquement un mode de réalisation de cette seconde solution. La figure 12 est un agrandissement de la partie gauche de la figure 11. La partie fixe 10 du dispositif 1 de câble sous-marin passe sous le quai 50 et aboutit à une première partie mobile 11 flexible verticalement, ces parties 10 et 11 étant ici constituées d'une même nappe de câbles. Sur la gauche de chaque figure 11 et 12, la nappe de câbles venant de l'interface sous-marine 200 non représentée est interrompue par un connecteur sous-marin 145 qui permet une dérivation électrique de la nappe vers une autre première partie mobile 11". Chaque première partie mobile 11 ou 11" flexible verticalement est électriquement raccordée à un ensemble de connexion 6 qui est ici pivotant, appelé second ensemble de connexion dans ce qui suit puisque la barge 30 est équipée d'un premier ensemble de connexion pivotant 5 analogue à celui en rapport avec les figures 5, 13 et 18.

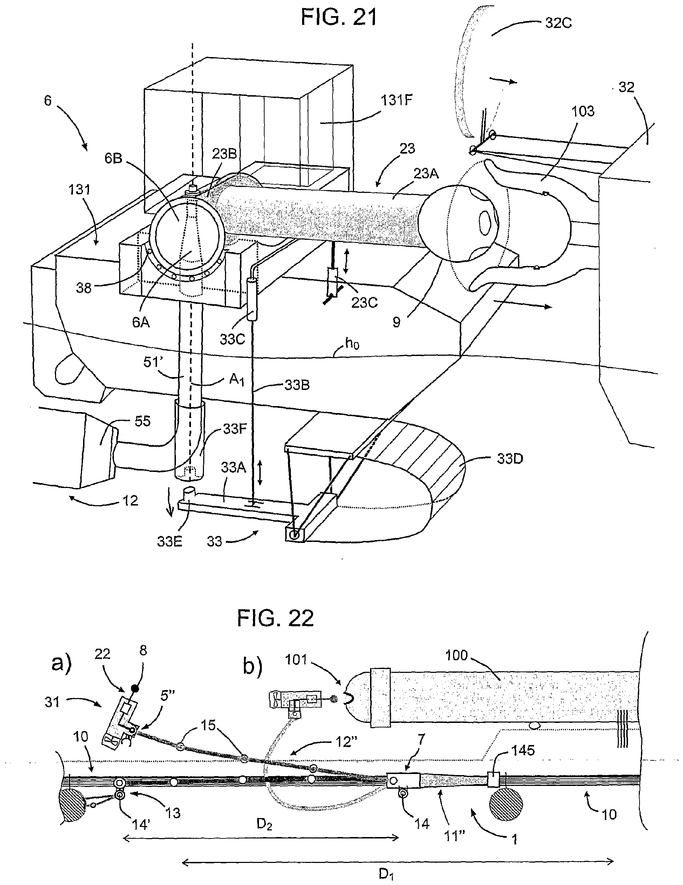

Ce second ensemble de connexion pivotant 6 comprend un bras intermédiaire 23 de transfert porté par une petite embarcation 131 et muni d'une tête sphérique 9 pour une connexion électrique de puissance de type pivotante à rotule. Une vue détaillée en trois dimensions de cet ensemble de connexion pivotant 6 est visible sur la figure 21. La tête sphérique 9 est adaptée à être électriquement raccordée à un connecteur complémentaire de puissance 103 monté sur un ponton 32 flottant qui est associé à des moyens de guidage selon la direction verticale. Ces moyens de guidage 34 comprennent ici deux piliers 34A et 34B qui sont maintenus verticaux parallèles entre eux. Ces deux piliers constituent des butées à la fois latérales et longitudinales pour le ponton 32 flottant et lui interdisent tout mouvement substantiel autre qu'un mouvement vertical. Ils sont donc adaptés à permettre au ponton 32 de suivre la marée.

Le connecteur complémentaire 103 est électriquement relié à la nappe formant ladite autre première partie mobile 11" flexible verticalement du dispositif 1 de câble sous-marin par l'intermédiaire de barres conductrices isolées entre elles et par rapport à l'air, un connecteur immergé permettant de relier ces barres à la nappe.

Sur la petite embarcation 131, le bras intermédiaire 23 est relié à une seconde partie mobile 12 du dispositif 1 de câble sous-marin de puissance par l'intermédiaire d'une connexion électrique pivotante. Cette seconde partie mobile 12 est constituée par une nappe de câbles ayant un plan de nappe sensiblement vertical afin que la nappe soit flexible dans un plan horizontal. La structure de cette nappe peut être identique à celle des autres nappes formant les premières parties mobiles 11 et 11". Des flotteurs 15 peuvent être répartis sur la nappe afin qu'elle reste immergée entre deux eaux. Des filins peuvent relier entre eux ces flotteurs afin de supporter à eux seuls une éventuelle traction à une extrémité de la nappe, par exemple si la barge 30 doit remorquer la petite embarcation 131 en tirant sur la nappe.

La connexion électrique pivotante entre la nappe de la partie mobile 12 et le bras intermédiaire 23 comprend un connecteur électrique mâle tronconique 6A qui est raccordé à la nappe par l'intermédiaire d'un bras plongeur 51' se terminant par un connecteur immergé 55. Ce connecteur mâle 6A est adapté à être inséré dans un connecteur femelle 6B qui comporte une cavité tronconique ménagée dans une partie 32B du bras 23. La réalisation de cette connexion électrique pivotante est analogue à celle en rapport avec la figure 15, le pivotement du connecteur mâle dans le connecteur femelle s'effectuant selon un axe unique A1. Le bras intermédiaire 23 forme sensiblement un L, et la partie 32B correspondant à la plus courte branche du L est montée pivotante sur la petite embarcation 131 selon un axe sensiblement horizontal. Ainsi, la plus longue branche 23A qui supporte le connecteur 9 est orientable verticalement.

Le raccordement électrique de la seconde partie mobile 12 à la barge 30 s'effectue par l'intermédiaire d'un autre connecteur immergé 55, comme représenté sur la figure 18. Afin de procurer une ambiance non explosive autour des connexions électriques pivotantes 9, 103, 6A et 6B du second ensemble de connexion 6 ainsi qu'autour des connexions du premier ensemble de connexion pivotant 5, une première solution consiste à utiliser une même source de gaz inerte à partir du navire. Du gaz non explosif est amené depuis le navire jusqu'au premier ensemble de connexion pivotant 5 par l'intermédiaire d'un ensemble de canalisations 87, 87' et 87" visibles sur les figures 20 et 15 et qui parcourent le bras de transfert 21. La seconde partie mobile 12 du dispositif 1 de câble sous-marin peut alors comprendre sur toute sa longueur une canalisation flexible raccordée au second ensemble de connexion pivotant 6 pour y amener ce gaz inerte depuis la canalisation 87". Mais on peut aussi se passer d'une telle canalisation flexible et amener du gaz inerte dans le second ensemble de connexions 6 à partir d'un réservoir 35 de gaz non explosif installé sur le ponton flottant 32 et agencé pour pouvoir communiquer avec la portion de sphère creuse du connecteur 103 de ce second ensemble de connexion 6.

La seconde partie mobile 12 du dispositif 1 est transportable avec la barge 30 et la petite embarcation 131, sans avoir besoin de déconnecter le connecteur mâle 6A du connecteur femelle 6B. L'ensemble mobile peut être amené à une extrémité ou l'autre du quai selon le sens d'accostage du navire, pour se connecter d'une part à un connecteur 103 sur un ponton flottant 32 et d'autre part au connecteur 101 du navire. Sur la partie à droite de la figure 11, l'ensemble mobile est en train de se positionner pour effectuer cette double connexion. La barge 30 et la petite embarcation 131 sont chacune motorisées, et leurs hélices sont préférablement carénées afin que la nappe formant la seconde partie mobile 12 puisse passer sous ces embarcations sans risquer d'être endommagée par une hélice. Une fois la double connexion effectuée, les embarcations 131 et 30 sont reliées respectivement au ponton 32 et au navire 100 par des filins et/ou des gaffes 62 afin de limiter autant que possible l'amplitude de leurs mouvements horizontaux.

La figure 13 représente schématiquement un mode de réalisation d'un premier ensemble de connexion pivotant 5 installé sur une barge 30 comme représenté sur la figure 18. Cet ensemble de connexion 5 est disposé hors de l'eau à l'intérieur d'un corps sphérique 44 qui forme l'extrémité inférieure du bras de transfert 21, ce corps sphérique procurant une fonction de rotule mécanique 4 en étant adapté à pivoter dans un support 40 de rotule monté sur la barge 30. Ce pivotement peut s'effectuer grâce à des roulements 39, ou encore par un simple graissage des surfaces du corps sphérique 44 et de son support. Ce support 40 présente un trou 41 adapté à être traversé par un bras plongeur 51 qui renferme des conducteurs électriques de puissance et traverse un puits ménagé dans la coque de la barge pour pouvoir présenter une extrémité immergée raccordée de façon étanche au dispositif 1 de câble sous-marin. Un joint circulaire 144 d'étanchéité à l'air entoure le corps sphérique 44 et empêche l'air de s'échapper du puits de la barge, empêchant ainsi l'eau de remonter. Une extrémité émergée du bras plongeur 51 est raccordée au bras de transfert 21 par l'intermédiaire du premier ensemble de connexion 5 qui comprend ici des doigts de contact sous forme de pinces 42 associés à des secteurs angulaires de disques 43, chaque disque étant électriquement relié à un conducteur de puissance 3A, 3B ou 3C dans le bras de transfert 21. Les pinces 42 sont électriquement reliées aux conducteurs de puissance du bras plongeur 51, et forment un connecteur pivotant selon un axe unique A.

Les figures 14 et 15 représentent schématiquement un autre mode de réalisation d'un connecteur pivotant selon un axe unique. Ce connecteur pivotant 5'A est un connecteur mâle de forme sensiblement tronconique dont l'axe de symétrie coïncide avec l'axe unique du pivotement et qui est adapté à pivoter dans un connecteur femelle 5'B monté sur à l'extrémité inférieure du bras de transfert 21. Ce connecteur femelle 5'B possède un évidement de même forme sensiblement tronconique adaptée à recevoir le connecteur mâle. Le connecteur mâle comprend ici un ensemble 16 de trois premiers éléments de contact 161, 162, et 163 constitués par des anneaux métalliques à surface tronconique et correspondant chacun à un conducteur respectivement 3A, 3B et 3C. L'évidement du connecteur femelle 5'B définit une paroi interne à la surface de laquelle sont disposés trois seconds éléments de contact 171, 172 et 173 constitués par des bandes à lamelles de contact et chacun adapté à coopérer avec un premier élément de contact 161, 162, ou 163. Les conducteurs de puissance 3A, 3B et 3C dans le bras de transfert 21 sont par exemple constitués de barres gainées. Ils sont chacun reliés à un second élément de contact 171, 172 ou 173 par l'intermédiaire d'un connecteur débrochable tel que 183.

Le connecteur mâle 5'A est prolongé selon son axe de symétrie A par une tige 52' adaptée à pouvoir traverser un trou ménagé au fond de l'évidement du connecteur femelle 5'B pour ressortir à l'extérieur du connecteur femelle. Cette tige 52' est adaptée à recevoir des moyens de serrage 53 agencés pour permettre le maintien en pression de contact du connecteur mâle dans le connecteur femelle. Des moyens de roulement 54 ou de glissement sont en outre intercalés entre les moyens de serrage 53 et le corps sphérique 44 du connecteur femelle 5'B pour permettre le pivotement du connecteur mâle selon son axe de symétrie A.

La figure 16 représente schématiquement une vue en coupe longitudinale d'un connecteur mâle 5"A analogue au connecteur mâle 5'A précédent. Les premiers éléments de contact sous forme de surfaces métalliques annulaires sont ici au nombre de quatre pour permettre le transfert d'un courant triphasé avec un neutre. Le corps isolant du bras plongeur 51 présente en outre une surface crénelée entre deux éléments de contact adjacents, de façon à allonger la ligne de fuite entre les surfaces de contact pour éviter un amorçage d'arc entre phases. La tige 52" qui prolonge la partie tronconique du connecteur est munie à son extrémité d'un élément antifriction éventuellement amovible en forme de champignon, comprenant des lamelles élastiques pour amortir d'éventuels chocs, afin d'éviter d'endommager les seconds éléments de contact du connecteur femelle si le connecteur mâle bouge latéralement lors de la connexion.

La figure 17 représente schématiquement une vue en coupe du support 40 traversé par le bras plongeur 51, selon le plan horizontal P représenté en pointillés sur la figure 18. Le trou 41 du support est oblong dans la direction longitudinale de la barge 30, afin de privilégier l'amplitude de débattement angulaire du bras 21 selon la direction verticale.

Sur la figure 18, le bras plongeur 51 est raccordé de façon étanche à une nappe 2 orientée avec un plan de nappe vertical, afin de pouvoir être courbée horizontalement. Le bras de transfert 21 est relié par des rotules 88 aux extrémités des tiges de vérins 86. Accessoirement, un reposoir 89 permet au bras 21 d'être dans une position dite de repos par exemple pendant la navigation de la barge, position dans laquelle les vérins 86 sont inactifs. L'ensemble 19 de contacts glissants comprend des doigts de contact tels que 191 et 192 fixés aux barres conductrices inférieures du bras et en contact électrique avec les barres conductrices supérieures du bras. Ces dernières sont reliées aux surfaces conductrices du connecteur de puissance 8, telles que référencées 81 et 84 sur la figure 19. Le déplacement par coulissement de la partie télescopique du bras 21 est assuré par exemple grâce à des vérins 86'.

La figure 19 a déjà été commentée en rapport avec l'état de connexion d'un système de transfert d'énergie selon l'invention représenté sur la figure 57. On peut ajouter que l'électroaimant 105 est disposé selon l'axe de révolution du connecteur complémentaire 101 de puissance disposé sur le navire 100. Une portion de calotte sphérique en matériau ferromagnétique, non représentée, est disposée à l'extrémité avant de la tête sphérique 8 afin de se trouver très proche et en face d'un pôle de l'électroaimant 105 dans l'état de connexion du système. Ainsi, le bouclage du champ magnétique permet de produire une force d'attraction électromagnétique sur la tête sphérique 8 et d'assurer la pression de contact nécessaire. La partie télescopique du bras 21 est munie d'un capot 85 en portion de sphère prévu pour affleurer l'ouverture circulaire évasée 101A du connecteur 101 dans l'état de connexion. Ainsi, quel que soit la position angulaire du bras 21 par rapport à l'axe de révolution du connecteur 101, ce capot 85 permet de protéger l'espace intérieur du connecteur 101 par exemple des embruns ou des oiseaux.

La figure 20 représente schématiquement la position de connexion des connecteurs de puissance 8 et 101 qui réalise l'état de connexion du système de transfert d'énergie. Il y est représenté en particulier des canaux de circulation d'un gaz inerte tel que de l'azote provenant de réservoirs cryogéniques d'azote liquide sur le navire, pour l'inertage de connexions électriques du système. Des premiers canaux 107 permettent de souffler du gaz inerte dans l'espace interstitiel 104 compris entre l'avant de la tête sphérique du connecteur de puissance 8 et la paroi du connecteur complémentaire 101. Au moins un joint d'étanchéité 108 est prévu pour empêcher cet espace interstitiel de communiquer avec l'air de l'espace intérieur du connecteur 101. Ainsi, les connexions réalisées dans cet espace interstitiel 104 sont dans une ambiance inerte avec du gaz en circulation. Des seconds canaux 87 permettent au gaz inerte de circuler dans la partie supérieure télescopique du bras de transfert 21 pour procurer une ambiance inerte autour de l'ensemble 19 de contacts glissants. La circulation de gaz inerte se poursuit dans la partie inférieure du bras de transfert 21 par des troisièmes canaux 87' qui permettent d'amener le gaz inerte au niveau des connexions électriques du premier ensemble de connexion 5 ou 5' comme représenté sur la figure 15.

La figure 21 a déjà été commentée en rapport avec le second ensemble de connexion pivotant 6 représenté sur les figures 11 et 12. On peut ajouter que l'orientation verticale de la branche 23A du bras intermédiaire 23 est assurée grâce à un vérin 23C agissant sur une tige sensiblement verticale qui supporte cette branche. La plus courte branche 23B présente la forme d'un cylindre et est apte à pivoter sur un support présentant un creux semi-cylindrique muni de moyens de roulement ou de glissement 38. Ainsi, le bras plongeur 51' peut non seulement pivoter selon l'axe A1 de révolution du connecteur mâle 6A, mais peut aussi pivoter dans un plan vertical avec le même débattement angulaire que celui du bras intermédiaire 23. Ce pivotement du bras plongeur 51' dans un plan vertical peut être empêché par l'immobilisation du bras intermédiaire 23 par exemple en bloquant le vérin 23C.

Toutefois, la traction exercée par la seconde partie mobile 12 du dispositif 1 de câble sur le bras plongeur 51' ainsi que la pression de l'eau sur ce bras, notamment lors du transport de la nappe de câbles formant cette partie 12 par la barge 30 et l'embarcation 131, risqueraient de casser ce bras ou de produire des contraintes trop fortes par un effet de levier qui se répercute sur les connecteurs 6A et 6B. Pour remédier à ceci, il est possible de prévoir un ensemble déflecteur hydrodynamique 33 muni d'un bras pivotant 33A dont l'extrémité pivotante est munie d'un ergot 33E adapté à être inséré dans un élément d'attache 33F fixé au niveau d'un coude que forme le bras plongeur 51'. Le bras pivotant 33A est actionné par exemple par une longue tige 33B reliée à un vérin 33C. Il est ainsi possible de bloquer le bras plongeur 51' après l'avoir positionné avec l'axe A1 sensiblement vertical, tout en autorisant une rotation de ce bras de l'ordre de 300° autour de l'axe A1 afin de permettre une grande amplitude angulaire de pivotement de la seconde partie mobile 12 sous l'embarcation 131.

La petite embarcation 131 est de préférence équipée d'une cabine 131F permettant à un opérateur d'effectuer un manoeuvre d'approche du ponton flottant 32 en ajustant la hauteur de la tête sphérique 9 de façon à permettre son introduction dans le connecteur complémentaire de puissance 103. Préalablement à cette connexion, un couvercle 32C de protection de l'ouverture circulaire évasée du connecteur 103 est pivoté pour dégager cette ouverture.

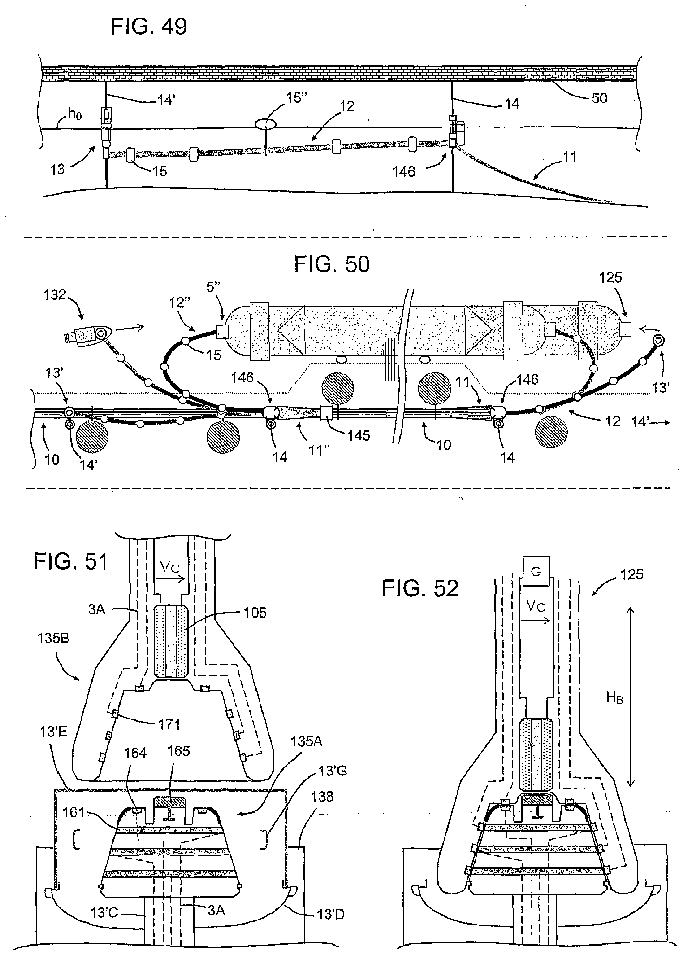

Dans le mode de réalisation précédent en rapport avec les figures 11 et 12, le second ensemble de connexion pivotant 6 fait appel à des éléments analogues à ceux utilisés au niveau de la barge 30 et notamment à des ensembles de connecteurs pivotants mâles et femelles de types tronconique et à rotule sphérique. Un tel système de transfert d'énergie électrique selon l'invention présente l'avantage de nécessiter une seule seconde partie mobile 12 et permet donc de limiter la longueur totale de nappe de câbles, mais cet avantage est globalement atténué par l'investissement nécessaire au niveau du second ensemble de connexion 6. Il peut s'avérer avantageux en terme de coût de dupliquer la seconde partie mobile 12 du dispositif 1 de câble sous-marin de puissance et de maintenir chaque seconde partie 12 et 12" électriquement raccordée en permanence à une extrémité supérieure d'une première partie mobile respectivement 11 et 11" du dispositif 1, comme visible sur la figure 50.

Un premier exemple de réalisation d'un mode de réalisation avec deux secondes partie mobile 12 et 12" est représenté schématiquement sur la figure 22. Seule une seconde partie 12" du dispositif 1 est représentée sur une première moitié de quai. Cette seconde partie 12" est électriquement raccordée en permanence à l'extrémité supérieure d'une première partie mobile 11" du dispositif 1, par l'intermédiaire d'un second ensemble de connexion 7 pivotant. Sur la seconde moitié de quai non visible, l'autre seconde partie 12 est raccordée de manière analogue à une première partie mobile 11 du dispositif 1 par l'intermédiaire d'un autre second ensemble de connexion 7 pivotant. Le bras de transfert 22 sur la barge 31 assure la même fonction que le bras 21 décrit précédemment et visible sur la figure 18, mais sa structure inférieure est inspirée de la solution en rapport avec la figure 21. Ainsi, la barge 31 ne présente pas de puits comme la barge 30 précédente.

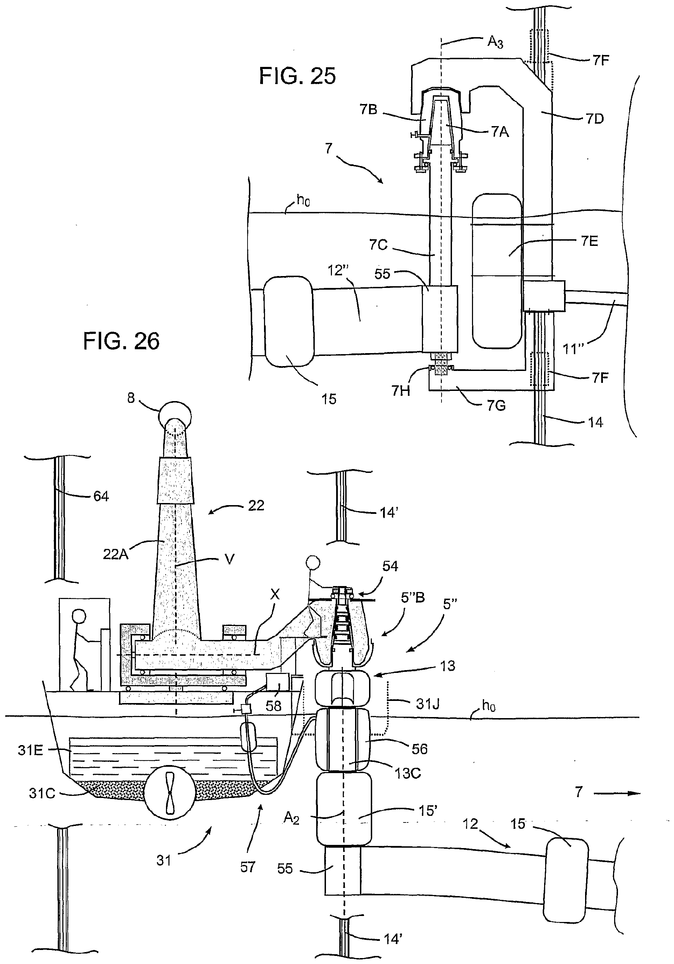

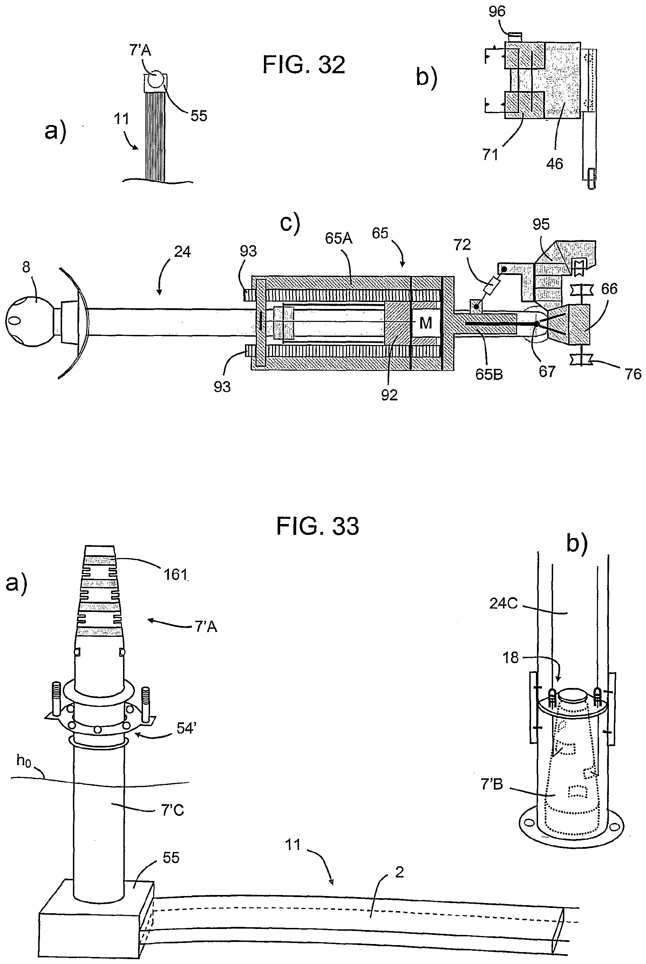

Le second ensemble de connexion 7 pivotant est représenté en détail sur la figure 25. Il comprend une connexion électrique pivotante selon un axe unique A3 sensiblement vertical, comportant un connecteur mâle 7A de type tronconique et un connecteur femelle 7B. Les éléments de contact ne sont pas représentés, mais sont analogues à ceux décrit précédemment pour le premier ensemble de connexion pivotant 5. Plus précisément, les connecteurs 7A et 7B sont identiques aux connecteurs respectivement 7'A et 7'B représentés sur les figures 33 et 38. Le maintien de la pression de contact est de même assuré grâce à des vis de serrage qui traversent une collerette pivotante autour du connecteur mâle et sont adaptées à être vissées dans le connecteur femelle. Des moyens de roulement 54' sont intercalés entre cette collerette et un épaulement radial circulaire du connecteur mâle, afin de permettre le pivotement du connecteur mâle.

Ce second ensemble de connexion pivotant 7 comprend des moyens de flottaison 7E adaptés à maintenir la connexion électrique pivotante constituée par les connecteurs 7A et 7B hors de l'eau. Il comprend en outre des moyens de coulissement 7F adaptés à lui permettre de suivre la marée en coulissant le long de moyens de guidage 14 selon la direction verticale qui consistent en un câble vertical lesté ou en une barre verticale, comme visible sur la figure 30.

L'extrémité supérieure de la nappe formant la première partie mobile 11" du dispositif 1 de câble est électriquement raccordée au connecteur femelle 7B par l'intermédiaire d'un connecteur immergé relié à des conducteurs isolés, non représentés, renfermés dans un bras 7D en forme de potence. La nappe formant la seconde partie mobile horizontalement 12" est électriquement raccordée au connecteur mâle 7A par l'intermédiaire d'un autre connecteur immergé 55 relié à des conducteurs isolés, non représentés, renfermés dans un bras vertical 7C dont l'extrémité supérieure aboutit au connecteur 7A. La hauteur de ce bras vertical 7C est prévue suffisante pour que la nappe 12" reste en permanence immergée, et que la connexion électrique pivotante réalisée par les connecteurs 7A et 7B reste émergée afin de ne pas avoir de problème d'étanchéité et de risque d'infiltration d'eau au niveau des contacts.

En cas de traction sur la nappe 12", et afin d'éviter des contraintes trop fortes par un effet de levier sur le bras vertical 7C qui se répercute sur les connecteurs 7A et 7B, le connecteur immergé 55 peut être monté pivotant selon l'axe A3 à sa base en étant maintenu par un bras 7G qui comprend un roulement étanche 7H.

En poursuivant la description de la figure 22, on peut noter que la seconde partie 12" présente une terminaison raccordée à un ensemble flottant 13 coulissant le long de moyens de guidage 14' selon la direction verticale qui consistent en un câble vertical lesté ou en une barre verticale, comme visible sur la figure 30.

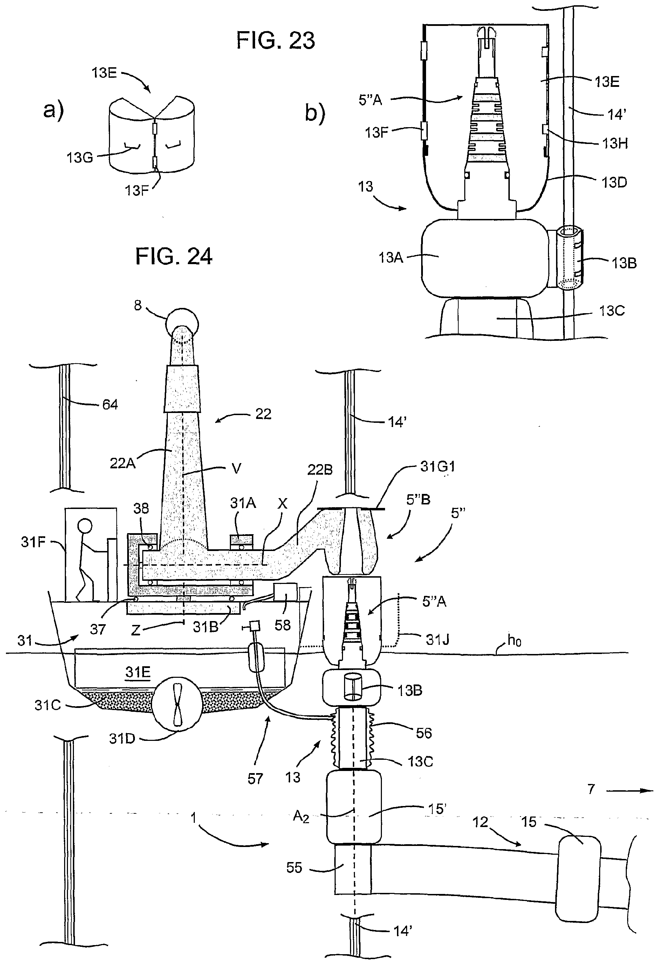

Cet ensemble flottant 13 est représenté en détail sur les figures 23 b) et 24. Il intègre un connecteur mâle 5"A, et est agencé autour des conducteurs de phases et de neutre non représentés qui sont renfermés dans un bras vertical 13C et réalisent la liaison électrique entre le connecteur mâle et un connecteur immergé 55 raccordé à la seconde partie mobile 12" du dispositif 1 de câble sous-marin. L'ensemble flottant 13 comprend un premier flotteur 13A sur lequel sont fixés des moyens de coulissement 13B détachables adaptés à coopérer avec des moyens de guidage vertical 14' pour lui permettre de suivre la marée. D'autres moyens de coulissement détachables peuvent être prévus plus bas sur le bras vertical 13C, par exemple au niveau d'un second flotteur 55' ou encore du connecteur immergé 55, s'il est nécessaire de mieux stabiliser verticalement l'ensemble flottant 13.

Le connecteur mâle 5"A est entouré à sa base par un capot de protection inférieur 13D fixé au connecteur de façon coaxiale, ce capot fixe étant coiffé de façon étanche par un capot de protection 13E amovible représenté sur la figure 23 a). Lorsque le capot amovible 13E est installé, le connecteur 5"A est protégé des embruns ou autres agressions extérieures. Comme décrit ci-après, ce capot 13E peut être ouvert en deux parties raccordées par une charnière 13F, afin de retirer aisément ce capot pour permettre l'introduction du connecteur mâle 5"A dans un connecteur femelle 5"B électriquement relié au bras de transfert 22 de la barge 31. L'ouverture du capot 13E est effectuée manuellement en tirant sur des poignées 13G pour séparer des aimants ou des systèmes de clips 13H.

Ainsi, une fois l'ensemble flottant 13 raccordé au bras de transfert 22 de la barge 31 comme représenté sur la figure 26, la barge peut s'éloigner déjà bordure du quai en emmenant avec elle l'extrémité de la seconde partie mobile 12" du dispositif 1 de câble qui est reliée au premier ensemble de connexion 5" pivotant comme représenté sur la figure 22 dans la position a). La flexibilité de la nappe 12" dans le plan horizontal de la figure, conjugué avec le pivotement des premier et second ensembles de connexion 5" et 7, permet à la barge 31 d'approcher la poupe du navire comme représenté dans la position b) tout en ayant un rayon de courbure de la nappe qui reste suffisamment grand pour ne pas risquer de dépasser la limite de flexion autorisée pour cette nappe. L'amplitude possible D1 de positionnement du connecteur de puissance 8 dans la direction du navire est bien supérieure à la longueur D2 de la nappe 12", et peut atteindre sensiblement deux fois cette longueur D2 si nécessaire. Il est donc avantageux de limiter la longueur D2 de la nappe 12" à environ la moitié de distance entre les poupes respectives du navire le plus long admissible et du navire le plus court admissible.

La figure 24 représente schématiquement le positionnement de la barge 31 par rapport à l'ensemble flottant 13 afin de pouvoir raccorder le connecteur mâle 5"A disposé en haut de cet ensemble au connecteur femelle 5"B électriquement relié au bras de transfert 22. L'architecture du bras de transfert 22 est proche dans son principe de celle du bras intermédiaire 23 de transfert commenté en rapport avec la figure 21. Le bras de transfert 22 est ici maintenu sur la barge dans une position de blocage pour laquelle l'axe du connecteur femelle 5"B est sensiblement vertical. L'ensemble flottant 13 est attaché de façon coulissante au câble ou à la barre de guidage vertical 14' comme sur la figure 23 b), ce moyen de guidage vertical 14' étant représenté interrompu sur la figure 24 de façon à ne pas masquer l'ensemble 13. Le bras vertical 13C de cet ensemble flottant comprend des moyens de flottaison variable 56 qui sont solidaires en mouvement de l'ensemble 13 pour effectuer une translation vers le haut en augmentant par des moyens de gonflage la flottabilité de l'ensemble 13. Les moyens de flottaison variable 56 sont par exemple constitués d'une bouée gonflable montée de façon coaxiale autour du bras vertical 13C, et les moyens de gonflage peuvent comprendre un système 57 de tuyau communiquant avec la bouée 56 et comportant un dispositif de robinet sélecteur à double valve. Ces moyens de flottaison variable 56 ne sont toutefois pas indispensables, et on peut envisager des moyens de levage qui viendraient par exemple pousser vers le haut les moyens de coulissement 13B pour effectuer la translation de l'ensemble 13.

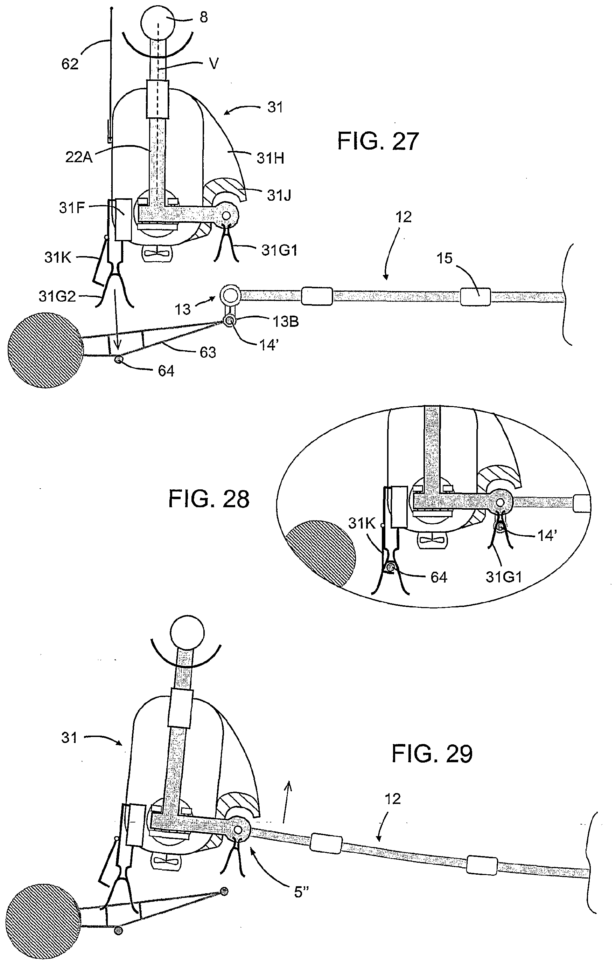

Dans l'état préalable au raccordement des deux connecteurs du premier ensemble de connexion 5", représenté sur la figure 24, la bouée 56 est dégonflée et le robinet sélecteur à double valve du système 57 flotte à la surface de l'eau. Des moyens de guidage d'approche sous la forme de fourches 31G1 et 31G2, visibles de dessus sur les figures 27 et 28, sont disposés sur la barge 31 et adaptés à coopérer avec les moyens de guidage vertical 14' ainsi qu'avec des moyens de butée 64 disposés parallèlement aux moyens de guidage vertical 14', afin de permettre le positionnement de la barge 31 dans une position de butée où ledit connecteur mâle 5"A du premier ensemble de connexion 5"se trouve disposé sous le connecteur femelle 5"B. Les moyens de butée 64 peuvent être identiques au câble lesté ou à la barre verticale 14'. La vue partielle sur la figure 28 correspond à la position de butée de la barge 31. Les moyens de guidage vertical 14' servent aussi de moyens de butée pour la fourche de guidage d'approche 31G1. Les deux fourches 31G1 et 31G2 présentent chacune vues de dessus une forme de U évasé.

La barge 31 comporte ici un fond 31C lesté, et un compartiment de ballastage 31E. Les ballasts sont vides, et la ligne de flottaison sur la barge est à son plus bas. La flottaison de l'ensemble 13 est prévue telle que le capot de protection 13E amovible du connecteur mâle 5"A ne heurte pas le corps du connecteur femelle 5"B lors de l'arrivée de la barge. La barge comprend un marchepied 31J proche de ce capot 13E pour qu'un opérateur puisse retirer le capot une fois la barge arrêtée dans sa position de butée. Ensuite, cet opérateur relie le dispositif de robinet sélecteur à double valve du système 57 à la sortie d'un gonfleur 58 sur la barge, et procède au gonflage de la bouée 56. En parallèle, les ballasts du compartiment 31E peuvent être remplis afin d'abaisser progressivement la barge par rapport au niveau h0 de la mer.

Le mouvement de translation vers le haut du connecteur mâle 5"A selon son axe de symétrie A2, relativement au connecteur femelle 5"B, permet d'aboutir à l'état de raccordement représenté sur la figure 26. Le moyens de coulissement 13B est détaché par l'opérateur qui accède ensuite au dessus du connecteur femelle 5"B afin d'installer des moyens de serrage tels qu'un écrou sécurisé par une goupille et destiné à être vissé sur la tige filetée qui prolonge la partie tronconique du connecteur mâle. Ces moyens sont agencés pour permettre le maintien en pression du connecteur mâle dans le connecteur femelle tout en permettant le pivotement du connecteur mâle selon son axe de symétrie A2 au moins pendant le déplacement de la barge vers le navire. Des moyens de roulement 54 ou de glissement, tels qu'un roulement à billes, sont intercalés entre une rondelle placée sous l'écrou et une autre rondelle disposée autour de l'ouverture supérieure du connecteur femelle 5'B.

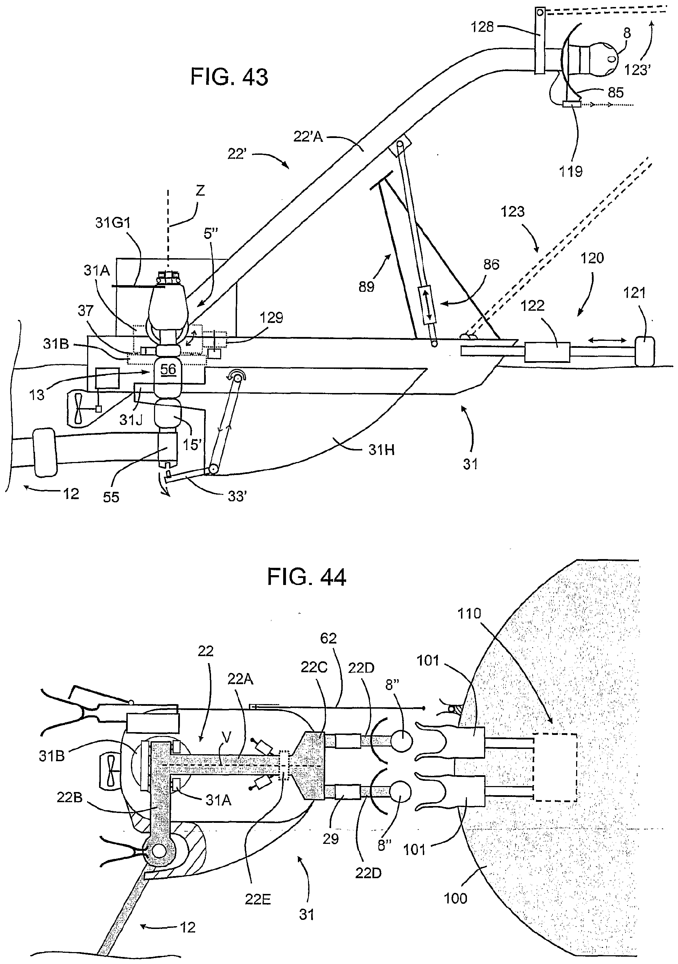

L'opérateur libère ensuite la barge de sa position de butée et commande l'hélice carénée 31D en marche avant pour déplacer la barge comme représenté sur la figure 29 et la figure 22 dans la position a). Une fois que la barge a atteint la position b) sur la figure 22, la manoeuvre d'orientation du bras de transfert 22 pour aboutir à la connexion du connecteur de puissance 8 avec le connecteur complémentaire 101 sur le navire reste analogue dans son principe à ce qui a été décrit précédemment. Le bras 22 est fonctionnellement analogue au bras 21 décrit en rapport notamment avec les figures 18 et 19. La fonction de rotule mécanique 4 assurée précédemment est assurée ici par la liberté pour le bras 22 de pivoter selon deux axes X et Z perpendiculaires visibles sur la figure 24. L'axe vertical Z de pivotement du bras de transfert est aussi visible sur la figure 43 qui représente une même barge 31 et un bras de transfert 22' pour lequel toute la partie inférieure est identique à celle du bras 22. La plus courte branche 22B du L que forme le bras 22 est sensiblement cylindrique et est montée pivotante selon l'axe X sensiblement horizontal du cylindre sur un premier support 31A qui est lui-même monté pivotant selon l'axe Z sensiblement vertical sur un second support 31 B fixé à la barge 31. Des moyens de roulement 37 et 38 sont prévus pour permettre ces pivotements.

L'axe de visée V de la branche principale 22A du bras de transfert 22 est ainsi orientable verticalement ainsi qu'en azimut en agissant d'une part sur un vérin 86 et d'autre part sur une roue dentée 129 adaptée à entraîner en rotation le premier support 31A comme représenté sur la figure 43. Cette branche principale 22A comprend une partie télescopique identique à celle du bras 21 précédent. L'amplitude de débattement angulaire vertical de l'axe V est préférablement de l'ordre de 10 à 30 degrés, afin de limiter le vrillage de la nappe 12 lorsque l'ensemble flottant 13 s'écarte de sa position verticale pour suivre le pivotement du connecteur femelle 5'B. L'amplitude de débattement angulaire azimutal est aussi préférablement de l'ordre de 10 à 30 degrés, car le déplacement en rotation de l'ensemble flottant 13 autour de l'axe Z doit être limité pour ne pas être gêné par la coque de la barge ou encore par le marchepied 31J.

La barge 31 est vue de dessus sur la figure 27, dans une phase d'approche en marche arrière des moyens de butée 64 et 14' respectivement par les deux fourches de guidage d'approche 31 G1 et 31 G2. Au moins une fourche est associée à un élément de verrouillage 31 K permettant de bloquer un moyen de butée 64 ou 14' dans le fond de la fourche une fois la barge 31 positionnée en butée comme représenté sur la figure 28.

Les moyens de guidage vertical et de butée 14' consistent ici en une barre verticale qui présente une extrémité supérieure fixée au quai et une extrémité inférieure maintenue fixe par un système 63 de poutres fixées à un pilier du quai, comme visible aussi sur la figure 30. Les moyens de butée 64 sont analogues et sont positionnés de façon à ce que la distance qui les sépare des moyens de butée 14' corresponde à la distance entre les fonds respectifs des deux fourches 31G1 et 31G2. Par ailleurs, du même côté que la branche 22B du bras de transfert, la coque de la barge 31 est complétée par un déflecteur hydrodynamique 31 H, dont la forme est mieux visible sur la figure 43, et dont la fonction est analogue à celle du déflecteur 33 du dispositif d'embarcation 131 commenté précédemment en rapport avec la figure 21.

Comme visible sur la figure 43, un bras pivotant 33' est disposé à l'arrière du un déflecteur hydrodynamique 31H. Ce bras 33' est analogue au bras pivotant 33A du dispositif d'embarcation 131, et est adapté à être inséré dans un élément d'attache fixé sous le connecteur immergé 55. Il est ainsi possible de bloquer l'extrémité inférieure de l'ensemble flottant 13 après avoir connecté cet ensemble au bras de transfert 22 ou 22', tout en autorisant une rotation de cet ensemble 13 de l'ordre de 300° autour de son axe A2 sensiblement vertical. Ceci permet le transport de la nappe constituant la seconde partie mobile 12 en limitant les contraintes mécaniques exercées sur le premier ensemble de connexion 5" du fait de la résistance hydrodynamique de cette partie mobile 12, tout en conservant une grande amplitude angulaire de pivotement de cette nappe 12 sous la barge 31.

La figure 30 représente schématiquement dans un plan vertical les différentes parties du dispositif de câble sous-marin de puissance ainsi que les différents éléments de connexion utilisés dans le mode de réalisation représenté sur la figure 22. Les première et seconde parties mobiles 11" et 12" du dispositif de câble sous-marin représenté sur la figure sont celles qui sont dédiées à la connexion avec un navire qui accosterait avec sa proue dirigée vers la gauche de la figure. Les autres parties mobiles 11 et 12 du dispositif de câble ne sont pas visibles car elles prolongent la partie fixe du dispositif loin après la partie fixe 10 de câble à gauche du connecteur sous-marin 145 sur la figure. La partie fixe 10 de câble à droite de la figure se prolonge le long du quai et peut éventuellement remonter en pente douce si l'interface 200 qui relie cette nappe 10 de câbles sous-marins aux câbles souterrains reliés à l'installation électrique du terminal se situe à une faible profondeur d'immersion.

Les première et seconde parties mobiles 11" et 12" sont représentées ici dans deux positions a) et b) correspondant respectivement à un niveau de la marée relativement haut et à un niveau au plus bas. Deux traits horizontaux en pointillés correspondant aux niveaux extrêmes de la mer définissent l'amplitude maximale HM de la marée. Etant donné que le second ensemble de connexion pivotant 7 et l'ensemble flottant 13 sont adaptés à flotter le long des moyens de guidage vertical respectivement 14 et 14', la seconde partie mobile 12" reste sensiblement horizontale quel que soit le niveau h0 de la mer. Des flotteurs 15 immergés sont prévus pour quasiment annuler de par leur poussée d'Archimède l'effet de traction sur les extrémités de cette partie 12" dû au poids de la nappe. Au moins un flotteur 15" émergé à la surface de l'eau est ici prévu pour seconder les flotteurs 15, et pour permettre de visualiser la position de cette nappe 12" en regardant la surface de l'eau depuis la barge lors du transport de la nappe.

La première partie mobile 11" est quant à elle flexible dans le plan vertical de la figure. D'autres flotteurs 15 ont un volume adapté et sont répartis le long de la nappe qui constitue cette partie 11" de façon à quasiment annuler les contraintes dues au poids de la nappe, ce qui permet que le rayon de courbure de la nappe reste suffisamment grand pour ne pas risquer de dépasser la limite de flexion autorisée pour cette nappe.

La figure 31 représente schématiquement une vue de dessus du système de transfert d'énergie selon l'invention en rapport avec les figures 8, 9 et 10. L'ensemble support 65 comprend des rails 93 sensiblement parallèles à la partie horizontale 24A du bras de transfert 24, ce bras 24 étant suspendu à un chariot 92 apte à être déplacé en translation sur les rails 93 par un moteur 90. Un opérateur installé dans le poste de commande 95 peut commander l'actionnement du moteur 90 ainsi que celui d'un vérin 72 permettant de faire pivoter le bras 24 comme indiqué par la flèche en arc de cercle.

La figure 32 représente schématiquement une vue de dessus éclatée des parties mobiles du dispositif. La partie b) comprenant le dispositif transporteur 46 est mobile uniquement à l'horizontale le long des moyens de guidage horizontal 61 sur le quai. La structure référencée 71 qui porte les moyens de guidage vertical 70 porte aussi une échelle 96 pour qu'un opérateur puisse passer du quai au poste de commande 95. La partie c), mobile verticalement par rapport à la partie b), peut être installé dans cette dernière en étant portée par une grue de façon à introduire dans les rails 70 les roues 76 de l'organe ascenseur 66, et la première partie mobile 11 du dispositif de câble est ensuite raccordée au bras 24.

La partie a) de la figure 33 représente schématiquement une vue en trois dimensions du raccordement de la première partie mobile 11 du dispositif de câble à la partie mâle 7'A de l'ensemble de connexion pivotant 7' visible sur les figures 37 et 38. Cette partie mâle 7'A sensiblement tronconique forme l'extrémité supérieure d'un bras plongeur 7'C raccordé au connecteur immergé 55. La hauteur de ce bras plongeur 7'C est prévue suffisante pour permettre un certain déplacement relatif du niveau h0 de la mer sans devoir lever ou descendre trop fréquemment l'organe ascenseur 66 qui supporte indirectement le bras plongeur pour éviter une mise à l'air de la nappe 2 ou une immersion de l'ensemble de connexion 7'. Ainsi, les moyens de levage de l'organe ascenseur 66 peuvent être actionnés seulement par périodes afin de corriger la position verticale du bras de transfert 24 en fonction de la marée et/ou du ballastage du navire.

La partie b) de la figure 33 représente schématiquement une vue en trois dimensions du connecteur femelle 7'B de l'ensemble de connexion pivotant 7'. Ce connecteur 7'B est raccordé à la base de la partie sensiblement verticale 24C du bras de transfert 24 par l'intermédiaire d'un ensemble 18 de connecteurs débrochables, de façon étanche à l'air. Le pivotement relatif possible entre les connecteurs mâle et femelle est préférablement supérieur ou égal à 90°.

La figure 34 représente schématiquement le système de transfert d'énergie en rapport avec la figure 31, une fois l'état de connexion du système établi grâce au raccordement du connecteur de puissance 8 avec le connecteur complémentaire 101. A partir la position du bras de transfert 24 visible sur la figure 31, l'état de connexion est obtenu par une translation du bras 24 provoquée par le déplacement en translation du chariot 92. Afin d'ajuster la position du connecteur de puissance 8 pendant la phase de préparation à l'introduction dans le connecteur complémentaire 101, un opérateur peut corriger l'azimut du bras 24 et la hauteur du connecteur 8 en agissant respectivement sur le vérin 72 ainsi que sur un autre vérin 94 qui permet au bras 24 de pivoter dans un plan vertical autour d'une barre 73 comme visible sur les figures 36 et 37. Une fois, la connexion établie, ces deux vérins sont désactivés et le chariot 92 de support du bras 24 est débrayé par rapport au moteur 90 afin d'être libre en translation sur les rails 93 qui supportent ce chariot. Ainsi, le connecteur 8 est libre de suivre dans une certaine mesure le mouvement du connecteur complémentaire 101 qui correspond au mouvement relatif du navire par rapport au quai.

Le mouvement relatif du navire amarré au quai est généralement de l'ordre de un à deux mètres dans un plan horizontal, et peut être bien plus important dans la direction verticale en fonction de la marée. La longueur de la partie 24A du bras 24 dépend de la configuration du quai et du positionnement du connecteur complémentaire 101 sur le navire, mais on peut considérer qu'elle sera généralement comprise entre cinq et dix mètres. Le pivotement du bras 24 dans un plan vertical autour d'une barre 73 n'est prévu ici que sur une amplitude de débattement angulaire de l'ordre de 5 à 20 degrés, et n'est donc généralement pas suffisant pour permettre au connecteur de puissance 8 de suivre librement le mouvement du connecteur complémentaire 101 pendant une variation du niveau de la mer qui dépasserait deux à trois mètres. Ainsi, dans le cas d'une marée dépassant typiquement deux à trois mètres, il est généralement nécessaire de lever ou de descendre au moins une fois l'organe ascenseur 66 pendant la durée de l'état de connexion du système de transfert d'énergie afin de rétablir une position sensiblement horizontale pour la partie 24A du bras 24.

La figure 35 représente schématiquement le système de transfert d'énergie en rapport avec la figure précédente, dans une position de rangement du bras de transfert qui a été commentée à la description de la figure 9.

La figure 36 représente schématiquement en détail une vue partielle du système de transfert d'énergie dans la position représentée sur la figure 31. Le bras 24 est ici dans une position reculée qui correspond au recul du chariot 92 jusqu'à arriver en butée sensiblement à une extrémité des rails 93. Dans cette position reculée, la partie sensiblement verticale 24C du bras de transfert 24 est ici approximativement coaxiale avec l'axe A4 vertical des moyens de pivotement 67 de l'ensemble support 65. Le chariot 92 comporte une barre 73 pivotante disposée perpendiculairement aux rails 93, cette barre étant associée à un ensemble 77 de poutres telles que 77A et 77B qui porte le bras de transfert 24 afin de permettre à ce bras un certain degré de pivotement dans un plan vertical. Le vérin 94 est solidaire en mouvement du chariot 92 et possède une tige reliée à la poutre 77A pour contrôler un certain pivotement de l'ensemble 77 de poutres et donc du bras de transfert 24 dans un plan vertical. Ceci permet d'ajuster l'élévation du connecteur de puissance 8 lors d'une opération de connexion rapide au connecteur complémentaire 101 sur le navire.

Facultativement, ce vérin 94 peut être équipé d'un capteur de position de sa tige, qui mesure en fait l'écart de position par rapport à la position qui correspond à l'horizontalité de la partie 24A du bras de transfert 24. Ce capteur est associé à un comparateur à deux seuils adapté à transmettre une commande aux moyens de levage 68. Durant l'état de connexion du système de transfert, le vérin 94 est désactivé de façon à laisser libre le mouvement de sa tige. Si l'écart de position positif ou négatif de cette tige dépasse un des deux seuils, une commande est envoyée aux moyens de levage 68 afin de lever ou de descendre l'organe ascenseur 66 d'une hauteur prédéfinie pour ramener à l'horizontale la partie 24A.

Un câble de traction 69 relie les moyens de levage 68 à l'organe ascenseur 66 et passe par une poulie 98 montée au sommet de la structure verticale 71. Un autre câble de traction 91 relie l'arbre du moteur 90 au chariot 92 en passant par deux poulies 98'.

La figure 37 représente schématiquement en détail une vue partielle du système de transfert d'énergie de la figure précédente, dans une position correspondant à la fin de la translation du connecteur de puissance 8 vers le connecteur complémentaire sur le navire. Le bras de transfert 24 est dimensionné de façon à ce que la différence de hauteur entre le connecteur de puissance 8 et l'ensemble de connexion pivotant 7' corresponde à la hauteur moyenne du connecteur 101 du navire par rapport au niveau de la mer. Ainsi, il est préférable que tous les navires destinés à être connectés au bras de transfert 24 aient une même hauteur normalisée du connecteur 101 par rapport à la ligne de flottaison moyenne du navire. Autrement, on peut prévoir de rallonger la partie 24C du bras 24 et d'avoir un ensemble de connexion pivotant 7' étanche à l'eau, ou encore de laisser en permanence au dessus de l'eau l'ensemble 7' et d'augmenter la hauteur du bras plongeur 7'C.

Le chariot 92 qui soutient l'ensemble 77 de poutres est tiré vers l'avant des rails 93 grâce à la commande du moteur 90 pour exercer une traction sur le câble 91 dans le sens indiqué par la flèche. Du fait que la partie sensiblement verticale 24C du bras de transfert 24 est raccordée au connecteur immergé 55 par l'intermédiaire de l'ensemble de connexion pivotant 7', la nappe 2 de câbles formant la partie mobile 11 du dispositif de câble sous-marin s'écarte du quai avec le bras 24 comme représenté sur la figure 34. Par ailleurs, de façon optionnelle, un système émetteur laser 119 peut être installé sur l'ensemble support 65 de façon à viser une mire non représentée installée à côté du connecteur 101 du navire.

La figure 38 représente schématiquement en détail une vue partielle de l'ensemble de connexion pivotant 7' déjà décrit en rapport avec la figure 33.

La figure 39 représente schématiquement une vue partielle en trois dimensions de la structure de la nappe 2 déjà décrite en rapport avec les figures 2b et 2c.

La figure 40 représente schématiquement le système de transfert d'énergie selon l'invention en rapport avec les figures 8, 9 et 10, sur toute sa hauteur émergée et immergée, vu depuis la mer face au quai. Quatre positions a), b), c) et d) du système sont représentées.

La position a) correspond à une phase intermédiaire de pivotement du bras 24 entre les deux positions représentées respectivement sur les figures 9 et 10. Le transporteur 46 est amené ici quasiment à l'extrémité du rail 61 à gauche sur la figure 40, et la nappe 2 qui constitue à la fois la partie mobile 11 et la partie fixe 10 est proche de son extension maximale en fonction du rayon de courbure minimum autorisé. Le bras 24 est en pivotement vers une position sensiblement perpendiculaire au quai pour viser le connecteur 101 du navire. Le niveau de la mer pour la position a) est le niveau h0 représenté. Préférablement, un filin relie le poste de commande 95 au flotteur 15 situé le plus haut sur la nappe 2. Ainsi, lorsque l'ensemble support 65 est relevé pour pouvoir pivoter le bras 24 dans sa position de rangement comme représenté à la position c), ce filin supporte l'essentiel du poids de la partie émergée de la nappe et le rayon de courbure de la nappe peut rester supérieur au minimum autorisé.

La position b) correspond à une phase intermédiaire de pivotement du bras 24 analogue à celle représentée à la position a), mais à un instant où le niveau de la mer est le niveau h1 le plus bas possible.

Les positions c) et d) sont aussi représentées à un instant où le niveau de la mer est le niveau h1 le plus bas possible. A la position c), l'ensemble support 65 est maintenu relevé et le bras 24 est disposé dans sa position de rangement. Une translation du transporteur 46 vers l'extrémité du rail 61 à droite sur la figure permet d'amener le connecteur de puissance 8 porté par le bras de transfert 24 en regard d'un poste d'entretien 79 surélevé disposé sur le quai 50. Avantageusement, des plates-formes d'entretien 99 et 99' peuvent être fixées au quai pour permettre à un opérateur de venir contrôler l'état de l'extrémité supérieure de la nappe 2 ainsi que l'ensemble de connexion pivotant 7'.

Préférablement, une glissière 75 fixée aux piliers 74 du quai 50 est disposée quelques mètres sous la plate-forme du quai et est adaptée à permettre à la structure 71 de rester verticale tout en exerçant un appui sur cette glissière.

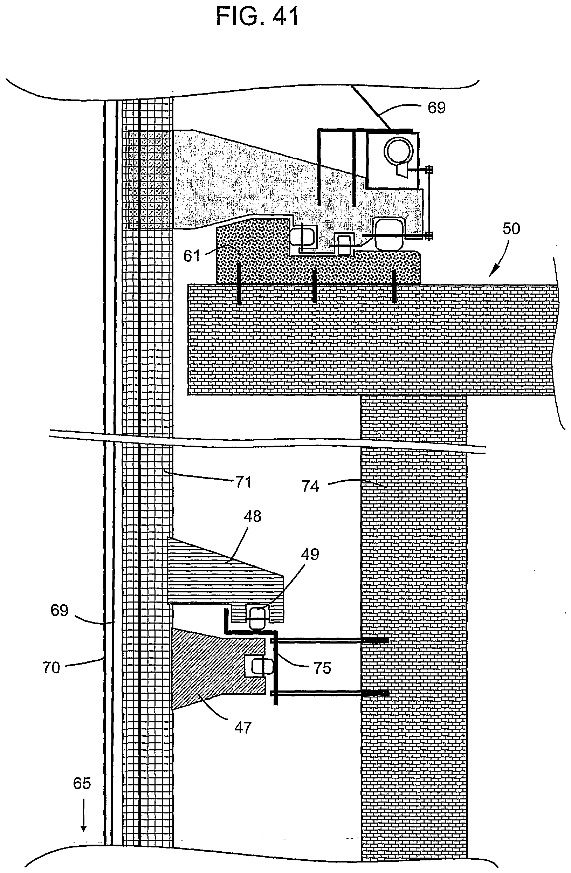

La figure 41 représente schématiquement une vue en coupe transversale de la glissière 75 complétée par la projection d'autres éléments dans le plan de coupe. Un bras en équerre 48 parallèle à la glissière 75 est fixé à la structure verticale 71 et comporte une roue 49 prévue pour exercer un certain appui sur la glissière particulièrement lorsque le bras de transfert 24 n'est pas perpendiculaire au quai. Un tel bras 48 est visible aussi sur la figure 40, et pourrait être complété par un deuxième bras symétrique. Une pièce 47 est fixée à la structure 71 et comporte une roue qui est normalement en appui permanent contre la glissière 75.

La figure 42 a été décrite précédemment en rapport avec la figure 1.

La figure 43 représente schématiquement une barge 31 identique à celle des figures 22, 24 et 27, mais qui porte un bras de transfert 22' dont la partie supérieure est différente du bras 22 décrit précédemment. La partie supérieure 22'A de ce bras 22' n'est pas télescopique, et présente une courbure telle que l'axe de révolution du connecteur de puissance 8 est sensiblement horizontal. Il est entendu que le connecteur complémentaire 101 non représenté, disposé à la poupe du navire 100, présente lui aussi un axe de révolution sensiblement horizontal. Lorsque la barge 31 s'approche de la poupe du navire, un faisceau laser est émis par un émetteur 119 vers une mire sur le navire et permet au conducteur de la barge d'ajuster la direction d'approche. L'émetteur 119 est monté par exemple sous le capot 85.

Un système de deux bras horizontaux parallèles 120, dits bras tampons, permet de stabiliser la barge 31 en appui contre la coque à la poupe du navire, alors que le connecteur de puissance 8 est sensiblement devant l'ouverture évasée du connecteur complémentaire 101. Deux filins 123 fixés à la barge peuvent être tirés depuis le navire pour stabiliser la barge 31. Un bras tampon 120 comprend une pièce tampon 121 par exemple revêtue de caoutchouc et montée à l'extrémité d'une tige actionnée par un vérin 122. Si nécessaire, un actionnement du vérin 86 et/ou d'un moteur qui entraîne la roue dentée 129 permet de corriger l'élévation et/ou l'azimut du connecteur de puissance 8. Une fois que le connecteur 8 est bien positionné face à l'ouverture du connecteur complémentaire 101, les deux vérins 122 sont relâchés simultanément pour rapprocher de la barge les deux pièces tampons 121, ce qui a pour effet de rapprocher la barge du navire grâce au propulseur de la barge ou grâce à une traction exercée sur les deux filins 123. Le connecteur 8 est ainsi introduit dans le connecteur complémentaire 101. La pression de contact peut être assurée par des filins 123' tirés depuis le navire avec une force calibrée et attachés à une pièce 128 fixée sur la partie supérieure 22'A du bras 22'.

La figure 44 représente schématiquement une barge 31 identique à celle des figures 22, 24 et 27, mais qui porte un bras de transfert télescopique 22 dont la partie supérieure 22A aboutit à deux parties télescopique 22D portant chacune un connecteur de puissance 8". Deux connecteurs complémentaires de puissance 101 sont alors disposés à la poupe du navire et reliés aux équipements électriques 110 à bord du navire. Chaque partie télescopique 22D comporte par exemple deux conducteurs électriques de puissance électriquement isolés entre eux. Les quatre conducteurs de puissance de la partie 22A sont donc scindés en deux paires de conducteurs respectivement sur les deux parties télescopique 22D qui sont portées par une partie commune 22C raccordée à la partie 22A. Préférablement, un connecteur pivotant 22E selon l'axe V permet à la partie commune 22C de pivoter avec un angle relativement faible pour permettre un certain roulis de la barge par rapport au navire une fois la connexion établie. Un tel système à plusieurs connecteurs de puissance 8" permet d'augmenter la puissance électrique qui transite par le bras de transfert tout en limitant le diamètre des têtes sphériques formant ces connecteurs.

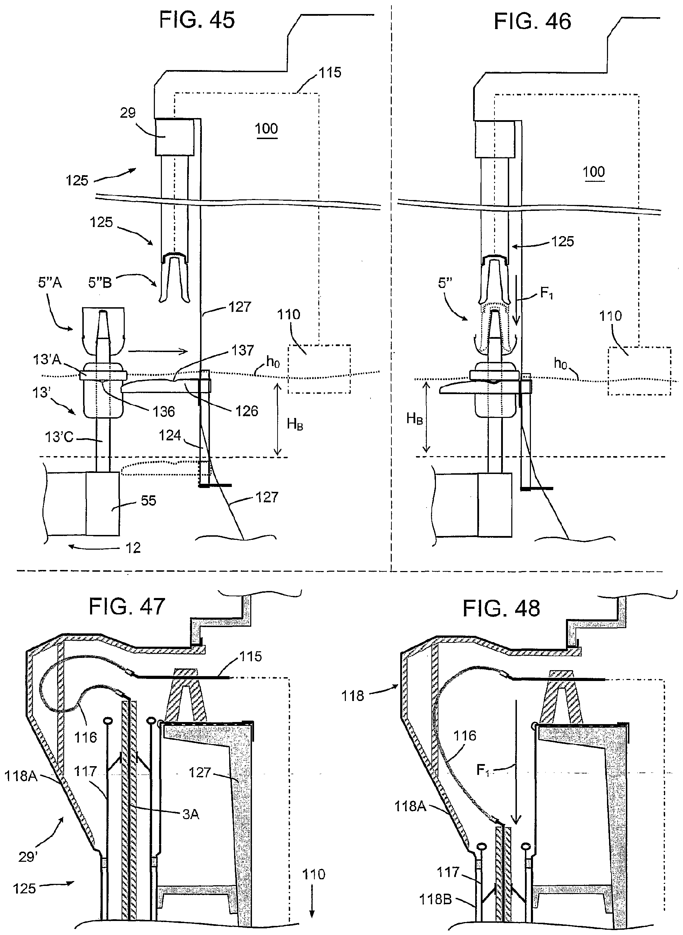

La figure 45 représente schématiquement un autre mode de réalisation d'un système de transfert d'énergie selon l'invention, dans lequel un premier bras de transfert 125 est monté sensiblement en position verticale sur la poupe du navire 100 et présente une partie supérieure électriquement reliée aux équipements électriques 110 à bord du navire. Ce premier bras 125, ou bras de transfert principal, présente une extrémité inférieure formée par un connecteur de puissance 5"B, par exemple un connecteur femelle de forme complémentaire à un connecteur mâle tronconique. Ce connecteur 5"B possède une structure analogue à celle du connecteur 5"B monté sur le bras de transfert 22 dans le dispositif précédent visible sur la figure 24, à ceci près que le fond du connecteur est ici fermé comme pour le connecteur femelle analogue 7'B décrit en rapport avec notamment les figures 33 b) et 38. L'ensemble de connexion 5" doit être ici de type rapide, et le connecteur 5"B ne possède donc pas de partie adaptée à recevoir des moyens de vissage pour assurer la pression de contact car de tels moyens empêcheraient une déconnexion mutuelle rapide des connecteurs mâle et femelle.

Le connecteur mâle tronconique 5"A est monté sur un ensemble flottant 13' analogue à l'ensemble flottant 13 décrit précédemment notamment en rapport avec la figure 24. Cet ensemble flottant 13' ne comprend pas ici de moyens de flottaison variable, car la connexion mutuelle des connecteurs mâle et femelle 5"A et 5"B est assurée par une translation vers le bas du bras de transfert principal 125. Le bras vertical 13'C de l'ensemble flottant 13' supporte le connecteur mâle 5"A qui est complémentaire au connecteur femelle 5"B porté par le premier bras de transfert 125. Il relie électriquement ce connecteur mâle 5"A au connecteur immergé 55 raccordé à une seconde partie mobile 12 du dispositif de câble 1, et peut être considéré comme un second bras de transfert du système selon l'invention. La hauteur de ce second bras de transfert 13'C est prévue suffisante pour accepter une certaine variation HB du niveau h0 de la ligne de flottaison du navire, cette variation étant due à la différence de ballastage du navire en fonction du niveau de ses cuves de gaz naturel liquéfié. Sur la figure, le niveau h0 de la ligne de flottaison correspond ici à un navire à quai avec ses cuves pleines. Au fur et à mesure du vidage des cuves, le navire va remonter par rapport à ce niveau h0. La hauteur du second bras de transfert 13'C est donc prévue pour que le connecteur 55 et la nappe de câbles formant la partie mobile 12 restent toujours immergés.

Un support 126 adapté à recevoir l'ensemble flottant 13' est monté sur la coque 127 à la poupe du navire, sous le bras de transfert principal 125, et son système 124 d'attache à la coque 127 est prévu réglable en hauteur pour que ce support 126 soit positionné avec sa surface supérieure sensiblement au niveau de l'eau avant de recevoir l'ensemble flottant 13'. Ce support 126 est par exemple constitué d'une pièce en forme de U, l'écartement entre les deux branches du U étant prévu pour permettre l'introduction d'un flotteur de l'ensemble flottant 13'. Avantageusement, cet ensemble flottant 13' comprend une collerette 13'A de diamètre supérieur à l'écartement du U, cette collerette pouvant pivoter librement par rapport à l'ensemble.

Une embarcation 132, représentée sur la figure 50, permet de déplacer la seconde partie mobile 12 du dispositif de câble sous-marin pour amener l'ensemble flottant 13' devant le support 126 en U et introduire cet ensemble entre les deux branches du U. Avantageusement, la collerette 13'A comprend deux ergots arrondis 136 diamétralement opposés adaptés à être calés dans deux trous 137 du support 126 en U, de façon à procurer une position stable de l'ensemble flottant 13' dans laquelle les axes des premier et second bras de transfert respectivement 125 et 13'C coïncident au moins approximativement. Dans cette position représentée sur la figure 46, le capot de protection du connecteur mâle a été retiré, et l'ensemble flottant 13' est laissé libre de pivoter sur lui-même de façon à ce que la nappe 12 adopte naturellement une orientation tendant à minimiser sa flexion dans le plan horizontal. Le bras de transfert principal 125 peut être abaissé pour réaliser l'ensemble de connexion 5". Il n'est pas nécessaire que l'ensemble flottant 13' puisse pivoter sur lui-même pendant le transfert d'électricité. En effet, comme représenté sur la figure 50, la nappe 12 ou 12" a déjà une position tendant à minimiser sa flexion.

L'abaissement du bras de transfert 125 par une translation selon la flèche F1 est réalisé par exemple par des vérins, et il est prévu de maintenir une poussée constante du bras 125 vers le bas afin d'assurer la pression de contact nécessaire dans l'ensemble de connexion 5". Pour effectuer une déconnexion rapide à la fin du transfert d'électricité, l'embarcation 132 revient à la poupe du navire pour maintenir l'ensemble flottant 13' tandis que le bras 125 est remonté. L'embarcation 132 repart avec l'ensemble flottant 13' et la nappe 12 ou 12" pour ranger cet ensemble sous la bordure du quai comme représenté sur la figure 50. Pour effectuer une déconnexion rapide en cas de départ d'urgence du navire, on peut prévoir un automatisme qui remonte systématiquement le bras 125 quelques secondes après l'actionnement en marche avant de l'ensemble propulseur du navire, d'une hauteur suffisante pour dégager l'ensemble 13' de son support en U 126.

La fonction télescopique de la partie supérieure du bras de transfert principal 125 peut être réalisée par un ensemble coulissant à contacts glissant tel que l'ensemble 29 mentionné précédemment. Toutefois, afin de limiter le coût d'un tel système, il est aussi possible de réaliser cette fonction télescopique grâce à des câbles de puissance flexibles.

Un exemple de réalisation d'un système électrique télescopique 29' avec des câbles de puissance 116 flexibles est représenté schématiquement sur les figures 47 et 48.

La figure 47 représente schématiquement le système télescopique 29' dans son état relevé. Chaque conducteur électrique fixe 115 relié d'un côté aux équipements 110 du navire est relié d'un autre côté à un câble de puissance 116 flexible disposé dans une enveloppe métallique 118 portée par la coque 127 à la poupe du navire. L'extrémité inférieure du câble 116 est reliée à une barre conductrice gainée 3A contenue dans un caisson 117 adapté à coulisser à l'intérieur de la partie inférieure 118B de l'enveloppe métallique 118 qui forme le bras de transfert principal 125. L'enveloppe métallique 118 est étanche à l'ambiance du terminal et est remplie d'une atmosphère contrôlée. La paroi intérieure de la partie supérieure 118A de cette enveloppe est recouverte d'une couche de matériau isolant électrique afin d'éviter tout amorçage d'arc entre un câble de puissance 116 et cette paroi.

La figure 48 représente schématiquement le système télescopique 29' dans son état abaissé. Le caisson 117 et la barre conductrice 3A ont subi une translation vers le bas selon la flèche F1 et la boucle formée par le câble de puissance 116 est à son maximum d'ouverture. On peut noter que lorsqu'un courant de puissance parcoure cette boucle, les forces électrodynamiques tendant à ouvrir la boucle de courant permettent de renforcer la poussée vers le bas du caisson 117 et donc la pression de contact dans l'ensemble de connexion 5". Quatre câbles de puissance 116 peuvent être installés en parallèle dans une même enveloppe 118.

La figure 49 représente schématiquement un autre mode de réalisation du second ensemble de connexion qui relie électriquement une première partie mobile 11 ou 11" flexible verticalement du dispositif 1 de câble sous-marin de puissance et une seconde extrémité d'une seconde partie mobile 12 ou 12"du dispositif de câble sous-marin. Le second ensemble de connexion 146 représenté ici diffère du second ensemble de connexion 7 précédemment décrit tout d'abord en ce qu'il ne possède pas de connecteurs pivotants. Ainsi, la direction d'une seconde partie mobile 12 ou 12"au départ de cet ensemble de connexion 146 reste sensiblement alignée avec la direction en projection horizontale d'une première partie mobile 11 ou 11", comme visible sur la figure 50. Ce dispositif nécessite donc plus de longueur de la nappe 12 ou 12" de câbles en comparaison avec le dispositif de câble visible sur la figure 22, pour assurer une même amplitude maximale D1 de positionnement du premier ensemble de connexion. Toutefois, le second ensemble de connexion 146 n'étant pas pivotant, il peut être rendu étanche à l'eau sans difficulté majeure et peut ainsi être immergé, ce qui évite de devoir faire circuler un gaz inerte au niveau des contacts. Sur la figure 49, il est visible que le boîtier de connexion entre le nappe 11 et la nappe 12 est en permanence immergé à une certaine distance du niveau h0 de la mer grâce à un flotteur portant ce boîtier et adapté à suivre la marée le long de moyens de guidage 14 selon la direction verticale.

La figure 50 représente schématiquement un mode de réalisation d'un système de transfert d'énergie selon l'invention qui combine le mode de réalisation représenté sur la figure 45 pour ce qui est des bras de transfert avec le mode de réalisation représenté sur la figure 49 pour ce qui est du dispositif de câble sous-marin de puissance. Il est à remarquer que l'angle que fait la nappe 12 ou 12" de câbles sous-marins horizontaux avec l'axe du navire au niveau de la poupe du navire peut varier approximativement de 0° à plus de 90°, et qu'il est donc utile d'avoir un premier ensemble de connexion 5" pour lequel le connecteur mâle est adapté à être positionné dans le connecteur femelle selon une position de pivotement quelconque entre 0° et au moins 90°. Il n'est pas nécessaire en pratique de dépasser environ 120°. Autrement, si on souhaite que l'extrémité de la nappe 12 ou 12" au niveau d'un premier ensemble de connexion 5" soit toujours dans l'axe du navire, il faut augmenter substantiellement la longueur de la nappe pour conserver un rayon de courbure de cette nappe au dessus du minimum requis.

Les figures 51 et 52 représentent schématiquement un autre mode de réalisation d'un premier ensemble de connexion. Ce premier ensemble de connexion 135 est visible sur la figure 53. Il diffère de l'ensemble de connexion 5" précédemment décrit principalement en ce que le connecteur femelle 135B renferme un électroaimant 105 alimenté par exemple en courant continu et disposé de façon coaxiale avec l'axe de révolution du connecteur. Le principe est le même que pour l'électroaimant 105 précédemment mentionné en rapport avec la figure 19. L'objectif est d'assurer la pression de contact grâce à une force d'attraction électromagnétique entre les deux connecteurs 135A et 135B. Le connecteur mâle 135A comprend donc un disque ferromagnétique 165 pour le bouclage du champ magnétique dans la position de raccordement représentée sur la figure 52.

Le raccordement entre les deux connecteurs 135A et 135B est réalisé comme précédemment par une translation vers le bas du bras de transfert principal 125, l'ensemble flottant 13' étant maintenu sous le bras 125 par exemple à l'aide d'un système de bras de guidage installé sur l'embarcation 132 servant au déplacement de la partie mobile 12. Une fois l'électroaimant 105 alimenté, l'embarcation 132 peut se retirer. Le débattement en translation verticale du bras de transfert principal 125 peut être prévu suffisant pour correspondre au moins à la variation HB du niveau h0 de la ligne de flottaison du navire. De ce fait, le second bras de transfert vertical 13'C sur l'ensemble flottant 13' peut être prévu relativement court, puisque l'élévation de ce bras 13'C par rapport au niveau h0 est alors ajustée en déplaçant verticalement le bras de transfert principal 125.

Comme représenté schématiquement sur la figure 53, un capteur 139 du niveau h0 de la ligne de flottaison du navire est adapté à transmettre une information à un dispositif de commande 140 pour l'actionnement en translation du bras de transfert principal 125. Dans la phase représentée sur la figure préalable au raccordement des deux bras de transfert 125 et 13'C, le capot supérieur de protection 13'E du connecteur mâle 135A est retiré du capot inférieur 13'D et rangé dans l'embarcation 132 non représentée. L'ensemble flottant 13' est poussé contre un élément de butée 138 fixé à la coque 127 du navire et prévu pour permettre le positionnement du connecteur mâle 135A au moins approximativement de façon coaxiale sous le connecteur femelle 135B, lorsque le capot inférieur 13'D est en butée contre un repère marqué sur l'élément 138. L'opération de translation du bras 125 et de raccordement des deux connecteurs peut alors avoir lieu.

Pour effectuer une déconnexion rapide en cas de départ d'urgence du navire, on peut prévoir un automatisme qui coupe l'alimentation de l'électroaimant 105 quelques secondes après l'actionnement en marche avant de l'ensemble propulseur du navire. Même en l'absence ou en la défaillance d'un tel automatisme, la forme tronconique du connecteur mâle 135A est adaptée à permettre qu'une traction de la nappe 12 sur le second bras de transfert 13'C résulte en un glissement et un pivotement du connecteur mâle dans le connecteur femelle et en une séparation des deux connecteurs.

Afin notamment d'éviter une chute du connecteur mâle 135A en cas de coupure accidentelle de l'alimentation de l'électroaimant 105 pendant un état de raccordement, il peut être prévu des moyens de maintien mécanique adaptés à fournir une force de maintien supérieure au poids apparent de l'ensemble flottant 13'. De tels moyens de maintien mécanique sont par exemple constitués par des doigts flexibles 13'J montés sur l'ouverture du capot inférieur 13'D du connecteur mâle 135A, comme représenté sur la figure 54, et adaptés à coopérer avec une surface périphérique externe inclinée du connecteur femelle 135B afin d'exercer une force de rappel qui tend à rapprocher les deux connecteurs lorsque ceux-ci sont raccordés.

Sur la figure 54, l'électroaimant 105 est donc secondé par des moyens de maintien mécanique, et son diamètre peut ainsi être quelque peu diminué. Le connecteur mâle 135A de forme tronconique est ici prévu suffisamment large pour autoriser deux surfaces de contact annulaires 163 et 164 sur son sommet. Deux autres surfaces de contact 161 et 162 sont ici prévues à la même hauteur et couvrent chacune un secteur angulaire de l'ordre de 120°. En effet, comme expliqué précédemment en rapport avec la figure 50, le débattement angulaire utile pour le bras de transfert 13'C autour de son axe vertical est généralement de l'ordre de 90°. Compte tenu de l'angle de recouvrement entre un élément de contact tel que 172 sur le connecteur femelle et la surface de contact correspondante 162, il est possible d'avoir un contact électrique pour tout positionnement du bras de transfert 13'C dans les limites du débattement angulaire utile.

D'autre part, l'angle α représenté sur la figure est préférablement supérieur ou égal à 90° afin de ne pas gêner le pivotement du second bras de transfert 13'C dans un plan vertical et donc la déconnexion de l'ensemble 135 dans le cas d'un départ d'urgence du navire qui se traduit par une traction importante sur la nappe 12 dans une direction horizontale. Par ailleurs, il est représenté sur le connecteur mâle 135A des surfaces crénelées notamment entre deux éléments de contact adjacents tels que 161 et 164, de façon à allonger la ligne de fuite entre ces éléments.

Enfin, le bras de transfert principal 125 n'est pas nécessairement télescopique. La hauteur du second bras de transfert 13'C peut être prévue suffisante pour que l'ensemble de connexion 135 soit toujours hors de l'eau et le connecteur 55 toujours immergé pour tout niveau h0 de la ligne de flottaison du navire dans l'amplitude de variation HB. Le raccordement des deux connecteurs de l'ensemble de connexion 135 est alors réalisé en soulevant l'ensemble flottant 13' depuis une embarcation 132 et en appuyant le capot inférieur 13'D contre la périphérie de l'ouverture du connecteur femelle jusqu'à emboîter ce capot. L'électroaimant 105 est préférablement alimenté pendant cette opération de façon à parfaire l'emboîtement.

La figure 55 a été décrite précédemment en rapport avec les figures 1 et 6.

Les figures 56 et 57 ont été décrites précédemment au début de la présente description.

La figure 58 représente schématiquement un autre mode de réalisation d'un système de transfert d'énergie selon l'invention. Ce dernier mode de réalisation est relativement simple en comparaison avec les modes de réalisation précédents, dans le sens que le premier ensemble de connexion 135 n'est pas pivotant et peut par exemple comprendre deux connecteurs complémentaires de formes sensiblement rectangulaires. Les éléments de contact peuvent être constitués de cosses plates de puissance et de pinces électrodynamiques de puissance. D'autre part, le dispositif 1 de câble sous-marin comprend une partie fixe 10 et une seule partie mobile 11 ou 11" pour chaque extrémité du quai. Il n'y a au total que trois connecteurs sous-marins: un connecteur sous-marins 145 fixe analogue à celui représenté sur la figure 12, et deux connecteurs sous-marins 55 déplaçables reliant chacun une nappe de partie mobile 11 ou 11" à un second bras de transfert d'un ensemble flottant 13' comportant un connecteur complémentaire de puissance 135A. Les connecteurs sous-marins 55 sont prévus ici pour rester étanches même à une profondeur de l'ordre de vingt à trente mètres.

Dans une position quelconque a) ou b) telle que représentée pour une partie mobile 11 ou 11" du dispositif de câble sous-marin, l'ensemble flottant 13' à l'extrémité de cette partie 11 ou 11" comporte un capot étanche qui coiffe le connecteur complémentaire 135A et qui peut servir aussi à augmenter la flottabilité de l'ensemble 13'. Cet ensemble 13' est attaché à au moins un filin 148 qui est relié à un système de treuil non représenté situé sur le quai en passant par des moyens fixes de coulissement consistant par exemple en des anneaux et/ou des poulies sous-marines ancrés sur le fond marin. Sur la figure, un anneau 147 situé à gauche au niveau de l'extrémité du quai la plus proche de l'interface sous-marine 200 est disposé à côté de la nappe de câbles formant la partie fixe 10 du dispositif de câble sous-marin. Cette partie fixe 10 est posée sur le fond marin parallèlement à la direction du quai, de façon à ce que le bras de transfert principal 125 disposé sur un navire 100 se situe toujours relativement proche du plan vertical de courbure des parties mobiles 11 et 11". Un autre anneau 147 situé à droite au niveau de l'autre extrémité du quai est disposé approximativement à la verticale de l'ensemble flottant 13' lorsque la partie mobile 11 est dans la position a) dite de rangement.

Chaque extrémité du quai est équipée d'un système de treuil adapté à enrouler ou à dérouler au moins un filin 148 relié à un ensemble 13' comportant un connecteur complémentaire 135A, afin de pouvoir agir sur la hauteur d'immersion d'une partie mobile 11 ou 11" du dispositif de câble sous-marin par rapport au fond. Chaque partie mobile 11 ou 11" peut donc être déplacée dans un plan vertical entre dans la position a) de rangement et la position b) dite de flottaison, en actionnant le système de treuil correspondant. En l'absence de navire à quai, les deux parties mobiles 11 et 11" du dispositif de câble sous-marin sont généralement dans la position a) de rangement, et peuvent éventuellement être remontées dans la position b) de flottaison pour une révision occasionnelle par exemple de l'étanchéité du capot de protection du connecteur complémentaire 135A. Dans la position a) de rangement, un navire peut venir accoster le quai dans l'un ou l'autre des deux sens d'accostage possibles. La hauteur d'immersion des nappes de câbles 11 et 11" dans cette position a) est prévue suffisante pour que dans le cas de la marée la plus basse possible, les turbulences hydrodynamiques du navire ayant le plus fort tirant d'eau ne provoquent pas de contraintes excessives sur une nappe.

Une fois qu'un navire 100 est dans sa position d'accostage comme représenté sur la figure, le ou les filins 148 qui sont reliés à la partie mobile 11 ou 11" concernée par la connexion sont relâchés par le système de treuil correspondant, de façon à permettre à cette partie mobile de remonter jusqu'à sa position b) de flottaison. Dans le même temps, une embarcation motorisée 132 est amenée dans la zone de flottaison de l'ensemble 13' de façon à emmener cet ensemble vers le bras de transfert 125 du navire. Préférablement, les filins 148 sont détachés de l'ensemble 13' et attachés à une bouée 149 qui reste sur la zone de flottaison, pendant que l'embarcation 132 part avec l'ensemble 13' comme représenté dans une position c) de transport de la nappe mobile vers le navire.

Etant donné que le premier ensemble de connexion 135 n'est pas pivotant, le bras de transfert 125 du navire peut être incliné par rapport à la verticale. Dans la position d) de connexion du connecteur complémentaire 135A à un connecteur de puissance 135B situé à l'extrémité inférieure du bras de transfert principal 125, le transfert de courant peut s'effectuer entre le navire et le terminal. La nappe de câbles d'une partie mobile 11 ou 11" est prévue suffisamment solide, avec éventuellement un noyau 28 constitué d'un câble de traction par exemple en nylon, pour qu'une traction anormale sur cette nappe provoque une séparation des connecteurs de l'ensemble de connexion 135. Ainsi, la déconnexion rapide en cas de départ d'urgence du navire reste assurée.

La figure 58 représente schématiquement un connecteur sous-marin pivotant de technologie connue en particulier des documents de brevets EP 0 268 210 et JP 2004-104848. Bien qu'un tel connecteur ne soit pas directement adapté à faire transiter des courants de puissance, les principes de pivotement à rotule et d'étanchéité par un soufflet peuvent être repris pour concevoir un connecteur sous-marin de puissance permettant de raccorder un câble sous-marin à un boîtier étanche de connexion tel que référencé 147 sur la figure. L'angle que forme l'extrémité du câble sous-marin avec le boîtier peut varier d'une amplitude β supérieure à 90°. Un tel connecteur sous-marin pivotant pourrait par exemple être installé à la place du connecteur sous-marin non pivotant 146 du dispositif de câble représenté sur la figure 50.

Dans un système de transfert d'énergie électrique selon l'invention, les investissements nécessaires pour le dispositif de câble sous-marin de puissance et pour le ou les bras de transfert incluant les connecteurs de puissance ainsi que pour la ou les barges ou embarcations sont cependant raisonnables au vu des gains énergétiques obtenus par le terminal en récupérant de l'électricité fournie par le navire à quai.

Il a été décrit, en relation avec le mode de réalisation de la figure 20, des moyens d'inertage de la liaison électrique du connecteur du dispositif de câble de puissance et du connecteur complémentaire du navire.

Dans ce mode de réalisation, l'inertage est réalisé par la circulation d'un gaz inerte au niveau de la liaison électrique.

En variante, l'inertage est effectué au moyen de circulation de liquide, par exemple de l'eau, autour de la terminaison du dispositif de câble 1 mais à l'écart des conducteurs électriques.

Par exemple, l'extrémité du dispositif de câble comprend un manchon externe rigide ou semi-rigide définissant un conduit annulaire dans lequel circule du liquide. Dans ce cas, le connecteur complémentaire est placé à la poupe du navire. Le manchon externe s'étend sur toute la longueur émergée du câble garantissant ainsi une continuité de l'isolement par l'eau autour du câble même dans la partie du câble située au-dessus du niveau de la mer. La terminaison du dispositif de câble est ainsi isolée et en outre elle est refroidie par la circulation d'eau.

## Revendications

1. Système de transfert d'énergie électrique entre un navire (100) et une installation portuaire comprenant au moins un bras de transfert (20, 20', 21, 22, 22', 24, 125, 13'C) comportant plusieurs conducteurs électriques de puissance (3A, 3B, 3C) qui sont raccordés à au moins un connecteur de puissance (8, 8", 5"A, 5"B, 135A, 135B) formant une extrémité dudit bras, ledit au moins un connecteur de puissance étant adapté à être connecté à au moins un connecteur complémentaire (101, 5"A, 5"B, 135A, 135B) de puissance pour établir un état de connexion permettant de réaliser une liaison électrique de puissance entre l'installation portuaire et des équipements électriques (110) à bord du navire, **caractérisé en ce que** l'atmosphère est potentiellement explosive et **en ce qu'**il comprend en outre:
un faisceau (1) de câbles sous-marins de puissance reliant électriquement une sortie sous marine (200) de câbles électriques de l'installation portuaire audit bras de transfert,
au moins une canalisation pour faire circuler un gaz non explosif au moins au niveau de la jonction électrique entre un connecteur de puissance (8, 8", 5"A, 5"B, 135A, 135B) et son connecteur complémentaire (101, 5"A, 5"B, 135A, 135B), de façon à ce qu'un éventuel arc électrique au niveau de ladite jonction se produise exclusivement dans une ambiance inerte.

2. Système de transfert d'énergie selon la revendication 1, **caractérisé en ce que** le dispositif (1) de câble sous-marin de puissance comprend au moins une partie (10, 11, 11', '11", 12, 12") qui présente la forme d'une nappe (2) constituée d'un groupement de câbles électriques (25) dont au moins deux sont électriquement isolés entre eux, ladite nappe (2) étant adaptée à subir une certaine courbure.

3. Système de transfert d'énergie selon la revendication 1 ou 2, **caractérisé en ce que** le dispositif (1) de câble sous-marin comprend une partie (10) sensiblement fixe et au moins une partie (11, 11', 11", 12, 12") mobile par rapport à un quai (50) de l'installation portuaire.

4. Système de transfert d'énergie selon les revendications 3 et 2 prises en combinaison, **caractérisé en ce qu'**au moins une partie mobile (11, 11', 11") du dispositif (1) de câble sous-marin présente la forme d'une nappe (2) flexible agencée pour que sa courbure s'inscrive dans un plan sensiblement vertical.

5. Système de transfert d'énergie selon la revendication 4, **caractérisé en ce que** le dispositif (1) de câble sous-marin de puissance comprend au moins une seconde partie mobile (12, 12") qui présente la forme d'une nappe (2) flexible agencée pour que sa courbure s'inscrive dans un plan sensiblement horizontal, une première extrémité de ladite seconde partie mobile (12, 12") étant adaptée à être électriquement reliée audit bras de transfert (21, 22, 22', 125) par l'intermédiaire d'un premier ensemble de connexion (5, 5', 5", 135) et une seconde extrémité étant adaptée à être électriquement reliée par l'intermédiaire d'un second ensemble de connexion (6, 7, 146) à la première partie mobile (11, 11") flexible verticalement du dispositif (1) de câble sous-marin de puissance.

6. Système de transfert d'énergie selon la revendication précédente, **caractérisé en ce que** ledit second ensemble de connexion (6, 7) est pivotant.

7. Système de transfert d'énergie selon la revendication précédente, **caractérisé en ce que** ledit second ensemble de connexion pivotant (6) comprend un bras intermédiaire (23) de transfert porté par une petite embarcation (131) et muni d'une tête sphérique (9) pour une connexion électrique pivotante à rotule, ledit bras intermédiaire (23) étant relié à ladite seconde partie mobile (12, 12") du dispositif (1) de câble sous-marin de puissance par l'intermédiaire d'une connexion électrique (6A, 6B) pivotante selon un axe unique (A1).

8. Système de transfert d'énergie selon la revendication précédente, **caractérisé en ce que** ledit bras intermédiaire (23) a sensiblement la forme d'un L, la plus courte branche du L étant montée pivotante sur ladite petite embarcation (131) selon un axe sensiblement horizontal.

9. Système de transfert d'énergie selon l'une quelconque des deux revendications précédentes, **caractérisé en ce que** ledit second ensemble de connexion pivotant (6) comprend un connecteur complémentaire de puissance (103) adapté à être électriquement raccordé à ladite tête sphérique (9) et monté sur un ponton (32) flottant associé à des moyens de guidage (34) selon la direction verticale qui sont adaptés à permettre audit ponton de suivre la marée, ledit connecteur complémentaire (103) étant électriquement relié à la nappe formant la partie mobile flexible verticalement (11, 11', 11") du dispositif (1) de câble sous-marin de puissance.

10. Système de transfert d'énergie selon la revendication précédente, **caractérisé en ce qu'**un réservoir (35) de gaz non explosif est installé sur ledit ponton (32) flottant et est agencé pour pouvoir communiquer avec ledit second ensemble de connexion pivotant (6) afin de procurer une ambiance non explosive autour des connexions (9, 103, 6A, 6B) électriques pivotantes dudit ensemble (6).

11. Système de transfert d'énergie selon la revendication 6, **caractérisé en ce que** ledit second ensemble de connexion pivotant (7) comprend une connexion électrique (7A, 7B) pivotante selon un axe unique (A3).

12. Système de transfert d'énergie selon la revendication précédente, **caractérisé en ce que** ledit second ensemble de connexion pivotant (7) comprend des moyens de flottaison (7E) adaptés à maintenir ladite connexion électrique (7A, 7B) pivotante hors de l'eau, et comprend des moyens de coulissement (7F) adaptés à permettre audit second ensemble de suivre la marée en coulissant le long de moyens de guidage (14) selon la direction verticale.

13. Système de transfert d'énergie selon l'une des revendications 7 à 12, **caractérisé en ce qu'**au moins une connexion électrique (6A, 6B 7A, 7B) pivotante selon un axe unique (A1, A3) comprend un connecteur mâle (6A, 7A) de forme sensiblement tronconique dont l'axe de symétrie coïncide avec ledit axe unique, ledit connecteur mâle comprenant aux moins deux premiers éléments de contact (161, 162) correspondant chacun à un conducteur (3A, 3B), et comprend un connecteur femelle (6B, 7B) qui possède un évidement de forme adaptée à recevoir le connecteur mâle, ledit évidement définissant une paroi interne à la surface de laquelle sont disposés aux moins deux seconds éléments de contact (171, 172) chacun adapté à coopérer avec un premier élément de contact (161, 162).

14. Système de transfert d'énergie selon l'une quelconque des revendications précédentes, **caractérisé en ce que** ledit bras de transfert (20, 20', 21, 22, 125) comprend un dispositif de liaison électrique télescopique (29, 29') confiné dans une ambiance de gaz non explosif.

15. Système de transfert d'énergie selon l'une quelconque des revendications précédentes, **caractérisé en ce que** ledit connecteur de puissance formant une extrémité dudit bras de transfert (20, 20', 21, 22, 22', 24) consiste en au moins une tête sphérique (8) pour une connexion électrique pivotante à rotule, et **en ce que** ledit connecteur électrique complémentaire (101) de puissance est disposé sur le navire (100) et présente une ouverture évasée (101A) adaptée à guider ladite tête sphérique (8) vers une position de connexion en butée pour permettre l'établissement dudit état de connexion du système.

16. Système de transfert d'énergie selon l'une quelconque des revendications 2 à 15, **caractérisé en ce que** ledit bras de transfert (21, 22, 22') est monté sur une barge (30, 31) motorisée adaptée à déplacer tout ou partie (11', 12, 12") de ladite nappe (2) lors d'une opération d'accostage du navire (100) par ladite barge en vue de raccorder ledit bras de transfert à au moins un connecteur complémentaire de puissance (101) disposé sur le navire et relié aux équipements électriques (110) à bord du navire.

17. Système de transfert d'énergie selon la revendication précédente, **caractérisé en ce qu'**une extrémité inférieure dudit bras de transfert (21) est solidaire en mouvement d'une rotule (4) coopérant avec un support (40) de rotule monté sur ladite barge (30), ledit support (40) de rotule présentant un trou (41) adapté à être traversé par un bras plongeur (51) qui renferme lesdits conducteurs électriques de puissance (3A, 3B, 3C) et présente une extrémité immergée raccordée de façon étanche au dispositif (1) de câble sous-marin, une extrémité émergée dudit bras plongeur (51) étant raccordée audit bras de transfert (21) par l'intermédiaire d'un ensemble de connexion (5, 5') disposé à l'intérieur de ladite rotule (4).

18. Système de transfert d'énergie selon la revendication 16, **caractérisé en ce que** ledit bras de transfert (22, 22') a sensiblement la forme d'un L, la plus courte branche (22B) du L étant montée pivotante selon son axe (X) sensiblement horizontal sur un premier support (31A) qui est lui-même monté pivotant sur ladite barge (31) selon un axe (Z) sensiblement vertical, et **en ce qu'**un connecteur de puissance (5"B) formant une extrémité dudit bras de transfert est monté sur ladite plus courte branche (22B) du L.

19. Système de transfert d'énergie selon l'une quelconque des revendications 17 et 18 prise en combinaison avec la revendication 5, **caractérisé en ce que** ledit premier ensemble de connexion (5, 5', 5") est disposé hors de l'eau et comporte un connecteur (5'A, 5"A) pivotant selon un axe unique (A, A2).

20. Système de transfert d'énergie selon la revendication précédente, **caractérisé en ce que** ledit connecteur (5'A, 5"A) pivotant est un connecteur mâle de forme sensiblement tronconique dont l'axe de symétrie coïncide avec ledit axe unique (A, A2), ledit connecteur mâle étant adapté à pivoter dans un connecteur femelle (5'B, 5"B) monté sur ledit bras de transfert (21, 22, 22') et qui possède un évidement de même forme sensiblement tronconique.

21. Système de transfert d'énergie selon la revendication précédente, **caractérisé en ce que** ledit connecteur mâle (5'A, 5"A) est prolongé selon son axe de symétrie (A, A2) par une tige (52', 52") adaptée à pouvoir traverser un trou ménagé au fond dudit évidement du connecteur femelle (5'B, 5"B) pour ressortir à l'extérieur dudit connecteur femelle, ladite tige étant adaptée à recevoir des moyens de serrage (53) agencés pour permettre le maintien en pression de contact du connecteur mâle dans le connecteur femelle, des moyens de roulement (54) ou de glissement étant en outre intercalés entre lesdits moyens de serrage (53) et le connecteur femelle (5'B, 5"B) pour permettre le pivotement du connecteur mâle selon son axe de symétrie (A, A2).

22. Système de transfert d'énergie selon l'une quelconque des deux revendications précédentes, **caractérisé en ce que** ledit connecteur mâle (5'A, 5"A) est intégré à un ensemble flottant (13) agencé autour des conducteurs (3A, 3B, 3C) de la liaison électrique réalisée entre ledit connecteur mâle et une seconde partie mobile (12, 12") du dispositif (1) de câble sous-marin, ledit ensemble flottant (13) étant adapté à permettre l'insertion dudit connecteur mâle dans le connecteur femelle (5'B, 5"B) par une translation vers le haut dudit connecteur mâle selon son axe de symétrie (A, A2).

23. Système de transfert d'énergie selon la revendication précédente, **caractérisé en ce que** des moyens de flottaison variable (56) sont prévus solidaires en mouvement dudit ensemble flottant (13) pour effectuer ladite translation vers le haut en augmentant par des moyens de gonflage (57, 58) la flottabilité dudit ensemble (13).

24. Système de transfert d'énergie selon l'une quelconque des deux revendications précédentes, **caractérisé en ce que** ledit ensemble flottant (13) comprend des moyens de coulissement (13B) adaptés à coopérer avec des moyens de guidage vertical (14') pour lui permettre de suivre la marée.

25. Système de transfert d'énergie selon la revendication précédente, **caractérisé en ce que** lesdits moyens de guidage vertical (14') présentent une extrémité supérieure fixée au quai et consistent en un câble vertical lesté ou en une barre verticale.

26. Système de transfert d'énergie selon la revendication précédente, **caractérisé en ce que** ledit connecteur femelle (5"B) est disposé à une extrémité de ladite plus courte branche (22B) du L formé par ledit bras de transfert (22, 22'), et **en ce que** des moyens de guidage d'approche (31G1, 31G2) sont disposés sur ladite barge (31) et adaptés à coopérer avec lesdits moyens de guidage vertical (14') ainsi qu'avec des moyens de butée (64) disposés parallèlement auxdits moyens de guidage vertical (14'), afin de permettre le positionnement de ladite barge (31) dans une position de butée où ledit connecteur mâle (5"A) se trouve disposé sous ledit connecteur femelle (5"B) préalablement à la translation vers le haut dudit connecteur mâle.

27. Système de transfert d'énergie selon la revendication 1, **caractérisé en ce qu'**un premier bras de transfert (125) est monté sensiblement en position verticale sur la poupe du navire (100) et présente une partie supérieure électriquement reliée auxdits équipements électriques (110) à bord du navire ainsi qu'une extrémité inférieure formée par ledit connecteur de puissance (5"B, 135B), et **en ce qu'**un second bras de transfert (13'C) sensiblement vertical comportant à son extrémité supérieure ledit connecteur complémentaire (5"A, 135A) de puissance présente une partie inférieure qui est électriquement raccordée au dispositif (1) de câble sous-marin.

28. Système de transfert d'énergie selon la revendication précédente, **caractérisé en ce que** ladite partie supérieure dudit premier bras de transfert (125) comprend un dispositif de liaison électrique télescopique (29, 29').

29. Système de transfert d'énergie selon la revendication 6, **caractérisé en ce que** ledit second ensemble de connexion (6, 7) pivotant est adapté à permettre en son intérieur la circulation d'un gaz non explosif, et **en ce que** ladite seconde partie mobile (12, 12") du dispositif (1) de câble sous-marin de puissance comprend une canalisation flexible raccordée audit second ensemble de connexion (6, 7) pour y amener dudit gaz non explosif depuis le navire (100) par l'intermédiaire d'un ensemble de canalisations (87, 87', 87") parcourant le bras de transfert (21, 22, 22') et le premier ensemble de connexion (5, 5', 5").

30. Système de transfert d'énergie selon les revendications 4 et 3 prises en combinaison, **caractérisé en ce que** ladite partie mobile et flexible verticalement (11') du dispositif (1) de câble sous-marin s'inscrit dans un plan sensiblement perpendiculaire à la direction de la première partie (10) du dispositif (1), ladite partie mobile (11') présentant une première extrémité qui est électriquement reliée audit bras de transfert (21) par l'intermédiaire d'un ensemble de connexion (5) et une seconde extrémité qui est électriquement reliée à ladite partie fixe (10) par l'intermédiaire d'un ensemble de connexion électrique immergé (55').

31. Système de transfert d'énergie selon l'une des revendications 4 à 29, **caractérisé en ce que** ledit dispositif (1) de câble sous-marin est muni de flotteurs (15) au moins sur sa partie mobile (11, 11', 11"), lesdits flotteurs étant prévus pour obtenir une flottabilité légèrement négative pour cette partie mobile.

32. Système de transfert d'énergie selon l'une des revendications 1 à 4, **caractérisé en ce que** ledit bras de transfert (20, 20', 24) est porté par un ensemble support (45, 65), **en ce que** ledit connecteur électrique (8) de puissance formant une extrémité dudit bras est adapté à être connecté ou déconnecté avec un connecteur complémentaire (101) de puissance disposé sur le navire, et **en ce que** la connexion électrique de puissance réalisée est pivotante et de type rapide.

33. Système de transfert d'énergie selon la revendication précédente, **caractérisé en ce que** ledit bras de transfert (20, 20') comprend un dispositif de liaison électrique télescopique (29) et est muni à son autre extrémité d'un ensemble de connexion pivotant (8', 102) dont un connecteur (102) est monté sur ledit ensemble support (45, 65), ledit connecteur (102) étant relié à un ensemble (59, 148) de barres isolées qui aboutissent à un connecteur immergé (55) raccordé au dispositif (1) de câble sous-marin de puissance.

34. Système de transfert d'énergie selon la revendication précédente, **caractérisé en ce que** ledit ensemble support (45) est installé à un emplacement fixe sur le quai (50), et **en ce que** ledit ensemble (59) de barres isolées plonge depuis le quai jusqu'à un connecteur immergé (55) maintenu fixe sous le niveau (h1) de la marée la plus basse.

35. Système de transfert d'énergie selon la revendication 32 prise en combinaison avec la revendication 4, **caractérisé en ce que** ledit ensemble support (45, 65) est mobile le long de moyens de guidage (60, 61, 70), et **en ce que** ledit bras de transfert (20, 20', 24) est relié à un connecteur immergé (55) mobile avec le bras et raccordé à l'extrémité libre de la nappe (2) formant la partie mobile (11) du dispositif (1) de câble sous-marin.

36. Système de transfert d'énergie selon la revendication précédente, **caractérisé en ce que** le dispositif (1) de câble sous-marin est formé d'une même nappe (2) sur toute sa longueur.

37. Système de transfert d'énergie selon l'une quelconque des deux revendications précédentes, **caractérisé en ce que** ledit ensemble support (65) est monté sur un organe ascenseur (66) adapté à être déplacé verticalement le long de moyens de guidage vertical (70) grâce à des moyens de levage (68, 98), lesdits moyens de guidage vertical étant dimensionnés pour permettre une amplitude de mouvement dudit organe ascenseur (66) au moins égale à l'amplitude maximale (HM) de la marée en période d'exploitation du système.

38. Système de transfert d'énergie selon la revendication précédente, **caractérisé en ce qu'**il comprend un transporteur (46) apte à se déplacer le long de la bordure du quai sur des moyens de guidage horizontal (61) fixés sur le quai, ledit transporteur (46) possédant une partie de structure en porte-à-faux adaptée à porter une structure métallique (71) sur laquelle sont fixés lesdits moyens de guidage vertical (70).

39. Système de transfert d'énergie selon l'une quelconque des deux revendications précédentes, **caractérisé en ce que** ledit ensemble support (65) est monté pivotant sur ledit organe ascenseur (66) par l'intermédiaire de moyens de pivotement (67) selon un axe (A4) vertical.

40. Système de transfert d'énergie selon la revendication précédente, **caractérisé en ce que** ledit bras de transfert (24) comprend une partie sensiblement horizontale (24A) dont une extrémité est formée par le connecteur pivotant (8) qui est apte à être rapidement connecté à un connecteur électrique (101) sur le navire, et comprend en outre une partie sensiblement verticale (24C) qui est raccordée à un ensemble de connexion pivotant (7') possédant un bras plongeur (7'C) raccordé audit connecteur immergé (55).

41. Système de transfert d'énergie selon la revendication précédente, **caractérisé en ce que** ledit ensemble de connexion pivotant (7') possède un connecteur mâle (7'A) sensiblement tronconique qui forme l'extrémité supérieure dudit bras plongeur (7'C) et un connecteur femelle (7'B) raccordé à la base de la partie sensiblement verticale (24C) du bras de transfert (24), et **en ce que** le pivotement relatif possible entre lesdits connecteurs mâle et femelle est supérieur ou égal à 90°.

42. Système de transfert d'énergie selon l'une quelconque des trois revendications précédentes, **caractérisé en ce que** ledit ensemble support (65) comprend des rails (93) sensiblement parallèles à la partie horizontale (24A) du bras de transfert (24), et **en ce que** ledit bras de transfert (24) est suspendu à un chariot (92) apte à être déplacé en translation sur lesdits rails (93) grâce à un moteur (90) porté par ledit ensemble support (65)

43. Système de transfert d'énergie selon les revendications 36 et 42 prises en combinaison, **caractérisé en ce que** ledit organe ascenseur (66) supporte un poste de commande (95) adapté à accueillir un opérateur et comportant un dispositif de commande à distance dudit moteur (90) pour déplacer ledit chariot (92).

## Patentansprüche

1. System zur Übertragung elektrischer Energie zwischen einem Schiff (100) und einer Hafenanlage, das wenigstens einen Übertragungszweig (20, 20', 21, 22, 22', 24, 125, 13'C) aufweist, der mehrere elektrische Leistungsstromleiter (3A, 3B, 3C) aufweist, die unter Bildung eines Endes des Zweiges an wenigstens einen Leistungssteckverbinder (8, 8", 5"A, 5"B, 135A, 135B) angeschlossen sind, wobei der wenigstens eine Leistungssteckverbinder angepasst ist, um mit wenigstens einem komplementären Leistungssteckverbinder (101, 5"A, 5"B, 135A, 135B) verbunden zu werden, um einen Verbindungszustand herzustellen, der die Realisierung einer elektrischen Leistungsverbindung zwischen der Hafenanlage und elektrischen Ausrüstungen (110) am Board des Schiffes ermöglicht, **dadurch gekennzeichnet, dass** die Umgebung potenziell explosionsgefährdet ist und dass es ferner aufweist:
ein Bündel (1) von Unterwasserleistungskabeln, die einen Unterwasserausgang (200) von elektrischen Kabeln der Hafenanlage mit dem Übertragungszweig elektrisch verbinden,
wenigstens eine Rohrleitung, um ein nicht explosives Gas wenigstens auf Höhe der elektrischen Verbindung zwischen einem Leistungssteckverbinder (8, 8", 5''A, 5''B, 135A, 135B) und seinem komplementären Steckverbinder (101, 5"A, 5"B, 135A, 135B) in einer derartigen Weise zirkulieren zu lassen, dass ein eventueller Lichtbogen auf Höhe der Verbindung ausschließlich in einer inerten Umgebung auftritt.

2. System zur Übertragung von Energie nach Anspruch 1, **dadurch gekennzeichnet, dass** die Unterwasserleistungskabelvorrichtung (1) wenigstens einen Teil (10, 11, 11', 11", 12, 12'') aufweist, der die Form einer ebenen Anordnung (2) aufweist, die durch eine Gruppierung elektrischer Kabel (25) gebildet ist, von denen wenigstens zwei gegeneinander elektrisch isoliert sind, wobei die ebene Anordnung (2) geeignet ist, um eine bestimmte Krümmung zu erfahren.

3. System zur Übertragung von Energie nach Anspruch 1 oder 2, **dadurch gekennzeichnet, dass** die Unterwasserkabelvorrichtung (1) einen im Wesentlichen ortsfesten Teil (10) und wenigstens einen in Bezug auf einen Kai (50) der Hafenanlage beweglichen Teil (11, 11', 11", 12, 12") aufweist.

4. System zur Übertragung von Energie nach Anspruch 3 und 2 in Kombination miteinander, **dadurch gekennzeichnet, dass** wenigstens ein beweglicher Teil (11, 11', 11") der Unterwasserkabelvorrichtung (1) die Form einer flexiblen ebenen Anordnung (2) aufweist, die eingerichtet ist, damit sich ihre Krümmung in eine im Wesentlichen vertikale Ebene einschreibt.

5. System zur Übertragung von Energie nach Anspruch 4, **dadurch gekennzeichnet, dass** die Unterwasserleistungskabelvorrichtung (1) wenigstens einen zweiten beweglichen Teil (12, 12") aufweist, der die Form einer flexiblen ebenen Anordnung (2) aufweist, die angeordnet ist, damit sich ihre Krümmung in eine im Wesentlichen horizontale Ebene einschreibt, wobei ein erstes Ende des zweiten beweglichen Teils (12, 12") angepasst ist, um über eine erste Verbindungsbaugruppe (5, 5, 5", 135) mit dem Übertragungszweig (21, 22, 22`, 125) elektrisch verbunden zu sein, und ein zweites Ende angepasst ist, um über eine zweite Verbindungsbaugruppe (6, 7, 146) mit dem flexiblen ersten beweglichen Teil (11, 11") vertikal von der Unterwasserleistungskabelvorrichtung (1) elektrisch verbunden zu sein.

6. System zur Übertragung von Energie nach dem vorhergehenden Anspruch, **dadurch gekennzeichnet, dass** die zweite Verbindungsbaugruppe (6, 7) verschwenkbar ist.

7. System zur Übertragung von Energie nach dem vorhergehenden Anspruch, **dadurch gekennzeichnet, dass** die schwenkbare zweite Verbindungsbaugruppe (6) einen Zwischenübertragungsarm (23) aufweist, der von einem kleinen Wasserfahrzeug (131) getragen und mit einem kugelförmigen Kopf (9) für eine an einem Gelenk verschwenkbare elektrische Verbindung versehen ist, wobei der Zwischenarm (23) mit dem zweiten beweglichen Teil (12, 12") der Unterwasserleistungskabelvorrichtung über eine elektrische Verbindung (6A, 6B) verbunden ist, die um eine Einzelachse (A1) verschwenkbar ist.

8. System zur Übertragung von Energie nach dem vorhergehenden Anspruch, **dadurch gekennzeichnet, dass** der Zwischenarm (23) im Wesentlichen die Form eines L aufweist, wobei der kürzeste Schenkel des L an dem kleinen Wasserfahrzeug (131) um eine im Wesentlichen horizontale Achse schwenkbar montiert ist.

9. System zur Übertragung von Energie nach einem beliebigen der zwei vorhergehenden Ansprüche, **dadurch gekennzeichnet, dass** die zweite schwenkbare Verbindungsbaugruppe (6) einen komplementären Leistungsleiter (103) aufweist, der angepasst ist, um an den kugelförmigen Kopf (9) elektrisch angeschlossen zu werden, und auf einem schwimmenden Ponton (32) montiert ist, der mit Mittel zur Führung (34) in vertikaler Richtung verbunden ist, die angepasst sind, um dem Ponton zu gestatten, den Gezeiten zu folgen, wobei der komplementäre Steckverbinder (103) mit der ebenen Anordnung unter Bildung des in vertikaler Richtung flexiblen beweglichen Teils (11, 11', 11") der Unterwasserleistungskabelvorrichtung (1) elektrisch verbunden ist.

10. System zur Übertragung von Energie nach dem vorhergehenden Anspruch, **dadurch gekennzeichnet, dass** ein Behälter (35) mit nicht explosivem Gas auf dem schwimmenden Ponton (32) installiert und eingerichtet ist, um mit der schwenkbaren zweiten Verbindungsbaugruppe (6) kommunizieren zu können, um eine nicht explosive Umgebung um die schwenkbaren elektrischen Anschlüsse (9, 103, 6A, 6B) der Baugruppe (6) herum zu schaffen.

11. System zur Übertragung von Energie nach Anspruch 6, **dadurch gekennzeichnet, dass** die zweite schwenkbare Verbindungsbaugruppe (7) einen um eine Einzelachse (A3) verschwenkbaren elektrischen Anschluss (7A, 7B) aufweist.

12. System zur Übertragung von Energie nach dem vorhergehenden Anspruch, **dadurch gekennzeichnet, dass** die zweite schwenkbare Verbindungsbaugruppe (7) Auftriebsmittel (7E) aufweist, die angepasst sind, um den schwenkbaren elektrischen Anschluss (7A, 7B) über Wasser zu halten, und Gleitmittel (7F) aufweist, die angepasst sind, um der zweiten Baugruppe zu ermöglichen, durch Gleiten entlang der Führungsmittel (14) den Gezeiten in der vertikalen Richtung zu folgen.

13. System zur Übertragung von Energie nach einem der Ansprüche 7 bis 12, **dadurch gekennzeichnet, dass** wenigstens ein um eine Einzelachse (A1, A3) schwenkbarer elektrischer Anschluss (6A, 6B; 7A, 7B) einen Verbindungsstecker (6A, 7A) mit einer im Wesentlichen kugelstumpfförmigen Form aufweist, dessen Symmetrieachse mit der Einzelachse zusammenfällt, wobei der Verbindungsstecker wenigstens zwei erste Kontaktelemente (161, 162) aufweist, die jeweils einem Leiter (3A, 3B) entsprechen, und eine Verbindungsbuchse (6B, 7B) aufweist, die eine Aussparung mit einer Form aufweist, die zur Aufnahme des Verbindungssteckers angepasst ist, wobei die Aussparung eine Innenwand definiert, an deren Oberfläche wenigstens zwei zweite Kontaktelemente (171, 172) angeordnet sind, die jeweils angepasst sind, um mit einem ersten Kontaktelement (161, 162) zusammenzuwirken.

14. System zur Übertragung von Energie nach einem beliebigen der vorhergehenden Ansprüche, **dadurch gekennzeichnet, dass** der Übertragungszweig (20, 20`, 21, 22, 125) eine teleskopartige elektrische Verbindungsvorrichtung aufweist, die in einer Umgebung mit nicht explosivem Gas eingeschlossen ist.

15. System zur Übertragung von Energie nach einem beliebigen der vorhergehenden Ansprüche, **dadurch gekennzeichnet, dass** der Leistungssteckverbinder, der ein Ende des Übertragungszweiges (20, 20', 21, 22, 22', 24) bildet, aus wenigstens einem kugelförmigen Kopf (8) für eine an einem Gelenk schwenkbare elektrische Verbindung besteht und dass der komplementäre elektrische Leistungssteckverbinder (101) auf dem Schiff (100) angeordnet ist und eine erweiterte Öffnung (101A) aufweist, die angepasst ist, um den kugelförmigen Kopf (8) in Richtung auf eine Anschlagsverbindungsposition zu führen, um die Herstellung des Verbindungszustandes des Systems zu ermöglichen.

16. System zur Übertragung von Energie nach einem beliebigen der Ansprüche 2 bis 15, **dadurch gekennzeichnet, dass** der Übertragungszweig (21, 22, 22') auf einem motorisierten Kahn (30, 31) montiert ist, der zur Verlagerung der Gesamtheit oder eines Teils (11', 12, 12") der ebenen Anordnung (2) bei einer Anlegeoperation des Schiffs (100) über den Kahn zwecks einer Verbindung des Übertragungszweiges mit wenigstens einem komplementären Leistungssteckverbinder (101) eingerichtet ist, der auf dem Schiff angeordnet und mit elektrischen Ausrüstungen (110) an Bord des Schiffes verbunden ist.

17. System zur Übertragung von Energie nach dem vorhergehenden Anspruch, **dadurch gekennzeichnet, dass** ein inneres Ende des Übertragungszweiges (21) mit einem Kugelgelenk (4) bewegungsfest verbunden ist, der mit einem Kugelgelenkträger (40) zusammenwirkt, der auf dem Kahn (30) montiert ist, wobei der Kugelgelenkträger (40) ein Loch (41) aufweist, das angepasst ist, um von einem Kolbenarm (51) durchsetzt zu werden, der die elektrischen Leistungsstromleiter (3A, 3B, 3C) umfasst, und ein eingetauchtes Ende aufweist, das mit der Unterwasserkabelvorrichtung (1) dicht verbunden ist, wobei ein herausragendes Ende des Kolbens (51) mit dem Übertragungszweig (21) über eine Verbindungsbaugruppe (5, 5') verbunden ist, die im inneren des Kugelgelenks (4) angeordnet ist.

18. System zur Übertragung von Energie nach Anspruch 16, **dadurch gekennzeichnet, dass** der Übertragungszweig (22, 22') im Wesentlichen die Form eines L aufweist, wobei der kürzeste Schenkel (22B) des L um eine im Wesentlichen horizontale Achse (X) an einem ersten Träger (31A) schwenkbar montiert ist, der selbst auf dem Kahn (31) um eine im Wesentlichen vertikale Achse (Z) schwenkbar montiert ist, und dass ein Leistungssteckverbinder (5"B), der ein Ende des Übertragungszweiges bildet, auf dem kürzesten Schenkel (22B) des L montiert ist.

19. System zur Übertragung von Energie nach einem beliebigen der Ansprüche 17 und 18 in Kombination mit Anspruch 5, **dadurch gekennzeichnet, dass** die erste Verbindungsbaugruppe (5, 5, 5") über Wasser angeordnet ist und einen um eine Einzelachse (A, A2) schwenkbaren Steckverbinder (5'A, 5"A) umfasst.

20. System zur Übertragung von Energie nach dem vorhergehenden Anspruch, **dadurch gekennzeichnet, dass** der schwenkbare Steckverbinder (5'A, 5"A) ein Verbindungsstecker mit einer im Wesentlichen kugelstumpfförmigen Form ist, deren Symmetrieachse mit der Einzelachse (A, A2) zusammenfällt, wobei der Steckverbinder angepasst ist, um in einer Verbindungsbuchse (5'B, 5"B) zu verschwenken, die auf dem Übertragungszweig (21, 22, 22') montiert ist und die eine Aussparung mit dergleichen im Wesentlichen kugelstumpfförmigen Form hat.

21. System zur Übertragung von Energie nach dem vorhergehenden Anspruch **dadurch gekennzeichnet, dass** der Verbindungsstecker (5'A, 5"A) entlang seiner Symmetrieachse (A, A2) durch eine Stange (52`, 52'') verlängert ist, die angepasst ist, um ein Loch zu durchsetzen, das am Grund der Aussparung der Verbindungsbuchse (5'B, 5"B) vorgesehen ist, um aus der Verbindungsbuchse nach außen herauszutreten, wobei die Stange angepasst ist, um Klemmmittel (53) aufzunehmen, die eingerichtet sind, um das Halten des Verbindungsteckers in der Verbindungsbuchse mit Kontaktdruck zu ermöglichen, wobei Lagermittel (54) oder Gleitmittel ferner zwischen den Klemmmitteln (53) und der Verbindungsbuchse (5'B, 5"B) eingefügt sind, um das Verschwenken des Verbindungssteckers um seine Symmetrieachse (A, A2) zu ermöglichen.

22. System zur Übertragung von Energie nach einem beliebigen der zwei vorhergehenden Ansprüche, **dadurch gekennzeichnet, dass** der Verbindungsstecker (5'A, 5"A) in einer schwimmenden Anordnung (13) integriert ist, die um Leiter (3A, 3B, 3C) der elektrischen Verbindung herum angeordnet ist, die zwischen dem Verbindungsstecker und einem zweiten beweglichen Teil (12, 12") der Unterwasserkabelvorrichtung (1) realisiert ist, wobei die schwimmende Anordnung (13) angepasst ist, um das Einführen des Verbindungssteckers in die Verbindungsbuchse (5'B, 5"B) über eine Verschiebung des Verbindungssteckers entlang seiner Symmetrieachse (A, A2) nach oben zu ermöglichen.

23. System zur Übertragung von Energie nach dem vorhergehenden Anspruch, **dadurch gekennzeichnet, dass** variable Auftriebsmittel (56) bewegungsfest mit der schwimmenden Anordnung (13) vorgesehen sind, um die Verschiebung nach oben durch Erhöhung des Auftriebs der Anordnung (13) über Aufblasemittel (57, 58) zu bewirken.

24. System zur Übertragung von Energie nach einem beliebigen der zwei vorhergehenden Ansprüche, **dadurch gekennzeichnet, dass** die schwimmende Anordnung (13) Gleitmittel (13B) aufweist, die angepasst sind, um mit vertikalen Führungsmitteln (14') zusammenzuwirken, um hier zu ermöglichen, den Gezeiten zu folgen.

25. System zur Übertragung von Energie nach dem vorhergehenden Anspruch, **dadurch gekennzeichnet, dass** die vertikalen Führungsmittel (14') ein oberes Ende aufweisen, das am Kai fixiert ist, und ein vertikal belastetes Kabel oder einen vertikalen Balken umfassen.

26. System zur Übertragung von Energie nach dem vorhergehenden Anspruch, **dadurch gekennzeichnet, dass** die Verbindungsbuchse (5"B) an einem Ende des kürzesten Schenkels (22B) des L angeordnet ist, das durch den Übertragungszweig (22, 22') gebildet ist, und dass die Führungsmittel zur Annäherung (31G1, 31G2) an dem Kahn (31) angeordnet und angepasst sind, um mit den vertikalen Führungsmitteln (14') sowie mit Anschlagmitteln (64) zusammenzuwirken, die parallel zu den vertikalen Führungsmitteln (14') angeordnet sind, um die Positionierung des Kahns (31) in einer Anschlagsposition zu ermöglichen, an der der Verbindungsstecker (5"A) vor der Verschiebung des Verbindungssteckers nach oben unter der Verbindungsbuchse (5"B) angeordnet ist.

27. System zur Übertragung von Energie nach Anspruch 1, **dadurch gekennzeichnet, dass** ein erster Übertragungszweig (165) im Wesentlichen in einer vertikalen Position an dem Heck des Schiffes (100) montiert ist und einen oberen Teil, der mit den elektrischen Ausrüstungen (110) an Bord des Schiffes elektrisch verbunden ist, sowie ein unteres Ende aufweist, das durch den Leistungssteckverbinder (5"B, 135B) gebildet ist, und dass ein im vertikaler zweiter Verbindungszweig (13'C), der an seinem oberen Ende den komplementären Leistungssteckverbinder (5"A, 135A) enthält, einen unteren Teil aufweist, der an die Unterwasserkabelvorrichtung (1) elektrisch angeschlossen ist.

28. System zur Übertragung von Energie nach dem vorhergehenden Anspruch, **dadurch gekennzeichnet, dass** der obere Teil des ersten Übertragungszweiges (125) eine teleskopartige elektrische Verbindungsvorrichtung (29, 29') aufweist.

29. System zur Übertragung von Energie nach Anspruch 6, **dadurch gekennzeichnet, dass** die zweite schwenkbare Verbindungsbaugruppe (6, 7) angepasst ist, um in ihrem Inneren die Zirkulation eines nicht explosiven Gases zu ermöglichen, und dass der zweite bewegliche Teil (12, 12") der Unterwasserkabelvorrichtung (1) eine flexible Rohrleitung aufweist, die an der zweiten Verbindungsbaugruppe (6, 7) angeschlossen ist, um ihr das nicht explosive Gas von dem Schiff (100) aus über eine Anordnung von Rohrleitungen (87, 87', 87"), die den Übertragungszweig (21, 22, 22`) durchlaufen, und die erste Verbindungsbaugruppe (5, 5', 5") zuzuführen.

30. System zur Übertragung von Energie nach den Ansprüchen 4 und 3 in Kombination miteinander, **dadurch gekennzeichnet, dass** der bewegliche und in vertikaler Richtung flexible Teil (11') der Unterwasserkabelvorrichtung (1) sich in eine Ebene einschreibt, die im Wesentlichen senkrecht zu der Richtung des ersten Teils (10) der Vorrichtung (1) ausgerichtet ist, wobei der bewegliche Teil (11') ein erstes Ende, das mit dem Übertragungszweig (21) über eine Verbindungsbaugruppe (5) elektrisch verbunden ist, und ein zweites Ende aufweist, das mit dem ortsfesten Teil (10) über eine eingetauchte elektrische Verbindungsbaugruppe (55') elektrisch verbunden ist.

31. System zur Übertragung von Energie nach einem der Ansprüche 4 bis 29, **dadurch gekennzeichnet, dass** Unterwasserkabelvorrichtung (1) wenigstens auf ihrem beweglichen Teil (11, 11', 11") mit Schwimmern (15) versehen ist, wobei die Schwimmer vorgesehen sind, um einen leicht negativen Auftrieb für diesen beweglichen Teil zu erhalten.

32. System zur Übertragung von Energie nach einem der Ansprüche 1 bis 4, **dadurch gekennzeichnet, dass** der Übertragungszweig (20, 20', 24) von einem Baugruppenträger (45, 65) getragen ist, dass der elektrische Leistungssteckverbinder (8), der ein Ende des Zweiges bildet, angepasst ist, um mit einem komplementären Leistungssteckverbinder (101), der an dem Schiff angeordnet ist, verbunden oder von diesem getrennt zu werden, und dass die realisierte elektrische Leistungsverbindung schwenkbar und von der Schnellverbindungsart ist.

33. System zur Übertragung von Energie nach dem vorhergehenden Anspruch, **dadurch gekennzeichnet, dass** der Übertragungszweig (20, 20') eine teleskopartige elektrische Verbindungsvorrichtung (29) aufweist und an seinem anderen Ende mit einer schwenkbaren Verbindungsbaugruppe (8', 102) versehen ist, deren Steckverbinder (102) an dem Baugruppenträger (45, 65) montiert ist, wobei der Steckverbinder (102) mit einer Anordnung (59, 148) von isolierten Stäben verbunden ist, die zu einem eingetauchten Steckverbinder (55) führen, der an die Unterwasserleistungskabelvorrichtung (1) angeschlossen ist.

34. System zur Übertragung von Energie nach dem vorhergehenden Anspruch, **dadurch gekennzeichnet, dass** der Baugruppenträger (45) an einer festen Stelle an dem Kai (50) installiert ist und dass die Anordnung (59) von isolierten Stäben von dem Kai aus bis zu einem eingetauchten Steckverbinder (55) eintaucht, der unter dem Niveau (h1) des niedrigsten Wasserspiegels gehalten ist.

35. System zur Übertragung von Energie nach Anspruch 32 in Kombination mit dem Anspruch 4, **dadurch gekennzeichnet, dass** der Baugruppenträger (45, 65) entlang von Führungsmitteln (60, 61, 70) beweglich ist und dass der Übertragungszweig (20, 20`, 24') mit einem beweglichen eingetauchten Steckverbinder (55) mit dem Zweig verbunden und an einem freien Ende der ebenen Anordnung (2) unter Bildung des beweglichen Teils (11) der Unterwasserkabelvorrichtung (1) angeschlossen ist.

36. System zur Übertragung von Energie nach dem vorhergehenden Anspruch, **dadurch gekennzeichnet, dass** die Unterwasserkabelvorrichtung (1) mit derselben ebenen Anordnung (2) auf ihrer gesamten Länge ausgebildet ist.

37. System zur Übertragung von Energie nach einem beliebigen der zwei vorhergehenden Ansprüche, **dadurch gekennzeichnet, dass** der Baugruppenträger (65) an einem Aufzugsorgan (66) montiert ist, das eingerichtet ist, um durch Hebemittel (68, 98) entlang vertikaler Führungsmittel (70) vertikal verfahrbar zu sein, wobei die vertikalen Führungsmittel bemessen sind, um einen Bewegungsbereich des Aufzugsorgans (66) zu ermöglichen, der wenigstens gleich der maximalen Amplitude der Gezeiten während einer Betriebszeit des Systems ist.

38. System zur Übertragung von Energie nach dem vorhergehenden Anspruch, **dadurch gekennzeichnet, dass** es eine Fördereinrichtung (46) aufweist, die in der Lage ist, sich entlang des Randes des Kais auf den horizontalen Führungsmitteln, die an dem Kai fixiert sind, zu bewegen, wobei die Fördereinrichtung (46) einen Teil einer Auskragstruktur umfasst, die angepasst ist, um eine Metallstruktur (71) zu tragen, auf der die vertikalen Führungsmittel (70) fixiert sind.

39. System zur Übertragung von Energie nach einem beliebigen der vorhergehenden Ansprüche, **dadurch gekennzeichnet, dass** der Baugruppenträger (65) auf dem Aufzugsorgan (66) über Schwenkmittel (67) um eine vertikale Achse (A4) schwenkbar montiert ist.

40. System zur Übertragung von Energie nach dem vorhergehenden Anspruch, **dadurch gekennzeichnet, dass** der Übertragungszweig (24) einen im Wesentlichen horizontalen Teil (24A) aufweist, dessen ein Ende durch den schwenkbaren Steckverbinder (8) gebildet ist, der in der Lage ist, mit einem elektrischen Verbinder (101) auf dem Schiff schnell verbunden zu werden, und ferner einen im Wesentlichen vertikalen Teil (24C) aufweist, der mit einer schwenkbaren Verbindungsbaugruppe (7') verbunden ist, die einen mit dem eingetauchten Steckverbinder (55) verbundenen Kolbenarm (7'C) umfasst.

41. System zur Übertragung von Energie nach dem vorhergehenden Anspruch, **dadurch gekennzeichnet, dass** die schwenkbare Verbindungsbaugruppe (7') einen im Wesentlichen kegelstumpfförmigen Verbindungsstecker (7'A), der das obere Ende des Kolbenarms (7'C) bildet, und eine Verbindungsbuchse (7'B) umfasst, die mit der Basis des im Wesentlichen vertikalen Teils (24C) des Übertragungszweiges (24) verbunden ist, und dass die relative Verschwenkung, die zwischen dem Verbindungsstecker und der Verbindungsbuchse möglich ist, größer als oder gleich 90° ist.

42. System zur Übertragung von Energie nach einem beliebigen der drei vorhergehenden Ansprüche, **dadurch gekennzeichnet, dass** der Baugruppenträger (65) Schienen (93) aufweist, die im Wesentlichen parallel zu dem horizontalen Teil (24A) des Übertragungszweigs (24) verlaufen, und dass der Übertragungszweigs (24) an einem Wagen (92) aufgehängt ist, der in der Lage ist, durch einen Motor (90), der von dem Baugruppenträger (65) getragen ist, auf den Schienen (93) translatorisch verfahren zu werden.

43. System zur Übertragung von Energie nach den Ansprüchen 36 und 42 in Kombination miteinander, **dadurch gekennzeichnet, dass** das Aufzugsorgan (66) eine Leitstelle (95) trägt, die angepasst ist, um einen Bediener aufzunehmen, und eine Vorrichtung zur Fernsteuerung des Motors (90), um den Wagen (92) zu verfahren, aufweist.

## Claims

1. System for transferring electrical energy between a ship (100) and a port facility, comprising at least one transfer arm (20, 20', 21, 22, 22', 24, 125, 13'C) comprising several electrical power conductors (3A, 3B, 3C) which are connected to at least one power connector (8, 8", 5"A, 5"B, 135A, 135B) forming an end of said arm, said at least one power connector being configured to be connected to at least one complementary power connector (101, 5"A, 5"B, 135A, 135B) in order to establish a connection state allowing creation of an electrical power connection between the port facility and electrical equipment (110) on board the ship, **characterised in that** the atmosphere is potentially explosive, and **in that** it also comprises:
a bundle (1) of submarine power cables electrically connecting a submarine outlet (200) of electrical cables of the port facility to said transfer arm,
at least one pipeline for circulating a non-explosive gas at least at the electrical junction between a power connector (8, 8", 5"A, 5"B, 135A, 135B) and its complementary connector (101, 5"A, 5"B, 135A, 135B) such that any electric arcing at said junction occurs exclusively in an inert atmosphere.

2. Energy transfer system according to claim 1, **characterised in that** the submarine power cable device (1) comprises at least a part (10, 11, 11', 11", 12, 12") which has the form of a plate (2) formed from a group of electrical cables (25), at least two of which are electrically isolated from each other, said plate (2) being configured to tolerate a degree of curvature.

3. Energy transfer system according to claim 1 or 2, **characterised in that** the submarine cable device (1) comprises a substantially fixed part (10) and at least one part (11, 11', 11", 12, 12") which is movable relative to a quay (50) of the port facility.

4. Energy transfer system according to claims 3 and 2 taken in combination, **characterised in that** at least one movable part (11, 11', 11") of the submarine cable device (1) has the form of a flexible plate (2) arranged such that its curvature lies in a substantially vertical plane.

5. Energy transfer system according to claim 4, **characterised in that** the submarine power cable device (1) comprises at least one second movable part (12, 12") which takes the form of a flexible plate (2) arranged such that its curvature lies in a substantially horizontal plane, a first end of said second movable part (12, 12") being configured to be electrically connected to said transfer arm (21, 22, 22', 125) via a first connection assembly (5, 5', 5", 135), and a second end being configured to be electrically connected via a second connection assembly (6, 7, 146) to the first, vertically flexible, movable part (11, 11') of the submarine power cable device (1).

6. Energy transfer system according to the preceding claim, **characterised in that** said second connection assembly (6, 7) is pivoting.

7. Energy transfer system according to the preceding claim, **characterised in that** said second pivoting connection assembly (6) comprises an intermediate transfer arm (23) carried by a small vessel (131) and equipped with a spherical head (9) for electrical connection by means of a pivoting ball, said intermediate arm (23) being connected to said second movable part (12, 12") of the submarine power cable device (1) via an electrical connection (6A, 6B) pivoting about a single axis (A1).

8. Energy transfer system according to the preceding claim, **characterised in that** said intermediate arm (23) substantially has an L shape, the shortest arm of the L being mounted on said small vessel (131) so as to pivot about a substantially horizontal axis.

9. Energy transfer system according to one of the two preceding claims, **characterised in that** said second pivoting connection assembly (6) comprises a complementary power connector (103) configured to be connected electrically to said spherical head (9) and mounted on a floating pontoon (32) associated with means (34) for guidance in the vertical direction, which are configured to allow said pontoon to follow the tide, said complementary connector (103) being electrically connected to the plate forming the vertically flexible, movable part (11, 11', 11") of the submarine power cable device (1).

10. Energy transfer system according to the preceding claim, **characterised in that** a tank (35) of non-explosive gas is installed on said floating pontoon (32) and is arranged to be able to communicate with said second pivoting connection assembly (6) in order to create a non-explosive atmosphere around the pivoting electrical connections (9, 103, 6A, 6B) of said assembly (6).

11. Energy transfer system according to claim 6, **characterised in that** said second pivoting connection assembly (7) comprises an electrical connection (7A, 7B) pivoting about a single axis (A3).

12. Energy transfer system according to the preceding claim, **characterised in that** said second pivoting connection assembly (7) comprises flotation means (7E) configured to hold said pivoting connection assembly (7A, 7B) out of the water, and comprises sliding means (7F) configured to allow said second assembly to follow the tide by sliding along means (14) for guidance in the vertical direction.

13. Energy transfer system according to any of claims 7 to 12, **characterised in that** at least one electrical connection (6A, 6B; 7A, 7B) pivoting about a single axis (A1, A3) comprises a male connector (6A, 7A) of substantially frustoconical form, the axis of symmetry of which coincides with said single axis, said male connector comprising at least two first contact elements (161, 162) each corresponding to a conductor (3A, 3B), and comprises a female connector (6B, 7B) which has a recess of a shape suitable for receiving the male connector, said recess defining an inner wall, on the surface of which at least two second contact elements (171, 172) are arranged which are each configured to cooperate with a first contact element (161, 162).

14. Energy transfer system according to any of the preceding claims, **characterised in that** said transfer arm (20, 20', 21, 22, 125) comprises a telescopic electrical connection device (29, 29') confined in a non-explosive gas atmosphere.

15. Energy transfer system according to any of the preceding claims, **characterised in that** said power connector forming an end of said transfer arm (20, 20', 21, 22, 22', 24) consists of at least one spherical head (8) for an electrical connection by means of a pivoting ball, and **in that** said complementary electrical power connector (101) is arranged on the ship (100) and has a widened opening (101A) adapted to guide said spherical head (8) towards a connecting position at the stop in order to allow said connection state of the system to be established.

16. Energy transfer system according to any of claims 2 to 15, **characterised in that** said transfer arm (21, 22, 22') is mounted on a motorised barge (30, 31) able to move all or part (11', 12, 12") of said plate (2) during an operation of berthing of the ship (100) by said barge, with a view to connection of said transfer arm to at least one complementary power connector (101) arranged on the ship and connected to the electrical equipment (110) on board the ship.

17. Energy transfer system according to the preceding claim, **characterised in that** a lower end of said transfer arm (21) is integral in movement with a ball (4) cooperating with a ball support (40) mounted on said barge (30), said ball support (40) having a hole (41) through which a plunger arm (51) can pass which contains said electrical power connectors (3A, 3B, 3C) and which has a submerged end connected in a sealed fashion to the submarine cable device (1), a non-submerged end of said plunger arm (51) being connected to said transfer arm (21) via a connection assembly (5, 5') arranged inside said ball (4).

18. Energy transfer system according to claim 16, **characterised in that** said transfer arm (22, 22') has substantially an L-shape, the shortest arm (22B) of the L being mounted so as to pivot about its substantially horizontal axis (X) on a first support (31A), which is itself mounted on said barge (31) so as to pivot about a substantially vertical axis (Z), and **in that** a power connector (5"B) forming an end of said transfer arm is mounted on said shortest branch (22B) of the L.

19. Energy transfer system according to any of claims 17 and 18 taken in combination with claim 5, **characterised in that** said first connection assembly (5, 5', 5") is arranged out of the water and comprises a connector (5'A, 5 "A) pivoting about a single axis (A, A2).

20. Energy transfer system according to the preceding claim, **characterised in that** said pivoting connector (5'A, 5"A) is a male connector of substantially frustoconical form, the axis of symmetry of which coincides with said single axis (A, A2), said male connector being configured so as to pivot in a female connector (5'B, 5"B) mounted on said transfer arm (21, 22, 22') and having a recess of the same substantially frustoconical form.

21. Energy transfer system according to the preceding claim, **characterised in that** said male connector (5'A, 5"A) is extended along its axis of symmetry (A, A2) by a rod (52', 52") configured to be able to pass through a hole provided at the base of said recess of the female connector (5'B, 5"B), so as to emerge on the outside of said female connector, said rod being configured to receive clamping means (53) arranged to maintain the contact pressure of the male connector in the female connector, bearing or sliding means (54) being also interposed between said clamping means (53) and the female connector (5'B, 5"B) to allow the pivoting of the male connector about its axis of symmetry (A, A2).

22. Energy transfer system according to one of the two preceding claims, **characterised in that** said male connector (5'A, 5"A) is integrated in a floating assembly (13) arranged around the conductors (3A, 3B, 3C) of the electrical connection produced between said male connector and a second movable part (12, 12") of the submarine cable device (1), said floating assembly (13) being configured to allow insertion of said male connector in the female connector (5'B, 5"B) by upward translation of said male connector along its axis of symmetry (A, A2).

23. Energy transfer system according to the preceding claim, **characterised in that** variable flotation means (56) are provided which are integral in movement with said floating assembly (13) in order to perform said upward translation by increasing the floatability of said assembly (13) by means of inflation means (57, 58).

24. Energy transfer system according to one of the two preceding claims, **characterised in that** said floating assembly (13) comprises sliding means (13B) configured to cooperate with vertical guidance means (14') to enable it to follow the tide.

25. Energy transfer system according to the preceding claim, **characterised in that** said vertical guidance means (14') have an upper end fixed to the quay, and comprise a weighted vertical cable or a bar.

26. Energy transfer system according to the preceding claim, **characterised in that** said female connector (5"B) is arranged at an end of said shortest branch (22B) of the L formed by said transfer arm (22, 22'), and **in that** approach guidance means (31G1, 31G2) are arranged on said barge (31) and are configured to cooperate with said vertical guidance means (14') and with stop means (64) arranged parallel to said vertical guidance means (14'), in order to allow the positioning of said barge (31) in a stop position in which said male connector (5 "A) is arranged below said female connector (5"B) prior to the upward translation of said male connector.

27. Energy transfer system according to claim 1, **characterised in that** a first transfer arm (125) is mounted substantially in a vertical position on the stem of the ship (100) and has an upper part electrically connected to said electrical equipment (110) on board the ship and a lower end formed by said power connector (5"B, 135B), and **in that** a second substantially vertical transfer arm (13'C), comprising said complementary power connector (5"A, 135A) at its upper end, has a lower part which is connected electrically to the submarine cable device (1).

28. Energy transfer system according to the preceding claim, **characterised in that** said upper part of said first transfer arm (125) comprises a telescopic electrical connection device (29, 29').

29. Energy transfer system according to claim 6, **characterised in that** said second pivoting connection assembly (6, 7) is configured to allow the circulation of a non-explosive gas in its interior, and **in that** said second movable part (12, 12") of the submarine power cable device (1) comprises a flexible pipeline connected to said second connection assembly (6, 7), in order to deliver said non-explosive gas from the ship (100) via a set of pipelines (87, 87', 87") running through the transfer arm (21, 21', 21 ") and the first connection assembly (5, 5', 5 ").

30. Energy transfer system according to claims 3 and 4 taken in combination, **characterised in that** said movable, vertically flexible part (11') of the submarine cable device (1) lies in a plane which is substantially perpendicular to the direction of the first part (10) of the device (1), said movable part (11') having a first end which is electrically connected to said transfer arm (21) via a connection assembly (5), and a second end which is electrically connected to said fixed part (10) via a submerged electrical connection assembly (55').

31. Energy transfer system according to any of claims 4 to 29, **characterised in that** said submarine cable device (1) is equipped with floats (15) at least on its movable part (11, 11', 11"), said floats being provided to obtain a slightly negative floatability for this movable part.

32. Energy transfer system according to any of claims 1 to 4, **characterised in that** said transfer arm (20, 20', 24) is carried by a support assembly (45, 65), **in that** said electrical power connector (8) forming an end of said arm is configured to be connected to or disconnected from a complementary power connector (101) arranged on the ship, and **in that** a pivoting electrical power connection of the rapid type is created.

33. Energy transfer system according to the preceding claim, **characterised in that** said transfer arm (20, 20') comprises a telescopic electrical connection device (29) and is equipped at its other end with a pivoting connection assembly (8', 102), a connector (102) of which is mounted on said support assembly (45, 65), said connector (102) being connected to a set (59, 148) of insulated bars which terminate in a submerged connector (55) connected to the submarine power cable device (1).

34. Energy transfer system according to the preceding claim, **characterised in that** said support assembly (45) is installed at a fixed location on the quay (50), and **in that** said set (59) of insulated bars extends from the quay down to a submerged connector (55) held fixedly below the level (h1) of the lowest tide.

35. Energy transfer system according to claim 32 taken in combination with claim 4, **characterised in that** said support assembly (45, 65) is movable along guidance means (60, 61, 70), and **in that** said transfer arm (20, 20', 24) is connected to a submerged connector (55) which is movable with the arm and connected to the free end of the plate (2) forming the movable part (11) of the submarine cable device (1).

36. Energy transfer system according to the preceding claim, **characterised in that** the submarine cable device (1) is formed from a same plate (2) over its entire length.

37. Energy transfer system according to any of the two preceding claims, **characterised in that** said support assembly (65) is mounted on a riser element (66) able to be displaced vertically along vertical guidance means (70) thanks to lift means (68, 98), said vertical guidance means being dimensioned to allow an amplitude of movement of said riser element (66) which is at least equal to the maximum amplitude (HM) of the tide during the operating period of the system.

38. Energy transfer system according to the preceding claim, **characterised in that** it comprises a transporter (46) able to move along the edge of the quay on horizontal guidance means (61) fixed to the quay, said transporter (46) having an overhanging part of the structure able to carry a metal structure (71) on which said vertical guidance means (70) are fixed.

39. Energy transfer system according to one of the two preceding claims, **characterised in that** said support assembly (65) is mounted on said riser element (66) by means of pivoting means (67) so as to pivot about a vertical axis (A4).

40. Energy transfer system according to the preceding claim, **characterised in that** said transfer arm (24) comprises a substantially horizontal part (24A), one end of which is formed by the pivoting connector (8) which is able to be connected rapidly to an electrical connector (101) on the ship, and also comprises a substantially vertical part (24C) which is connected to a pivoting connection assembly (7') having a plunger arm (7'C) connected to said submerged connector (55).

41. Energy transfer system according to the preceding claim, **characterised in that** said pivoting connection assembly (7') has a substantially frustoconical male connector (7'A) which forms the upper end of said plunger arm (7'C), and a female connector (7'B) connected to the base of the substantially vertical part (24C) of the transfer arm (24), and **in that** the degree of relative pivoting possible between said male and female connectors is greater than or equal to 90°.

42. Energy transfer system according to any of the three preceding claims, **characterised in that** said support assembly (65) comprises rails (93) substantially parallel to the horizontal part (24A) of the transfer arm (24), and **in that** said transfer arm (24) is suspended from a carriage (92) able to be moved in translation on said rails (93) by means of a motor (90) carried by said support assembly (65).

43. Energy transfer system according to claims 36 and 42 taken in combination, **characterised in that** said riser element (66) supports a control station (95) configured to receive an operator and comprising a remote control device for said motor (90) in order to move said carriage (92).
